# EUROPÄISCHE PATENTSCHRIFT

(11) **EP 0 526 792 B1**
(45) Veröffentlichungstag und Bekanntmachung des Hinweises auf die Patenterteilung: **29.12.1997**
(21) Anmeldenummer: 92112412.9
(22) Anmeldetag: 21.07.1992
(51) Int. Cl.: C09B 62/20

(54) **Fluorpyrimidin-Reaktivfarbstoffe**
Reactive dyes containing a fluoropyrimidine group
Colorants réactifs contenant un groupe fluoropyrimidine

(30) Priorität: 03.08.1991 DE 4125754
(43) Veröffentlichungstag der Anmeldung: 10.02.1993
(73) Patentinhaber: BAYER AG, 51368 Leverkusen (DE)
(72) Erfinder: Reddig, Wolfram, Dr., W-5060 Bergisch Gladbach 1 (DE); Herd, Karl-Josef, Dr., W-5068 Odenthal-Holz (DE)

(56) Entgegenhaltungen:
- DYES AND PIGMENTS, Band 14, Nr. 4, 1990, Seiten 239-263, Barking, Essex, GB; F. LEHR: "Synthesis and application of reactive dyes with heterocyclic reactive systems"

## Beschreibung

Die Erfindung betrifft Reaktivfarbstoffe mit einem Difluorpyrimidinrest.

Derartige Reaktivreste sind zwar bereits aus DE-A-1 644 204 (US-A-3 669 951) und DE-A-2 114 158 (US-A-4 065 446) bekannt, jedoch weisen sie zum Teil noch anwendungstechnische Probleme auf.

Weiterhin sind aus EP-OS 45 278 und EP-OS 65 479, sowie DE-OS 2 817 780 bereits Reaktivfarbstoffe mit anderen Reaktivgruppen und diversen Chromophoren bekannt. Auch diese Farbstoffe sind noch verbesserungswürdig.

Die vorliegende Erfindung betrifft Reaktivfarbstoffe, die als freie Säure der Formel entsprechen 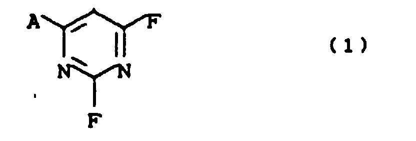 wobei
- A: ein chromophorer Rest einer der folgenden Strukturen ist 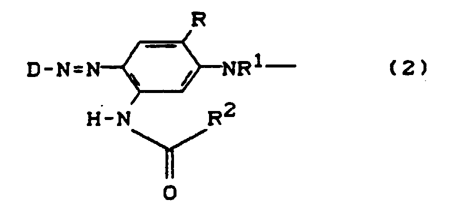 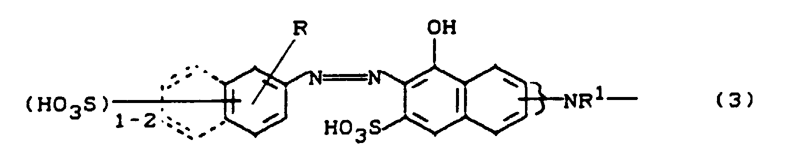 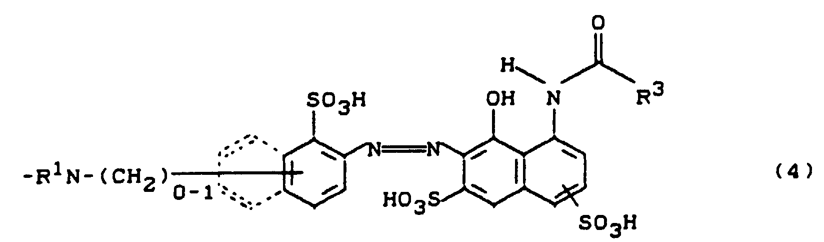 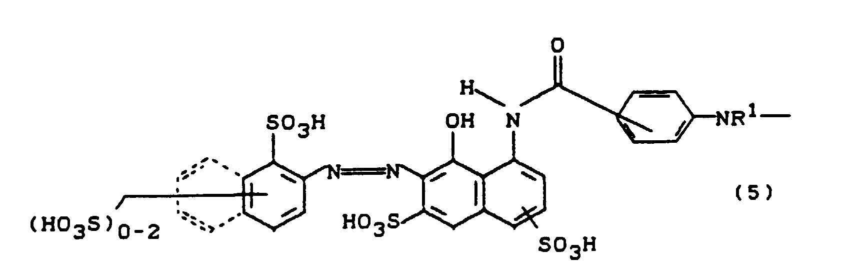 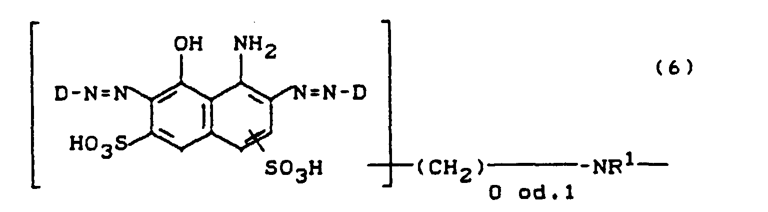 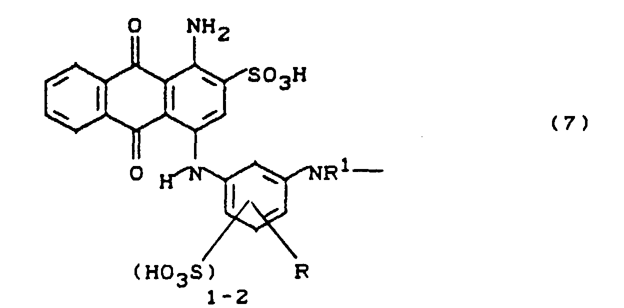 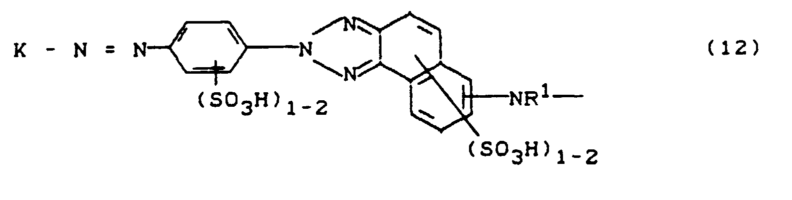 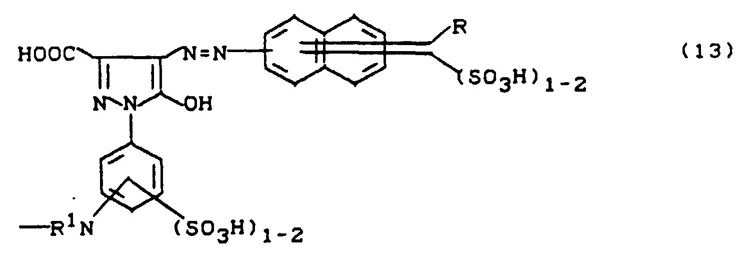
oder 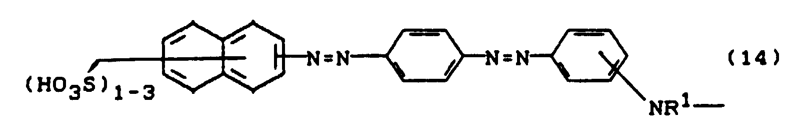 oder Metallkomplexe von Farbstoffen der Formeln (8)-(11) 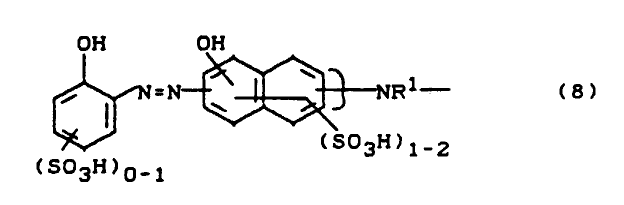 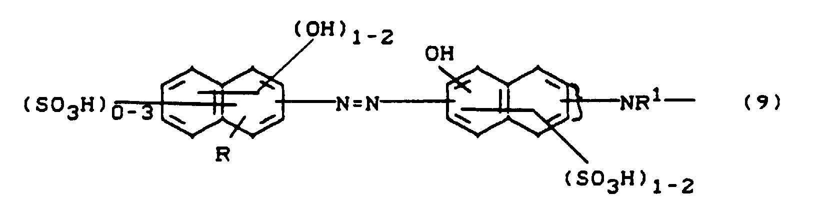 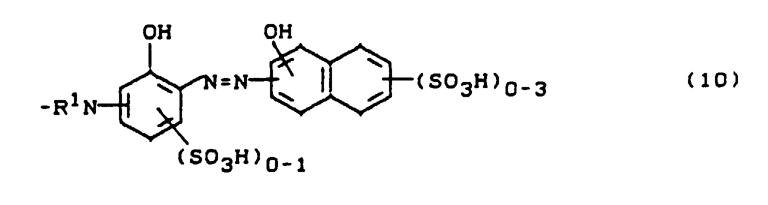 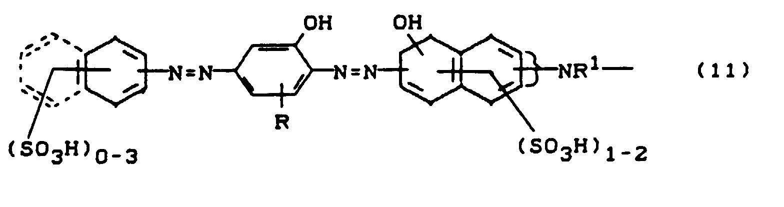 worin
die Bindung zwischen dem chromophoren Rest A und dem 4-Pyrimidinyl-Rest über eine Amino- oder Aminomethylfunktion an ein Ring-C-Atom und A erfolgt,
worin bedeuten
- R =: H, C₁-C₆-Alkylrest, C₁-C₆-Alkoxyrest,
- R¹ =: H, CH₃, C₂H₅,
- R² =: NH₂, gegebenenfalls durch OH, SO₃H, OSO₃H oder CO₂H substituierter C₁-C₄-Alkylrest, gegebenenfalls durch OH, SO₃H, OSO₃H oder CO₂H substituierter C₁-C₄-Alkoxyrest,
- R³ =: gegebenenfalls durch OH, SO₃H, OSO₃H oder CO₂H substituierter C₁-C₄-Alkylrest, gegebenenfalls durch C₁-C₄-Alkyl, Halogen oder SO₃H substituierter Phenylrest,
- D: steht für einen sulfogruppen- oder carboxygruppenhaltigen Rest einer Diazokomponente aus der Benzol-, Naphthalin- oder Hetarylreihe, der zusätzlich mit Alkyl-, Alkoxy-, Carboxy- oder Halogenresten substituiert sein kann, in Formel (6) jedoch weist einer von beiden Resten D einen, möglicherweise substituierten, 2,6-Difluor-4-pyrimidinylamino-, -methylamino- oder -ethylamino-Substituenten auf- D kann in diesem Fall sulfogruppenfrei oder sulfogruppenhaltig sein.
- K: steht für eine Kupplungskomponente, bevorzugt für Pyridone, Pyrazolone, Barbitursäure- und Citracinsäurederivate,
mit Ausnahme der Verbindungen 15 und 16 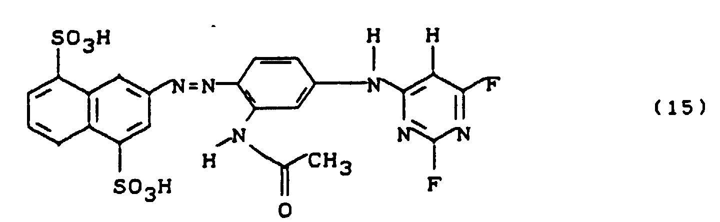 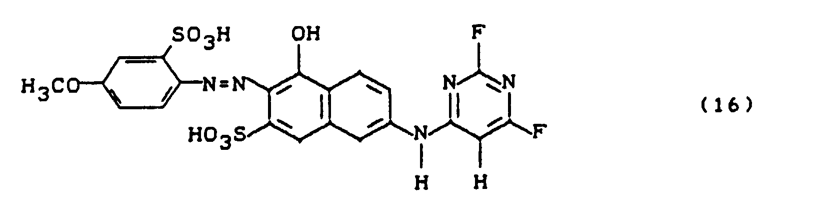 die von F. Lehr in Dyes + Pigments 14 (1990), 239 - 63 beschrieben werden.

In einer bevorzugten Ausführungsform sind bei den Metallkomplexfarbstoffen Cu (1:1-Komplex) oder Cr und Co (1:2-Komplex) bevorzugt. Cr- und Co-Komplexe können die Azoverbindung der oben angegebenen Formel einmal oder zweimal enthalten, d.h., sie können symmetrisch oder mit beliebigen anderen Ligandengruppen unsymmetrisch aufgebaut sein.

In einer weiteren bevorzugten Ausführungsform liegen die Farbstoffe als Salze, insbesondere als Alkali- oder Ammoniumsalze vor.

Die Formeln (2) bis (14) geben die sulfogruppenhaltigen Farbstoffe in Form der freien Säuren wieder. Bei der Herstellung werden im allgemeinen die Salze erhalten, insbesondere die Alkalisalze wie Natrium-, Kalium- oder Lithiumsalze. Die Farbstoffe können aber auch als konzentrierte Lösungen eingesetzt werden.

Bevorzugt sind Farbstoffe der Formel (1) mit A = einem Rest der Formeln (2)-(12), worin
- R =: H, CH₃, OCH₃, OC₂H₅,
- R¹ =: H, CH₃,
- R² =: NH₂, gegebenenfalls durch OH, SO₃H, OSO₃H oder CO₂H substituierter C₁-C₄-Alkylrest,
- R³ =: CH₃, gegebenenfalls durch C₁-C₄-Alkyl, Halogen oder SO₃H substituierter Phenylrest.

Ganz besonders bevorzugt sind
a) Farbstoffe der Formel (1) mit A = Rest der Formel (2), worin
   - R =: H,
   - R¹ =: H, CH₃,
   - R² =: NH₂, gegebenenfalls durch OH, SO₃H, OSO₃H oder CO₂H substituierter C₁-C₄-Alkylrest und 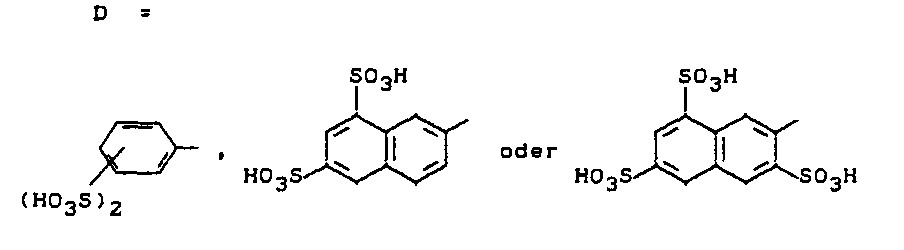
b) Farbstoffe der Formel (1) mit A = Rest der Formel 3, worin
   - R =: H, CH₃, OC₂H₅,
   - R¹ =: H, CH₃.
c) Farbstoffe der Formel (1) mit A = Rest der Formeln (4)-(5), worin
   - R¹ =: H, CH₃,
   - R³ =: CH₃, gegebenenfalls durch C₁-C₄-Alkyl, Halogen oder SO₃H substituierter Phenylrest.
d) Farbstoffe der Formel (1) mit A = Rest der Formel 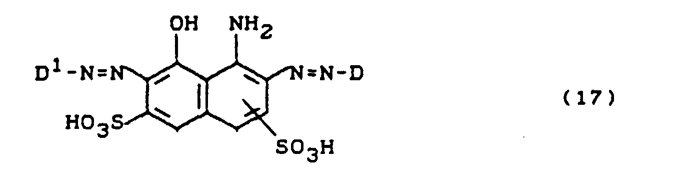 worin 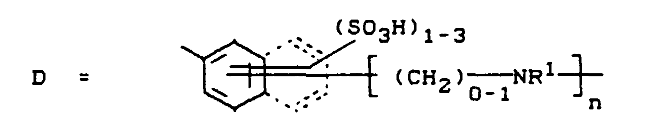 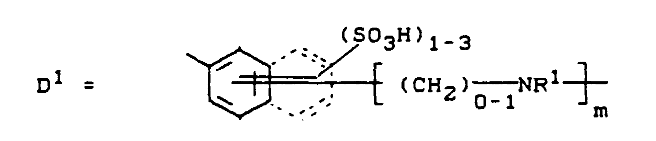
   - R¹ =: H, CH₃,
   - n =: m = 0 oder 1, aber n + m = 1 ist.
e) Farbstoffe der Formel (1) mit A = Rest der Formel 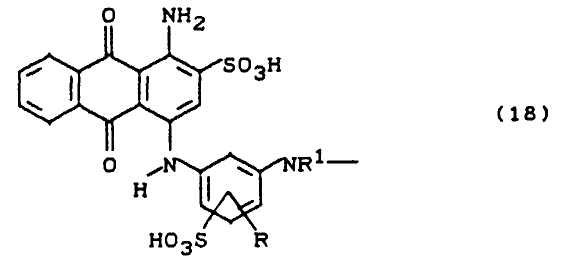 worin
   - R =: H, CH₃, OCH₃,
   - R¹ =: H.
f) Farbstoffe der Formel (1) mit A = Rest der Formeln (8) bis (11), worin
   - R =: H.
g) Farbstoffe der Formel (1) mit A = Rest der Formel (12), worin
   - R =: H und
   - K: die oben genannte Bedeutung hat.

Die Herstellung der Farbstoffe (1) erfolgt beispielsweise nach folgenden Verfahren:
1. Durch Kondensation einer Reaktivkomponente der Formel 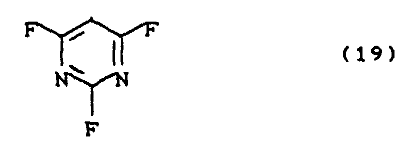 mit den entsprechenden Farbbasen.
2. Durch Azokupplung eines Kondensationsproduktes der Formeln 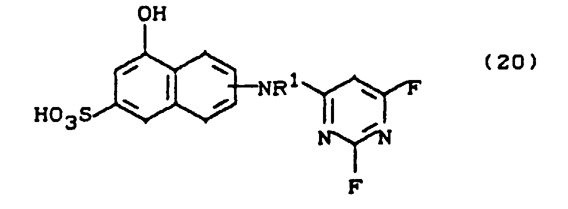 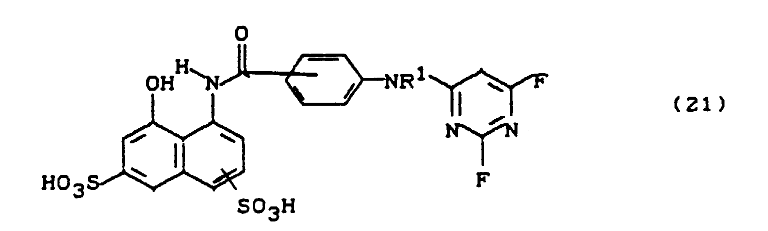 mit Diazoniumverbindungen, die auf üblichem Wege aus den Aminen der allgemeinen Formel 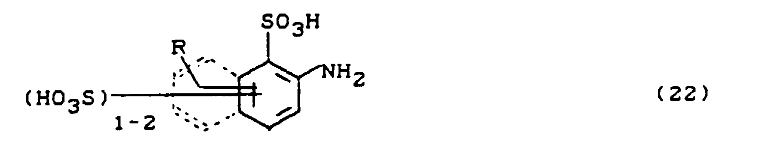 erhalten werden können, wobei R und R¹ die angegebene Bedeutung haben;
3. Durch Diazotieren und Kuppeln eines mit 2,4,6-Trifluorpyrimidin kondensierten Amins der allgemeinen Formel 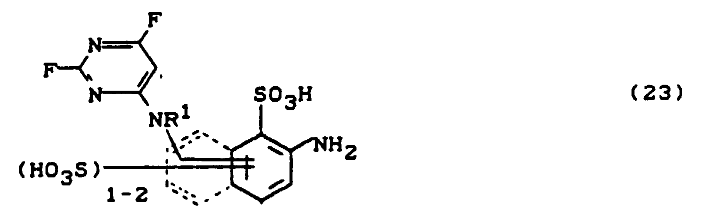 auf eine Kupplungskomponente der Formel 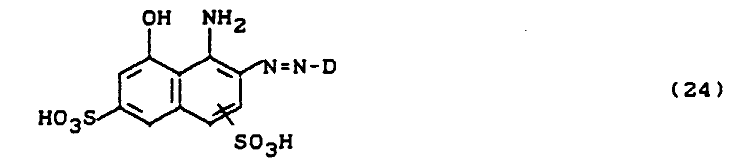 worin D die obengenannte Bedeutung hat.

Die Reaktivkomponente 2,4,6-Trifluorpyrimidin ist aus DE-A-2 114 158 (US-A-40 65 446) bekannt und beispielsweise aus 2,4,6-Trichlorpyrimidin durch Fluoridaustausch mit HF oder Alkalifluoriden in aprotischen Lösungsmitteln zu erhalten.

Die erfindungsgemäßen Farbstoffe eignen sich hervorragend zum Färben und Bedrucken von natürlichen und synthetischen OH- und/oder amidgruppenhaltigen Materialien, insbesondere solchen aus Cellulose und Polyamiden. Sie sind besonders geeignet zum Färben von Cellulosematerialien in Auszieh- und Klotz-Kaltverweilverfahren sowie zum Bedrucken von Cellulosematerialien wie Baumwolle oder Zellwolle.

Die Farbstoffe können in Abmischung mit anderen Farbstoffen für eine Trichromie verwendet werden.

Man erhalt bei gutem Aufbauvermögen und hohen Fixierausbeuten Färbungen mit guten Allgemeinechtheiten, insbesondere Naßechtheiten.

### Beispiel 1

23,6 g 7-Amino-1,3-naphthalindisulfonsäure-mono-Natriumsalz werden in 150 ml Wasser/30 g Eis und 20 ml konzentrierter Salzsäure angerührt und bei 5-10°C tropfenweise mit 17 ml einer wäßrigen Natriumnitritlösung (300 g NaNO₂/l) versetzt. Nach einer Stunde Rühren bei 5-10°C wird die überschüssige salpetrige Säure mit Amidosulfonsäure entfernt.

Diese cremefarbene Suspension dosiert man nun innerhalb von 30 Minuten zu einer neutralen Lösung der Kupplungskomponente, die aus 13,5 g N-(3-Aminophenyl)-acetamidhydrochlorid, 50 ml Wasser, 50 g Eis und ca. 30 ml einer 10 Xigen wäßrigen Lithiumhydroxidlösung bereitet worden ist. Dabei hält man den pH-Wert der Reaktionsmischung mit 20 Xiger wäßriger Kaliumhydrogencarbonatlösung konstant bei 6,0 bis 6,5. Die Temperatur sollte nach Möglichkeit 10°C nicht übersteigen. Nach erfolgter Zugabe rührt man 30 Minuten nach, wobei man den pH-Wert weiterhin konstant hält.

Die Kupplungslösung wird auf 40°C erwärmt und mit 12 g 2,4,6-Trifluorpyrimidin versetzt. Während der Kondensationsreaktion hält man den pH-Wert mit Lithiumhydroxidlösung konstant bei 5,8-6,2. Nach 3 Stunden ist kaum noch eine pH-Änderung zu beobachten und die Kondensation nach DC-Analyse vollständig. Die Farbstofflösung wird geklärt, um unlösliche Bestandteile wie Lithiumfluorid abzutrennen und mit 50 g Natriumchlorid ausgesalzen. Der ausgefallene Farbstoff wird abgesaugt und getrocknet. Man erhält 40 g eines orangeroten Pulvers (λmax = 395,2 nm (H₂O)), dem die Struktur 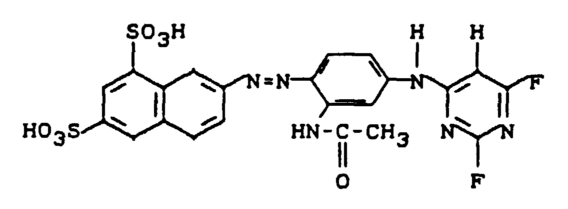 zukommt und das Baumwolle in goldgelben, hochechten Farbtönen färbt.

Durch Variation der Diazokomponente D-NH₂ und der Kupplungskomponente mit R, R¹ und R² werden in Analogie zu Beispiel 1 weitere wertvolle goldgelbe Reaktivfarbstoffe der Formel 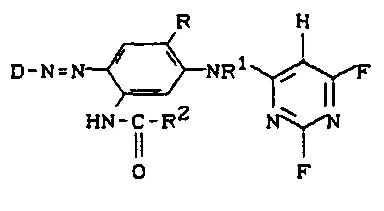 zugänglich, die in nachfolgender Tabelle aufgeführt sind.

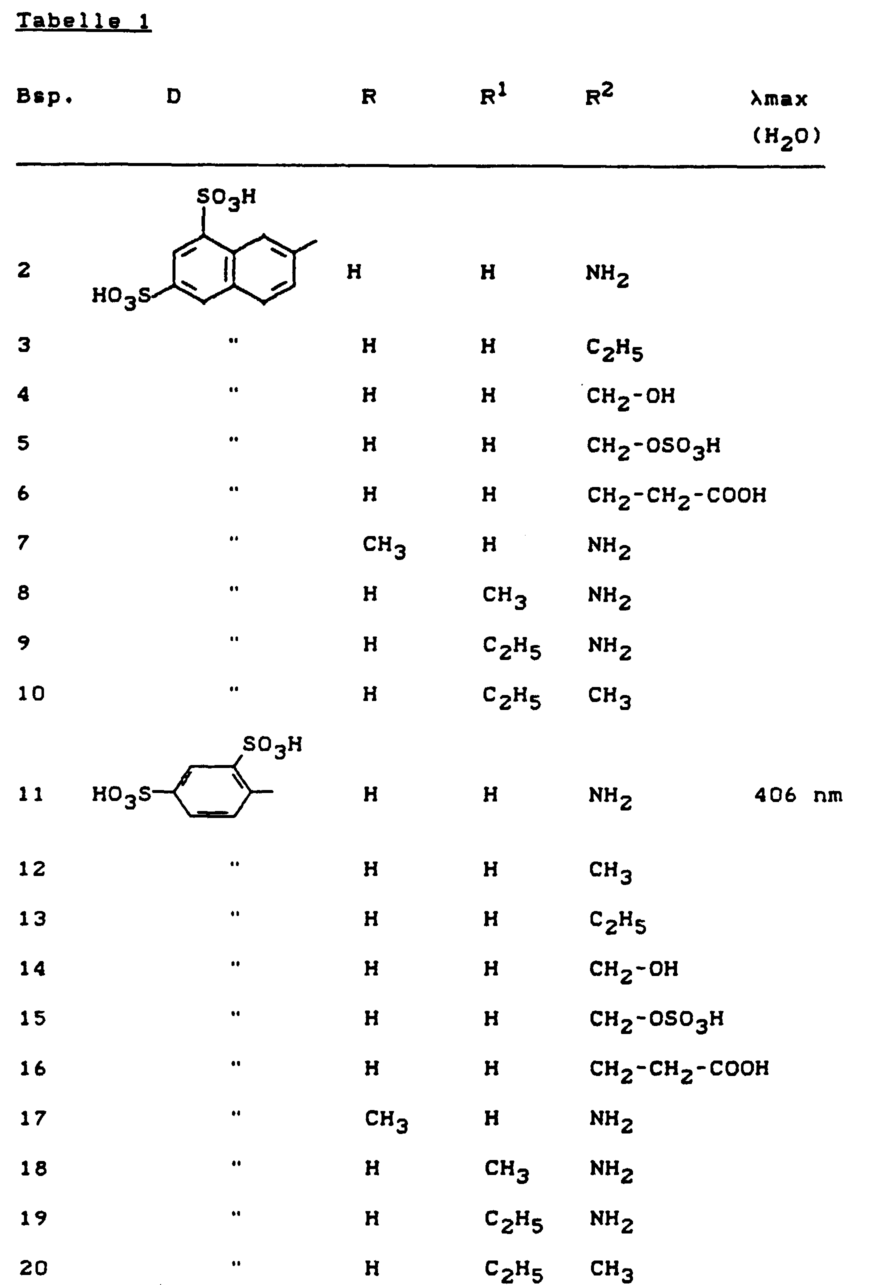

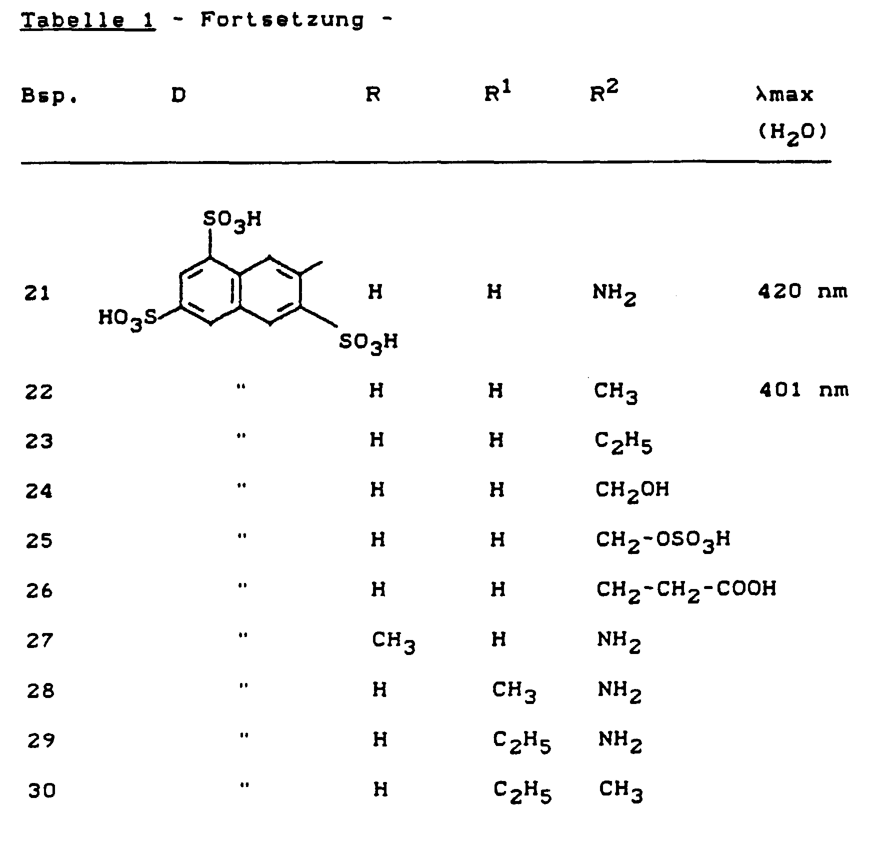

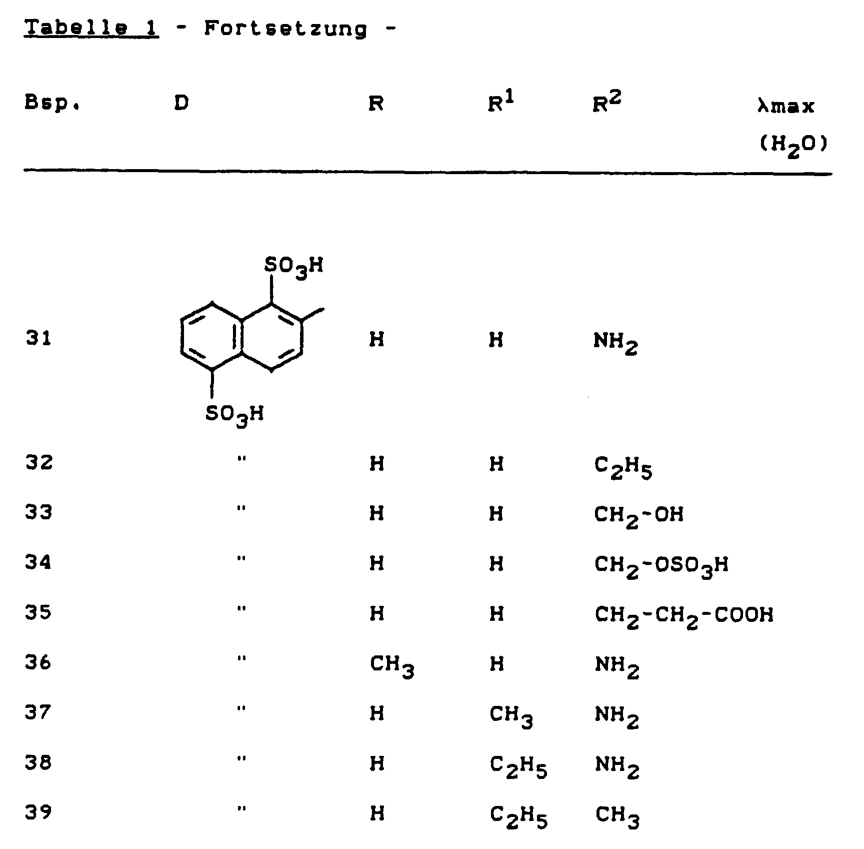

### Beispiel 40

10,4 g 7-Amino-4-hydroxy-2-naphthalinsulfonsäure werden in 150 ml Wasser bei pH 7 mit Lithiumhydroxid gelöst. Man gibt 7,6 g 2,4,6-Trifluorpyrimidin zu, heizt die Reaktionsmischung auf 40°C auf und hält gleichzeitig den pH mit Lithiumcarbonatlösung bei 6,5. Nach 3 Stunden Rühren wird auf 10°C abgekühlt und unter Halten des pH mit Lithiumcarbonatlösung bei 6,5 eine Suspension von 14,1 g diazotierter 1,5-Naphthalinsulfonsäure zugegeben. Nach 1 Stunde ist die Azokupplung beendet und der Farbstoff wird ausgesalzen, isoliert und getrocknet, er hat die Formel 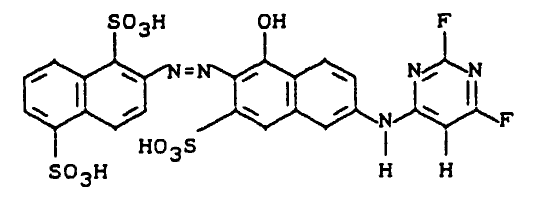 (λmax = 485 nm (H₂O)) und färbt Baumwolle in brillanten orangen Farbtönen mit sehr guten Naßechtheiten.

Ein weiterer Weg, den Farbstoff aus Beispiel 40 herzustellen besteht darin, den Azofarbstoff der Formel 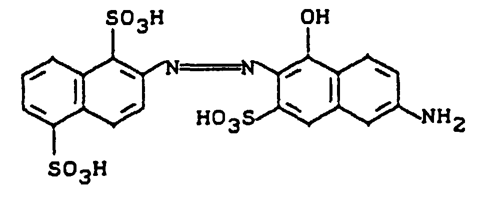 mit 2,4,6-Trifluorpyrimidin bei pH 6,5 - 7,5 zu kondensieren.

Durch Variation der Diazokomponente D-NH₂ und der Kupplungskomponente K¹H₂ können die in folgender Tabelle aufgeführten Farbstoffe der allgemeinen Formel 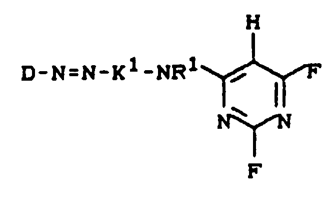 analog Beispiel 40 hergestellt werden, sie färben Baumwolle in den angegebenen Tönen.

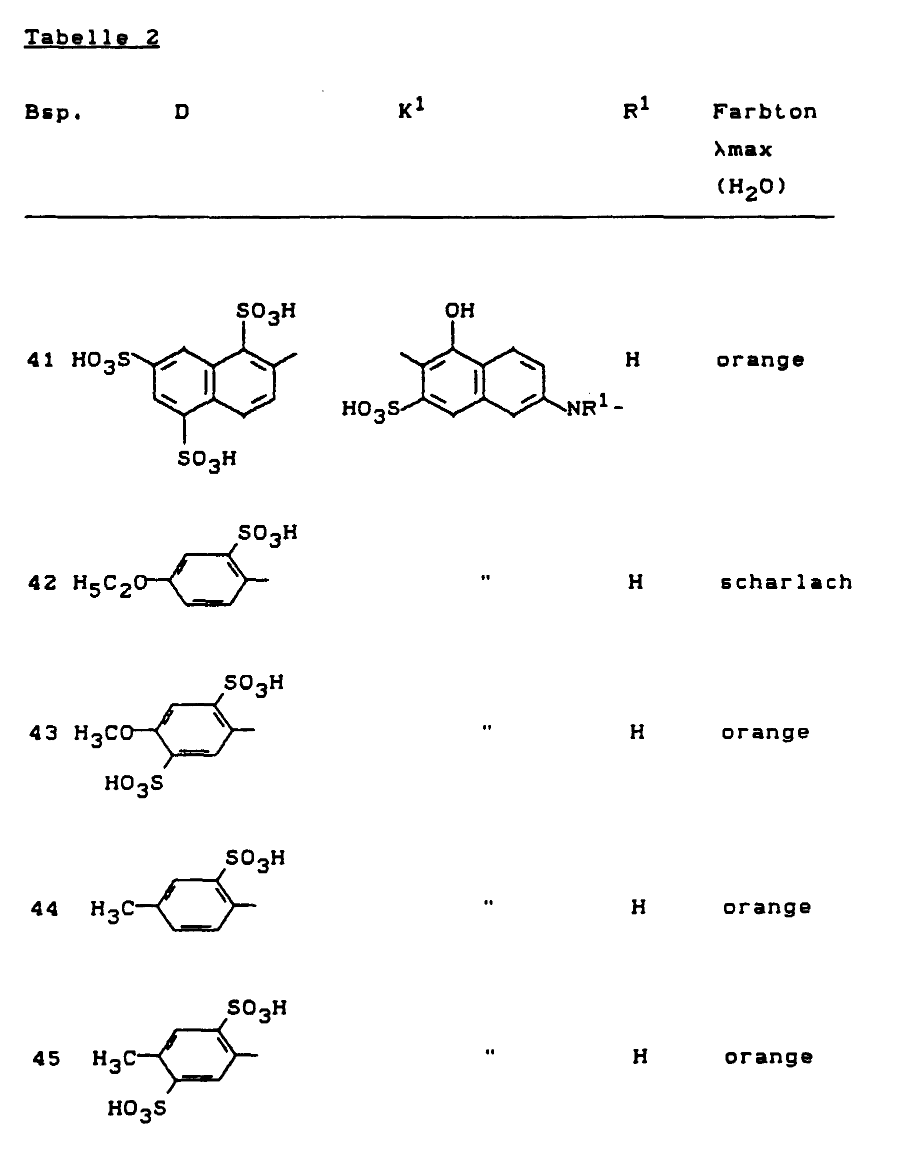

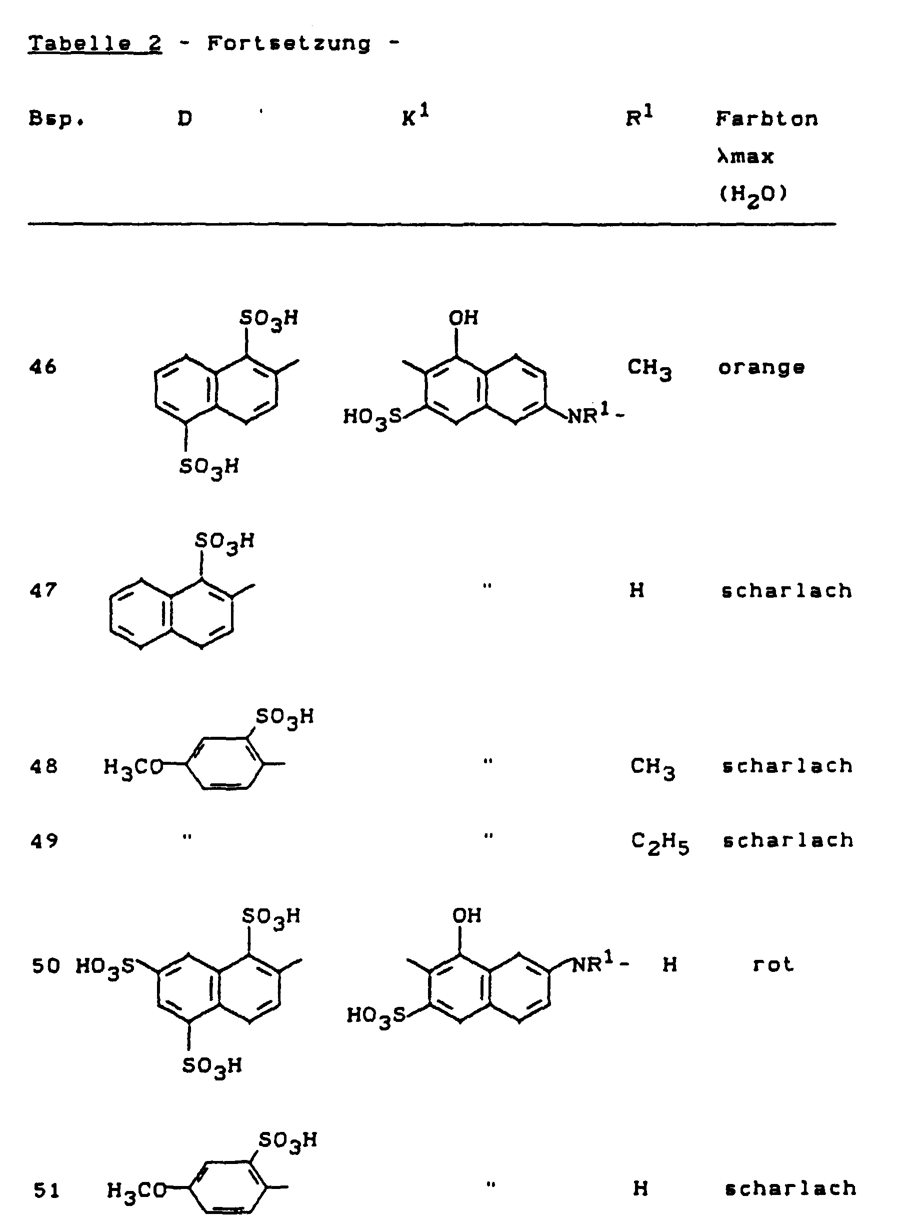

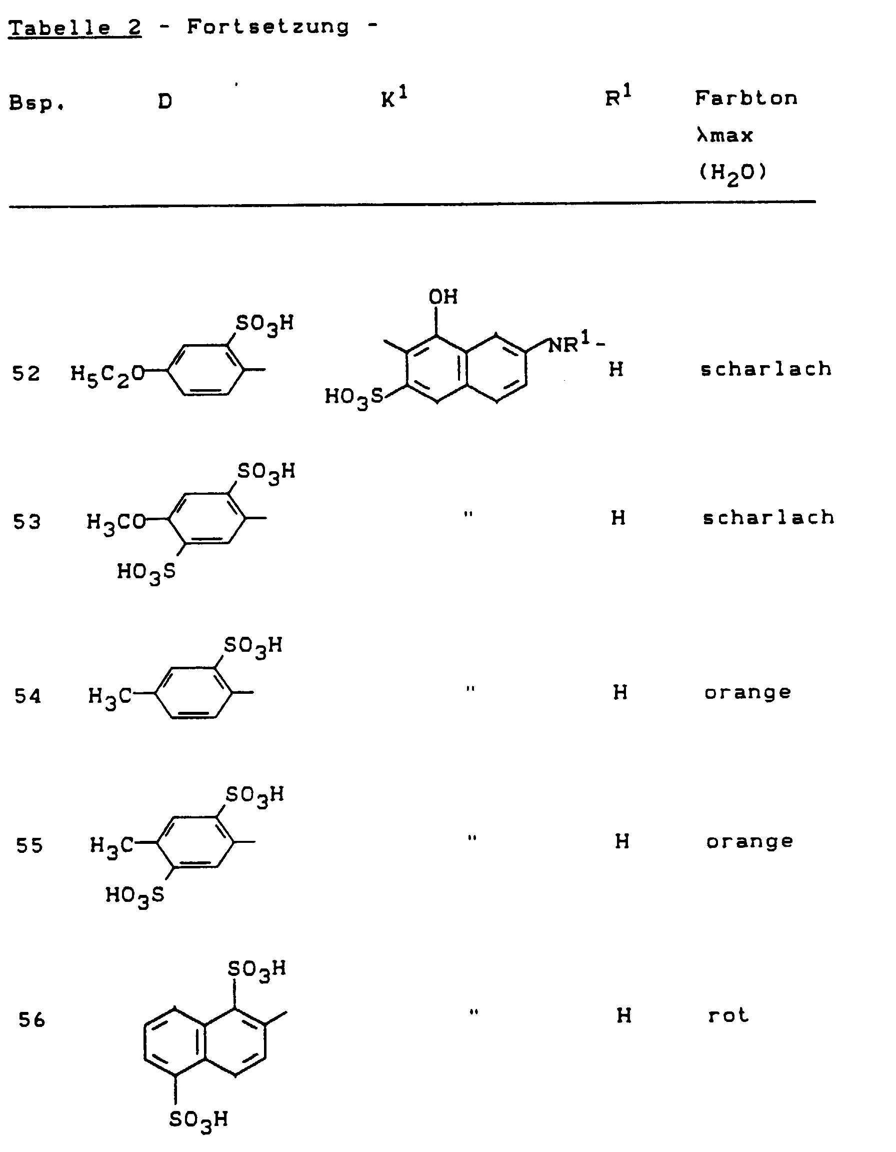

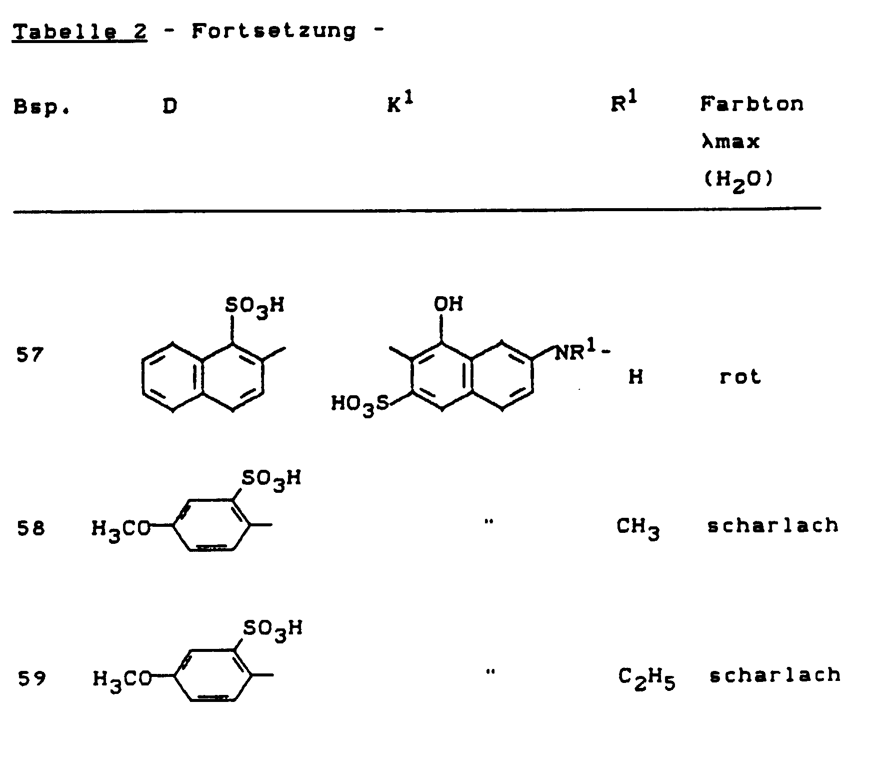

### Beispiel 60

29,6 g 1,3-Diaminobenzol-6-sulfonsäure werden in 250 ml Wasser bei pH 6,5 gelöst. Nach Zugabe von 0,75 g Natriumdihydrogenphosphat x 2 H₂O und 0,75 g Dinatriumhydrogenphosphat x 12 H₂O läßt man 15 ml 2,4,6-Trifluorpyrimidin zutropfen. Man rührt 6 Stunden bei 50°C und hält dabei den pH mit Sodalösung bei 6,5. Nach Klärung mit Aktivkohle wird das Farbstoffzwischenprodukt bei 0°C mit 7 ml konzentrierter Salzsäure und 9 ml 30 Xiger Natriumnitritlösung diazotiert und zu einer vorgelegten Lösung von 31,2 g 1-Benzoylamino-8-hydroxy-naphthalin-3,6-disulfonsäure zugegeben, wobei der pH mit Sodalösung bei 7 gehalten wird. Nach 1 Stunde ist die Kupplung zum Farbstoff beendet, der ausgesalzen, abgesaugt, gewaschen und im Vakuum bei ca. 50°C getrocknet wird. Er hat folgende Struktur 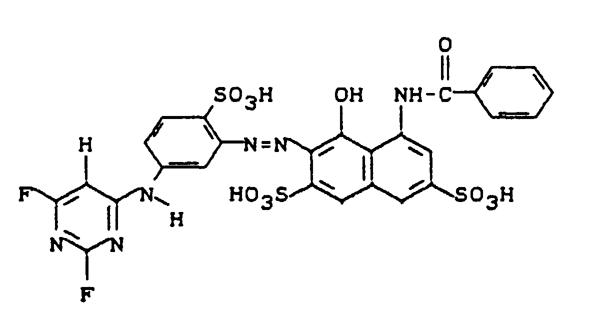 und färbt Cellulosematerialien in einem klaren blaustichig roten Farbton an.

Ein alternatives Herstellungsverfahren besteht darin, eine Farbbase der Struktur 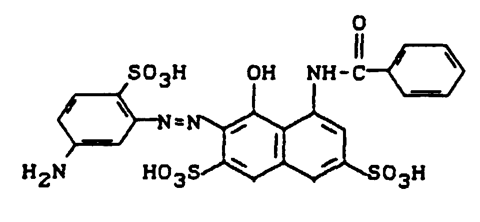 mit 2,4,6-Trifluorpyrimidin bei pH 6-7 und 50°C zu kondensieren.

Durch Variation der Diazokomponente HD²NH₂ und der Kupplungskomponente KH können die in folgender Tabelle aufgeführten Farbstoffe der allgemeinen Formel 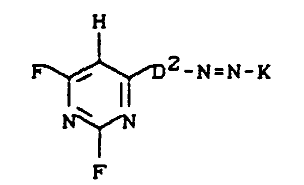 analog Beispiel 60 hergestellt werden, sie färben Baumwolle in roten bis blaustichig roten Tönen.

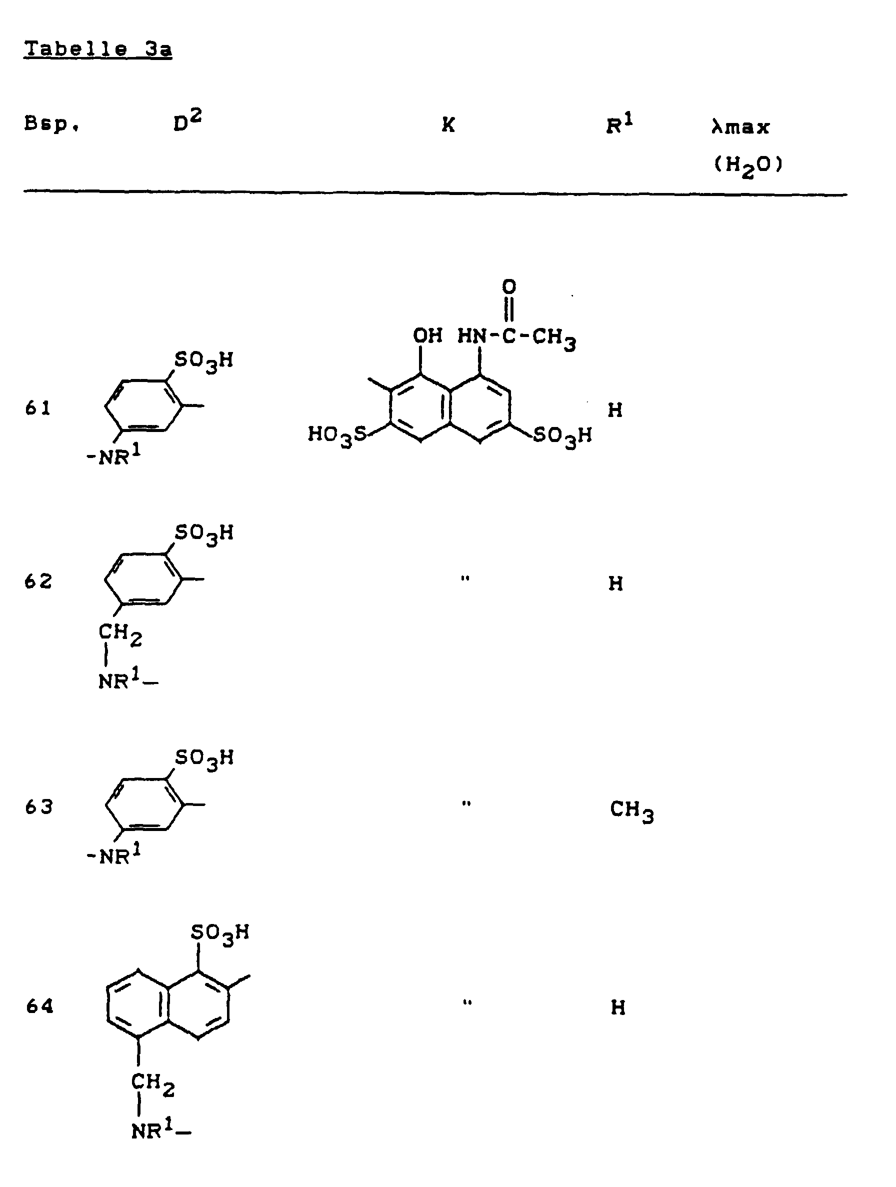

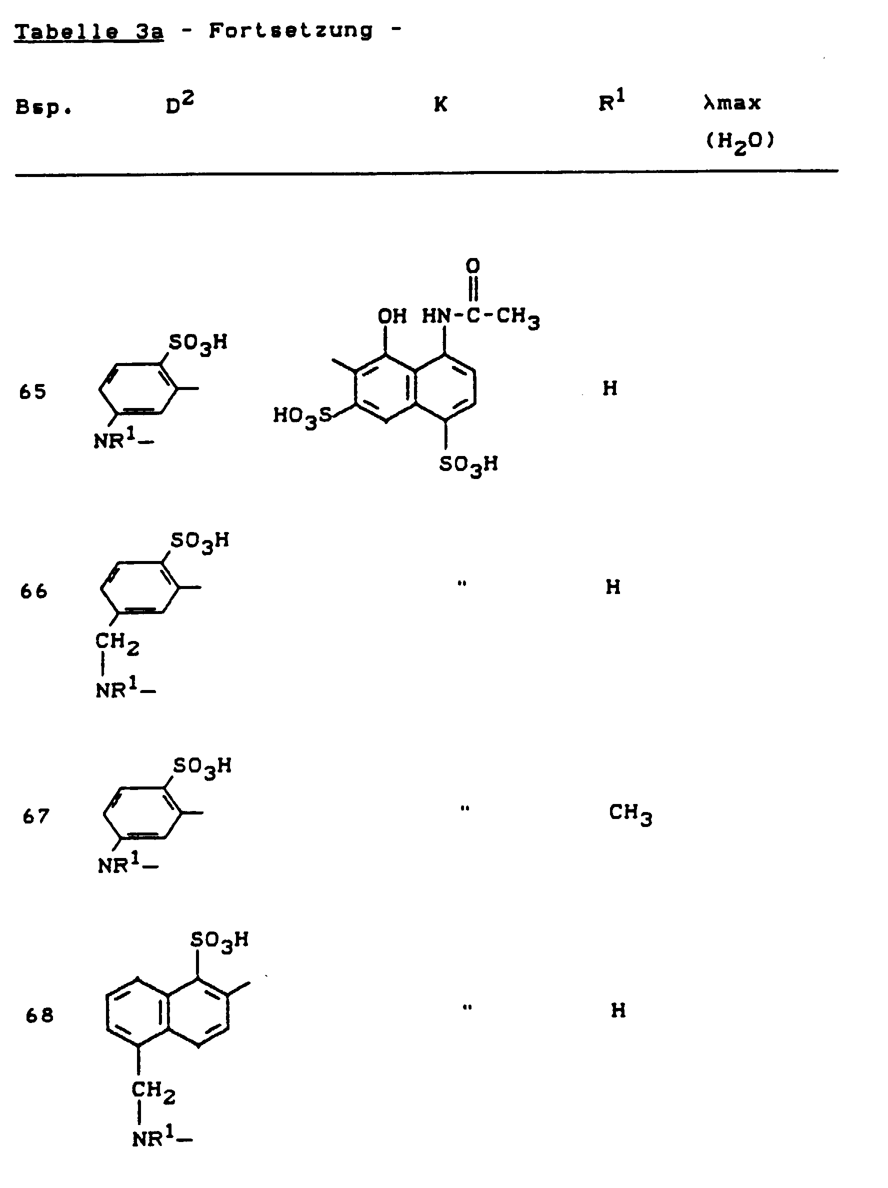

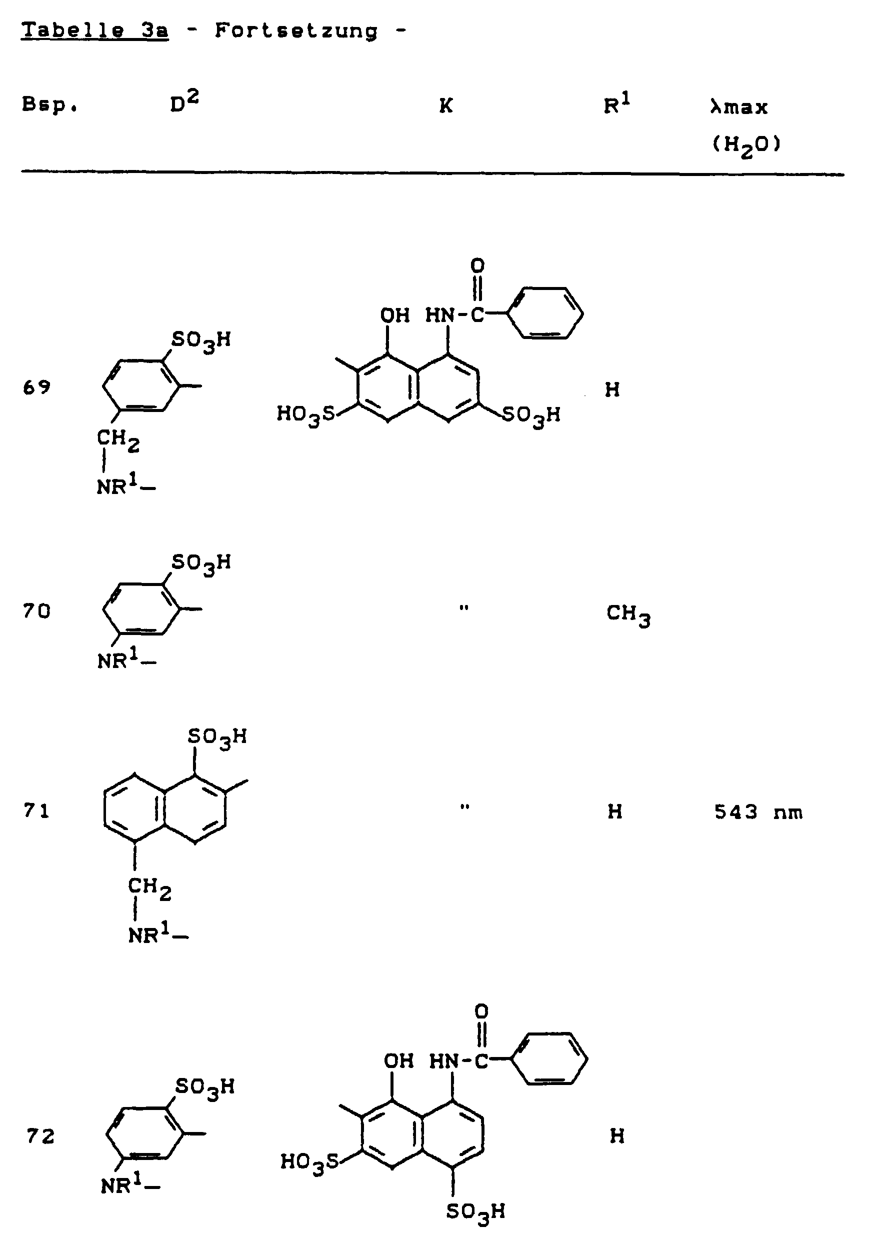

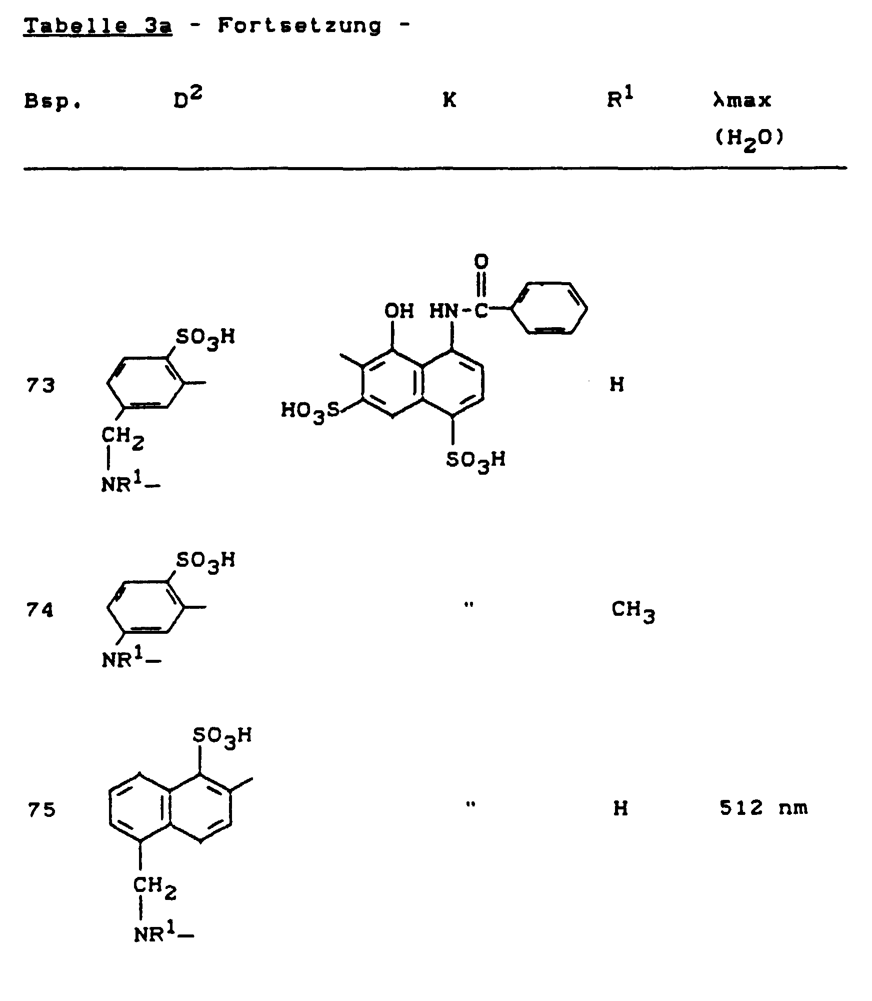

Durch Variation der Diazokomponente D-NH₂ und der Kupplungskomponente K¹H₂ können die in folgender Tabelle aufgeführten Farbstoffe der allgemeinen Formel 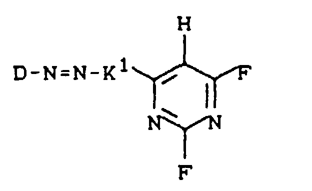 analog Beispiel 60 hergestellt werden. Sie färben Baumwolle in roten bis blaustichig roten Tönen.

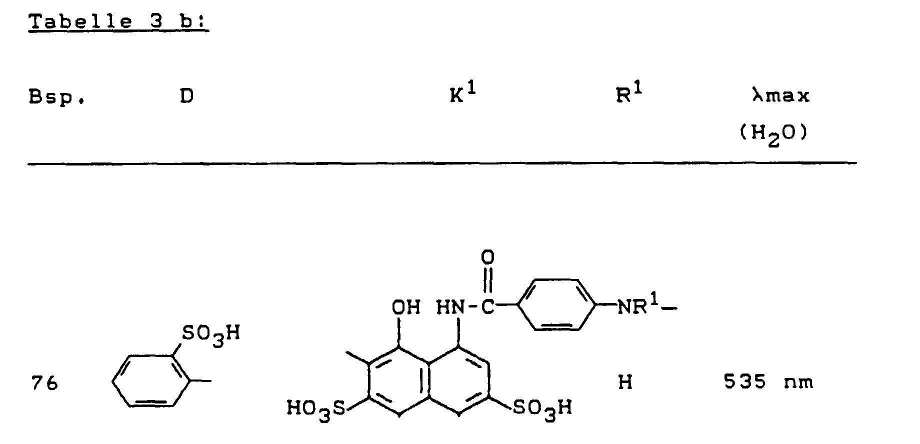

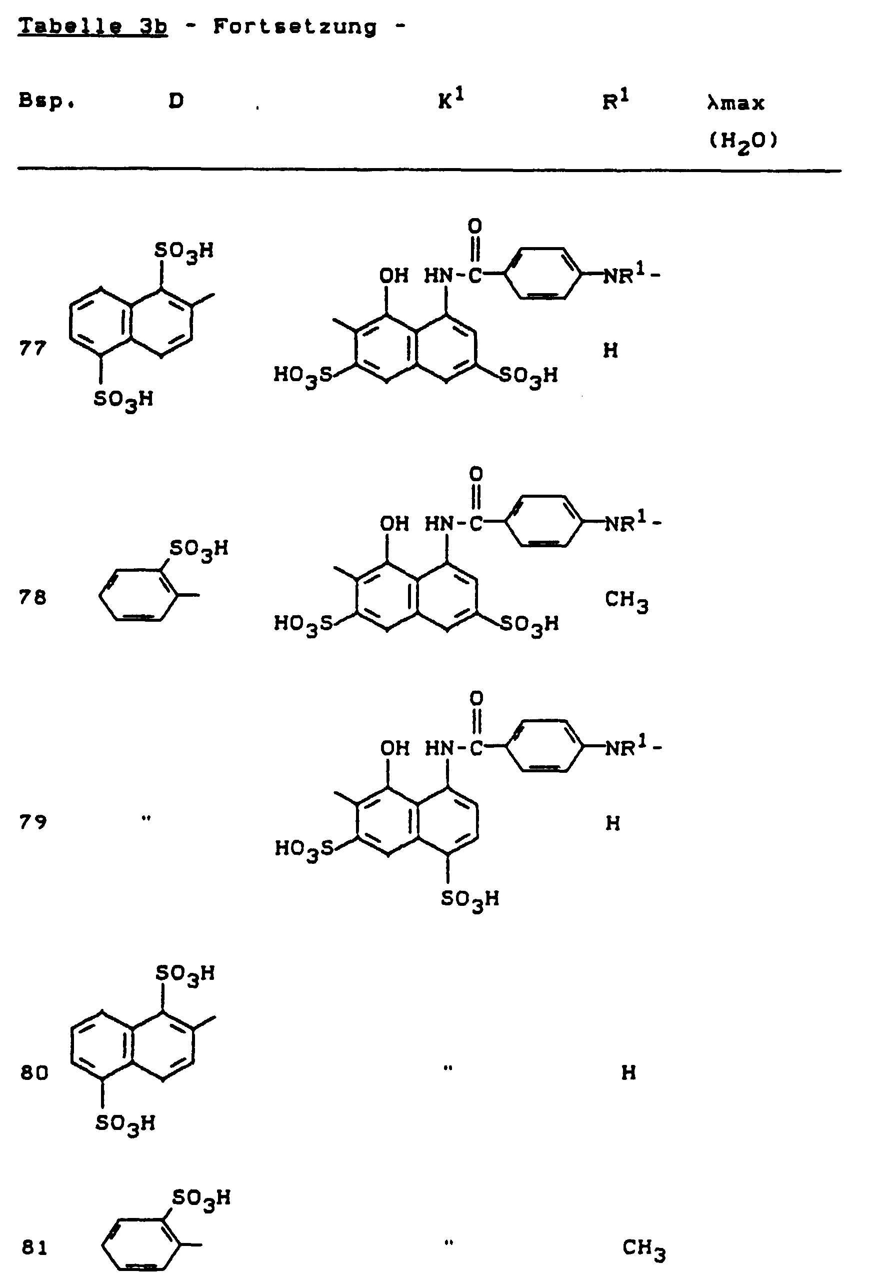

### Beispiel 82

49,2 g der Diazotierung aus Beispiel 60 werden über einen Zeitraum von 15 bis 20 Minuten zu einer Lösung von 82,5 g der Monoazoverbindung der Formel 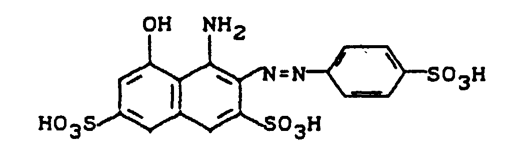 in 500 ml Wasser bei pH 7 zudosiert, und dabei der pH-Wert durch Zugabe einer 20 Xigen Sodalösung zwischen 6 und 8 gehalten. Zur Vervollständigung der Kupplungsreaktion wird 1 Stunde bei pH 7-8 nachgerührt und anschließend durch Zugabe von 70 g Kochsalz der Farbstoff ausgesalzen. Nach Isolierung und Trocknung erhielt man ca. 150 g eines salzhaltigen schwarzen Farbstoffpulvers, dem die Struktur 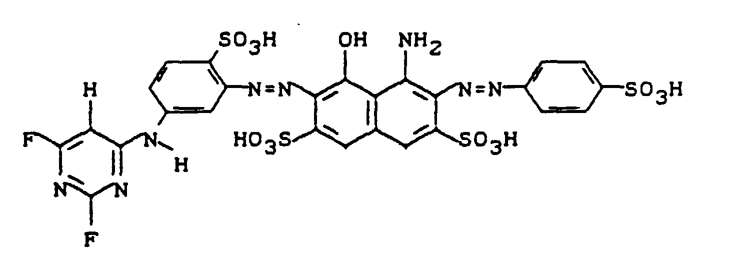 zukommt und das Baumwolle nach den für Reaktivfarbstoffe üblichen Färbe- oder Druckverfahren in marineblauen bis schwarzen Farbtönen färbt.

Dieser Reaktivfarbstoff ist auch darstellbar, indem man eine Lösung von 133,4 g der Diazofarbbase der Formel 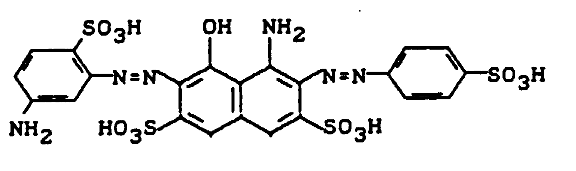 in 750 ml Wasser bei 50°C und einem konstanten pH-Wert von 6-7 (Zugabe von Sodalösung) mit 24 g 2,4,6-Trifluorpyrimidin kondensiert und den Farbstoff wie oben beschrieben bei 20-25°C isoliert.

Weitere wertvolle Reaktivfarbstoffe erhält man, wenn man in Analogie zu Beispiel 82 die Diazokomponenten wie folgt variiert:

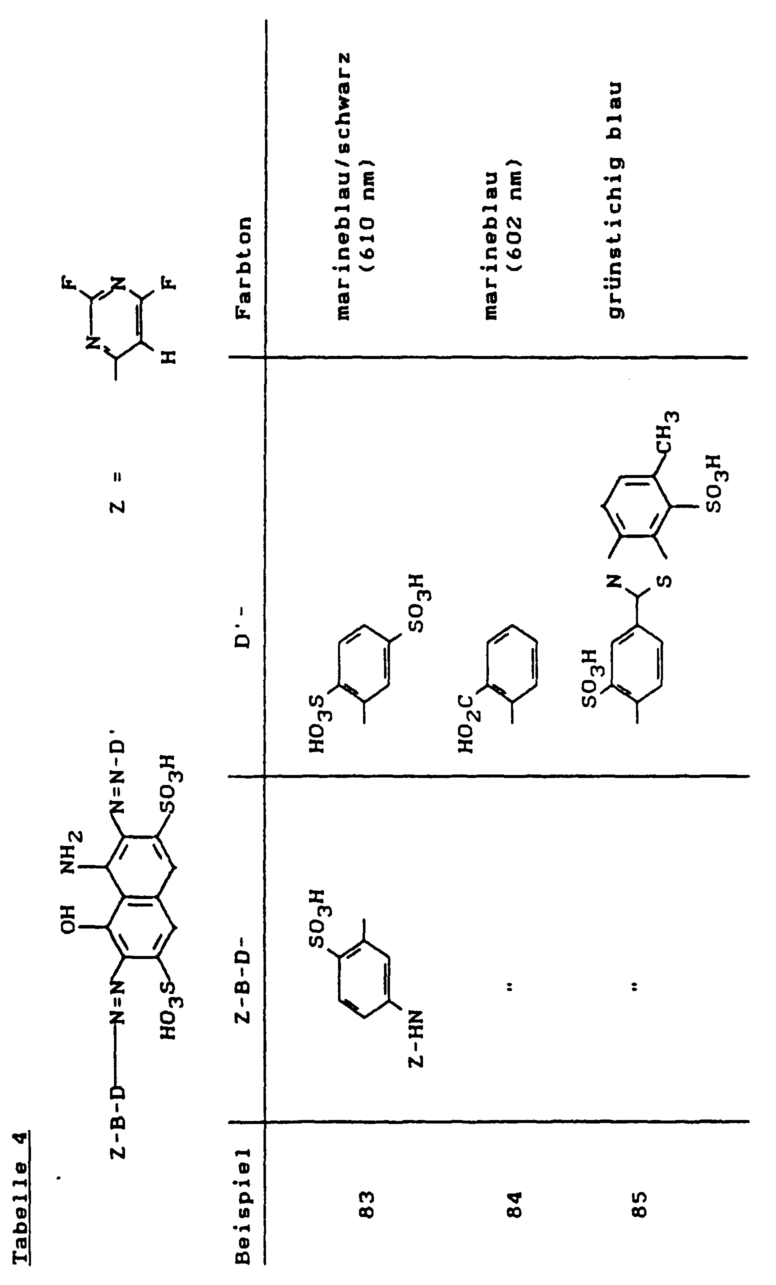

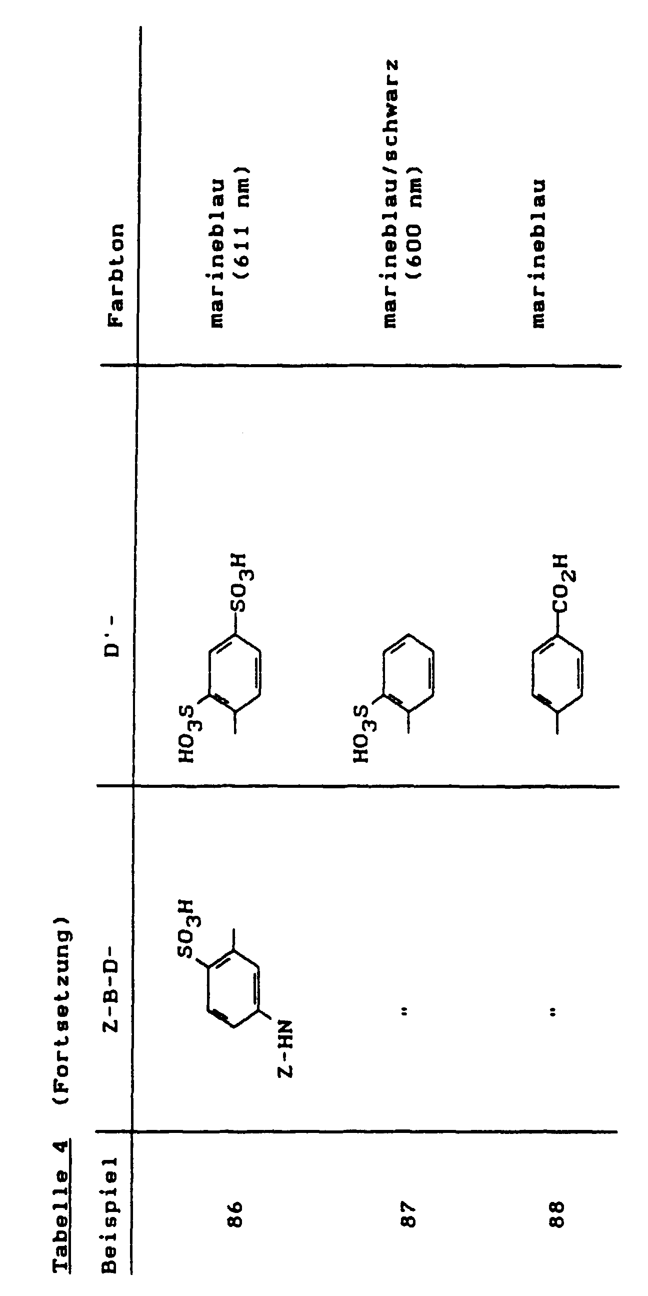

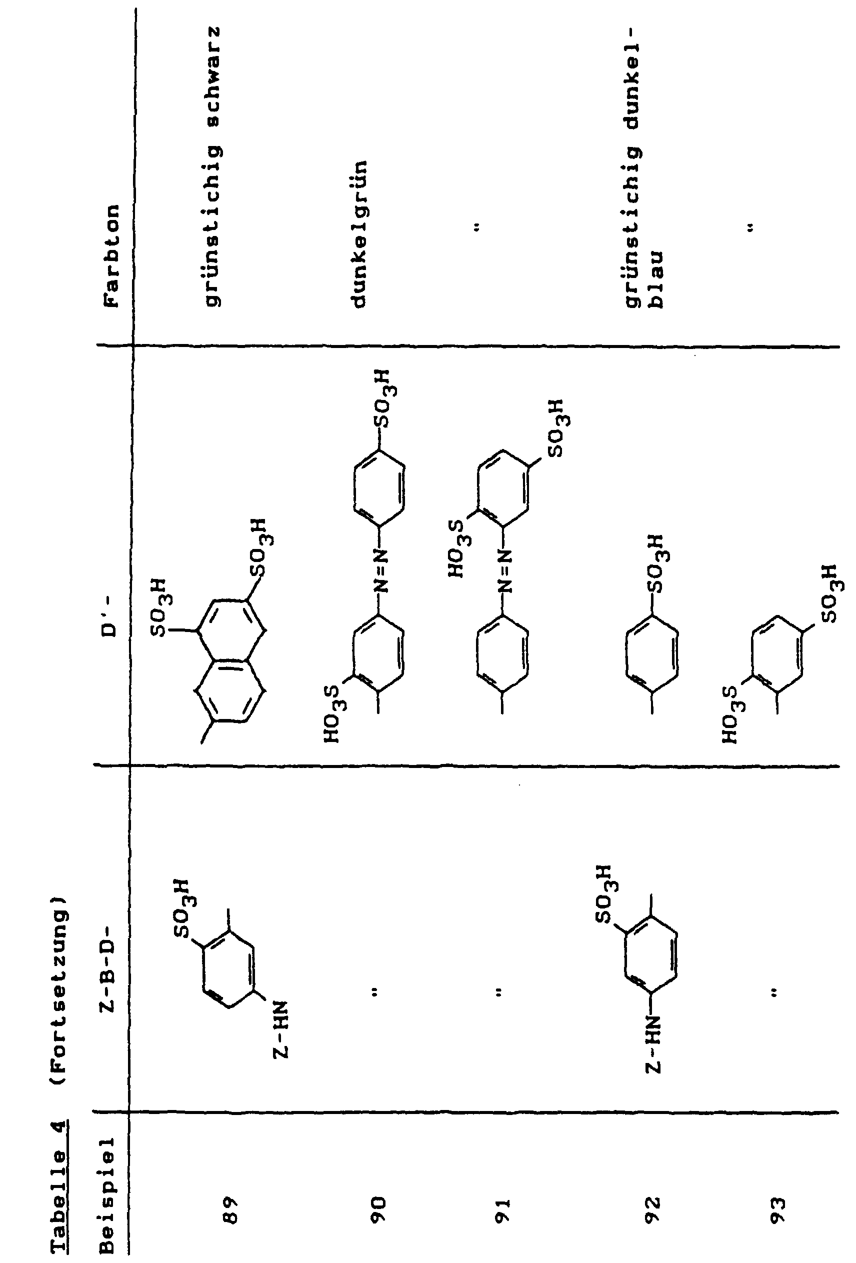

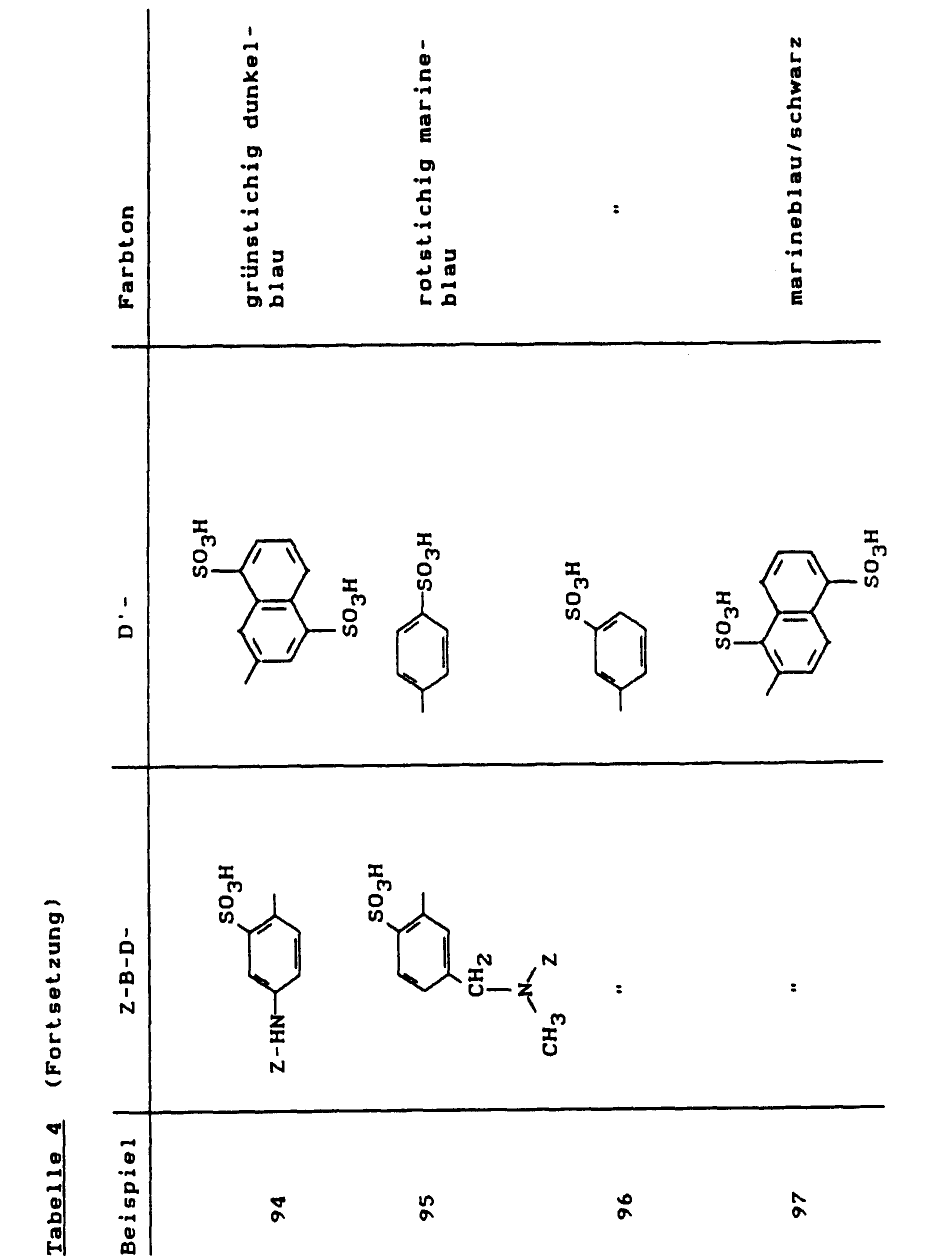

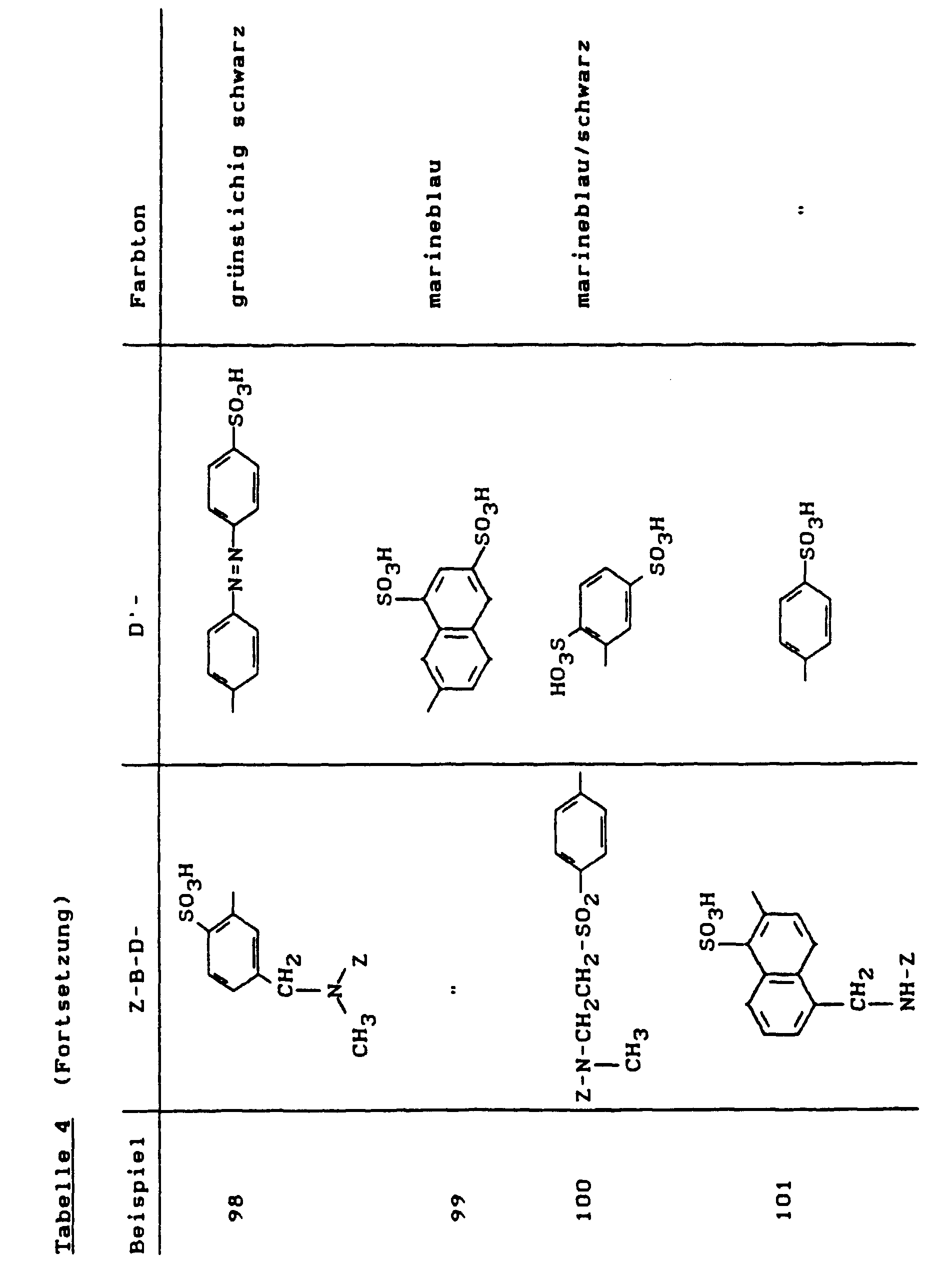

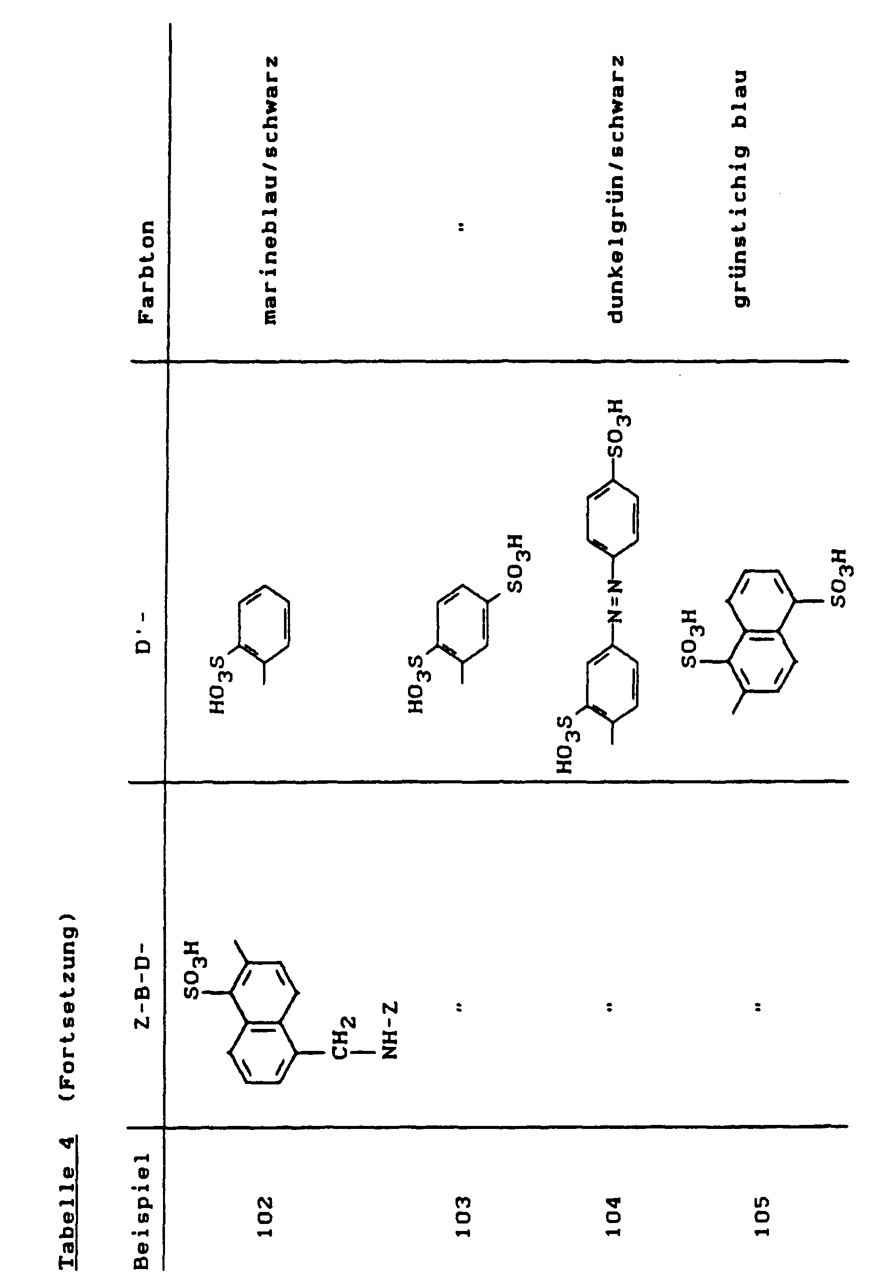

### Beispiele 107 bis 130

Farbstoffe dieser Beispiele erhält man, wenn man in Beispiel 82 bis 105 anstelle der Kupplungskomponente 1-Amino-8-hydroxy-3,6-naphthalindisulfonsäure nun 1-Amino-8-hydroxy-4,6-naphthalindisulfonsäure einsetzt. Exemplarisch ist Beispiel 107 als Formel wiedergegeben:

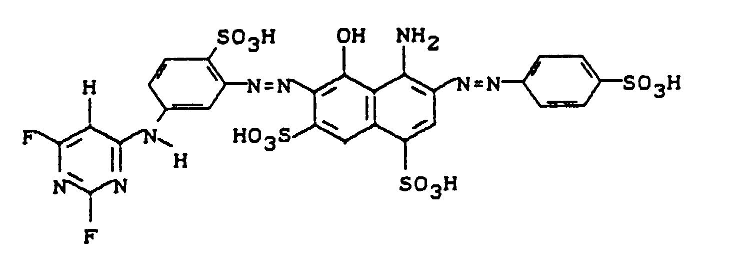

### Beispiel 131

In die Diazoniumsalzsuspension von 49,2 g der Diazotierung aus Beispiel 60 wird innerhalb von 15 Minuten eine Lösung von 52,6 g 1-Amino-8-hydroxy-3,6-naphthalindisulfonsäure-di-Natriumsalz in 250 ml Wasser zudosiert. Es wird eine Stunde bei einem pH-Wert von 1,5-2,5 und einer Temperatur von 5-10°C gerührt. Danach wird durch langsame Zugabe einer 20 Xigen Natriumacetatlösung der pH-Wert auf 3,5 erhöht und nochmals 3 Stunden bei diesem pH-Wert und 10 bis 20°C gerührt. Nach erfolgter Kupplung wird mit 20 Xiger Sodalösung auf pH 7,5 gestellt.

Zu dieser roten Kupplungslösung gibt man während eines Zeitraumes von 30 Minuten die Mischung eines Diazoniumsalzes, die durch Diazotieren von 47,1 g 2-Amino-1,5-naphthalindisulfonsäure-mono-Natriumsalz erhalten worden ist und hält dabei durch Zugabe von 20 %iger Sodalösung den pH-Wert im Bereich von 6,5 bis 8,0. Es wird 2 Stunden bei pH 7-8 nachgerührt und mit ausreichend Kaliumchlorid ausgesalzen. Der ausgefallene Farbstoff wird durch Abnutschen isoliert und getrocknet. Das schwarze Farbstoffpulver, dem die Struktur 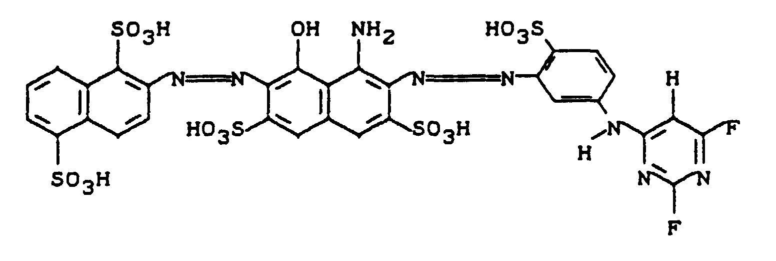 zukommt, färbt Baumwolle in marineblauen bis schwarzen Farbtönen.

Der Reaktivfarbstoff ist auch durch Kondensation von 2,4,6-Trifluorpyrimidin mit der Disazofarbbase der Formel 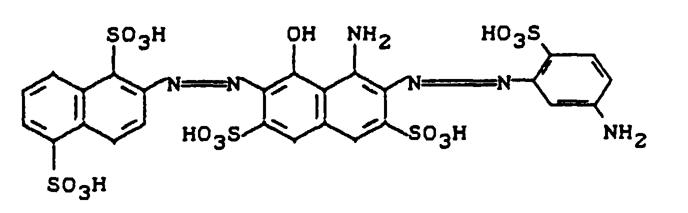 herstellbar.

Durch Variation der faserreaktiven wie auch der nichtfaserreaktiven Diazokomponente lassen sich weitere interessante Reaktivfarbstoffe in Analogie zu Beispiel 131 synthetisieren:

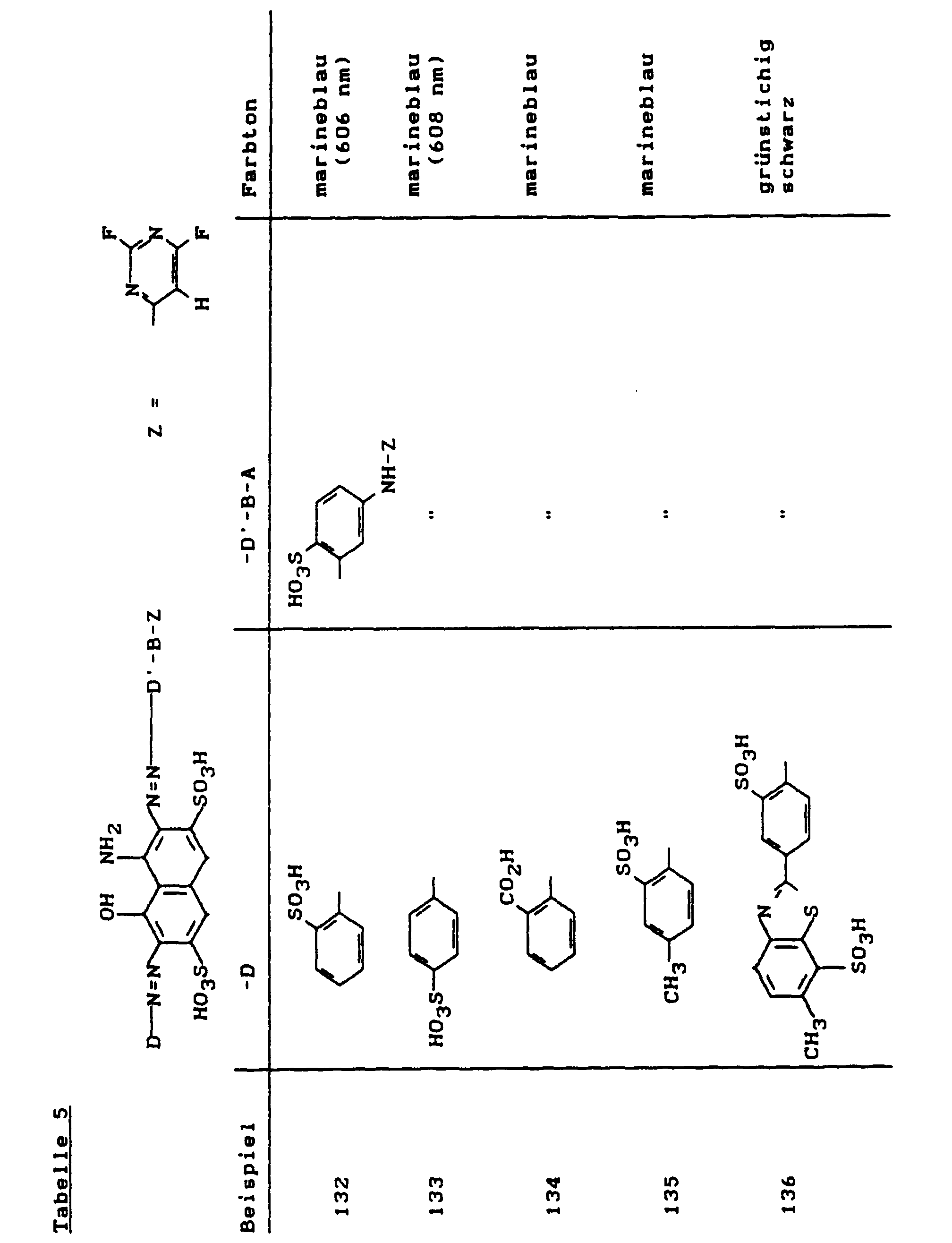

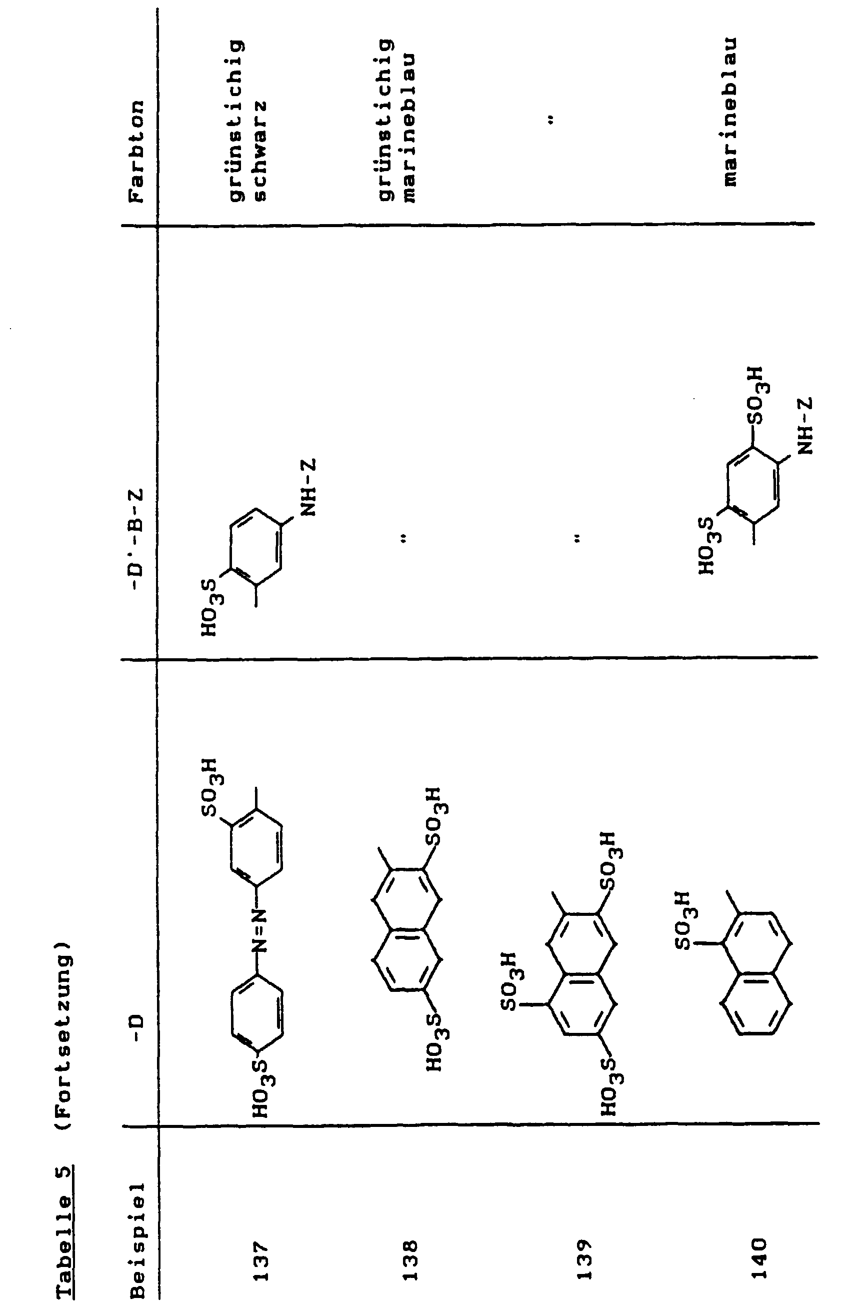

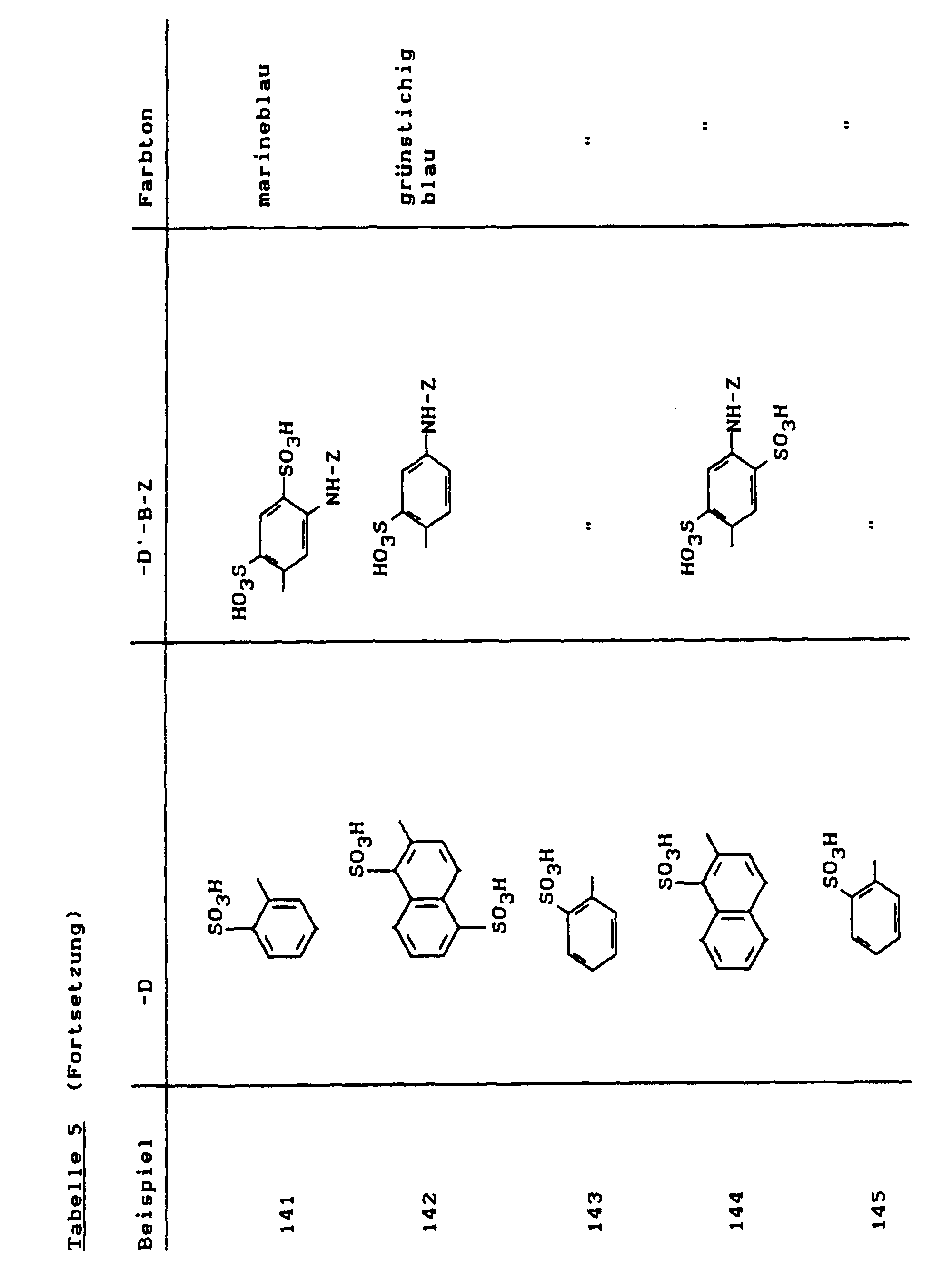

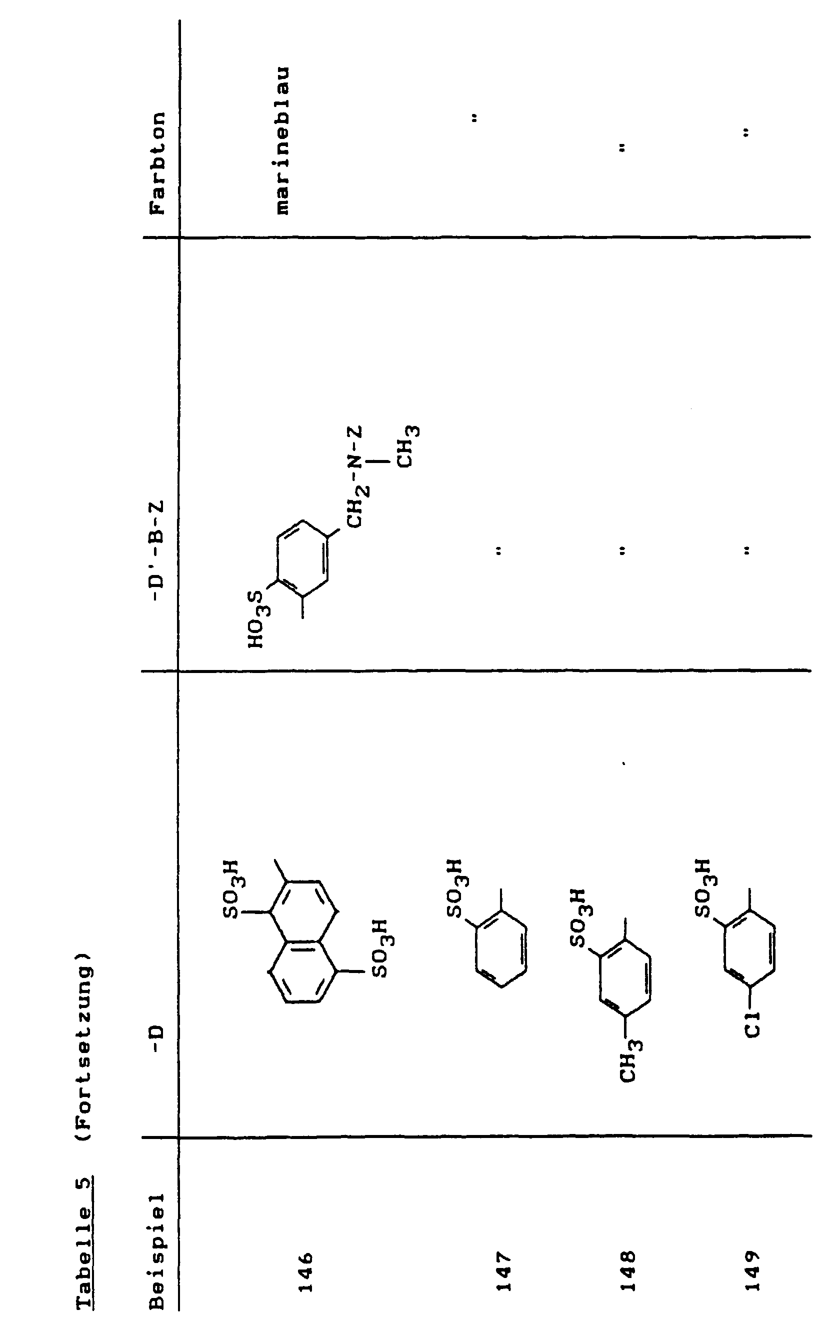

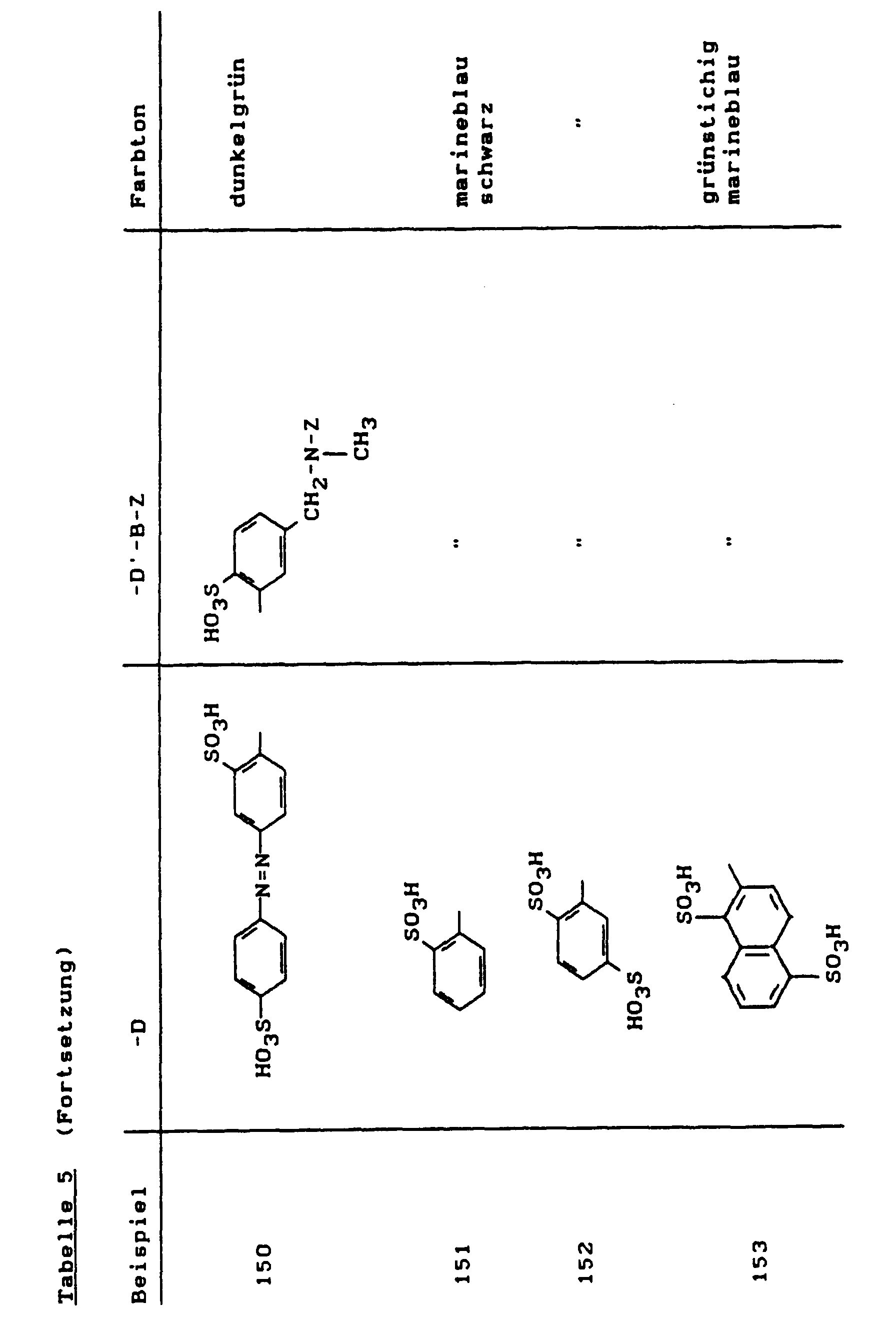

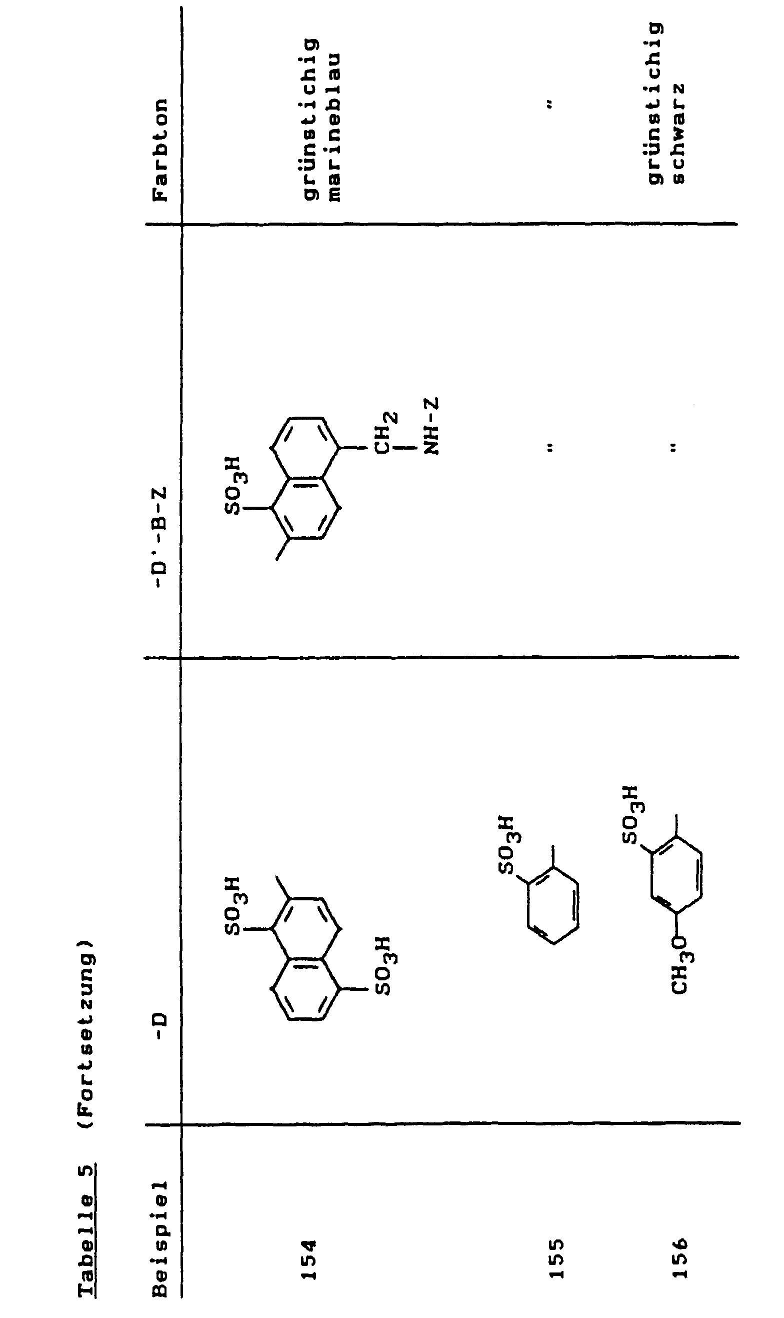

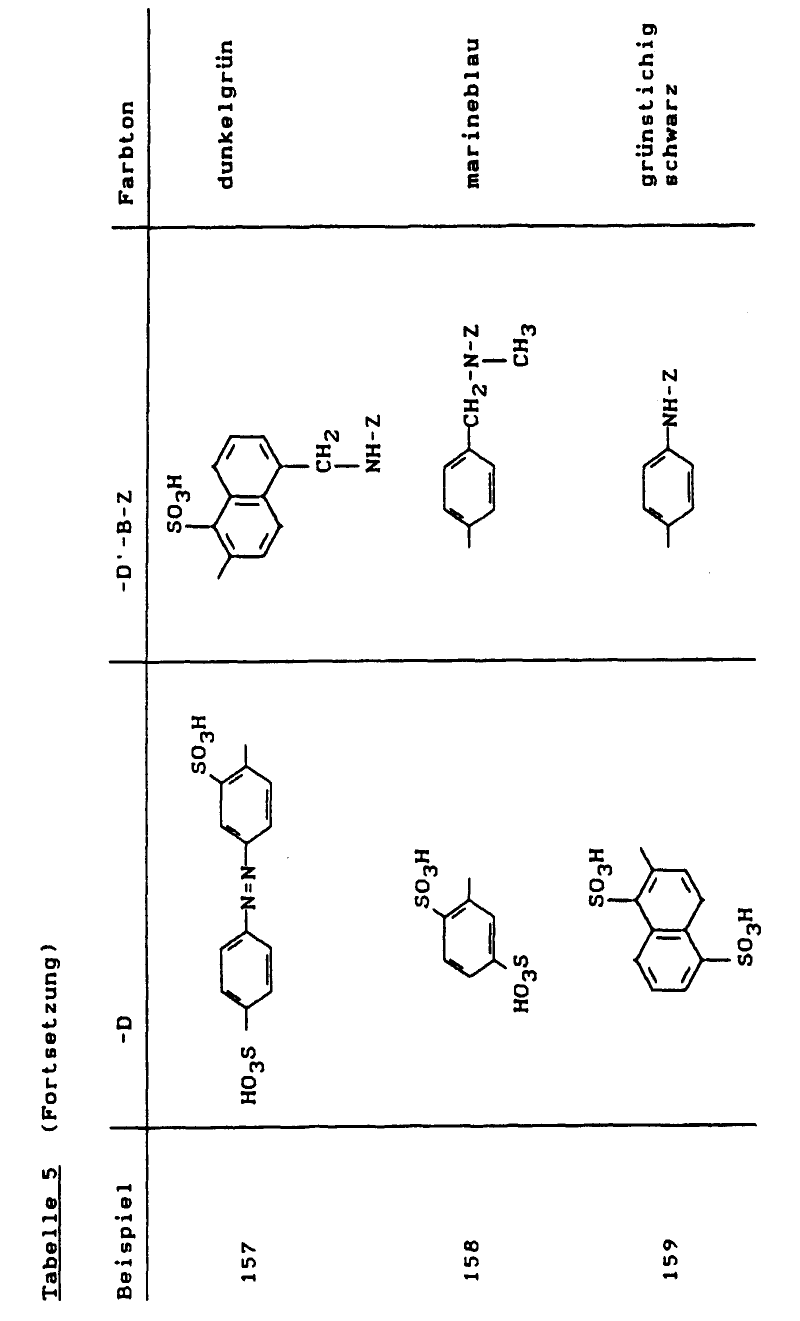

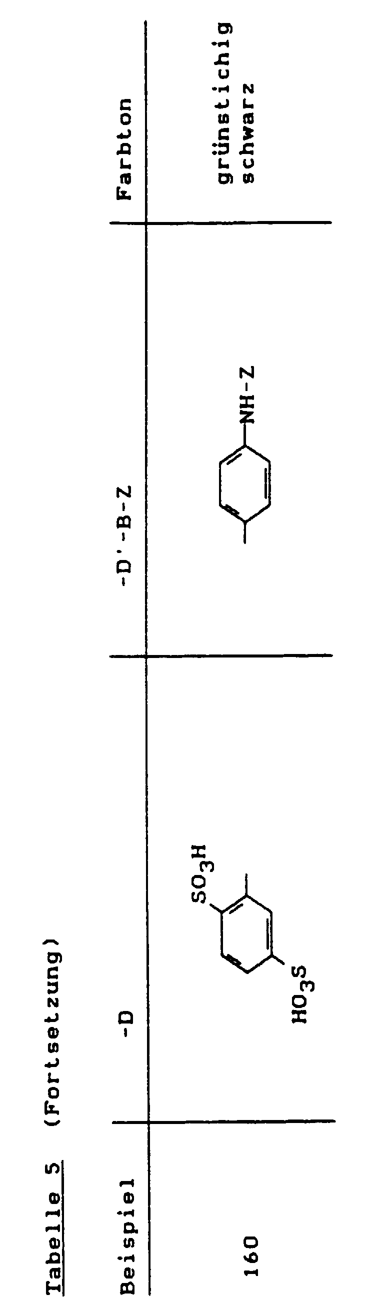

### Beispiele 161 bis 190

Farbstoffe dieser Beispiele erhält man, wenn man in Beispiel 131 bis 160 anstelle der Kupplungskomponente 1-Amino-8-hydroxy-3,6-naphthalindisulfonsäure nun die l-Amino-8-hydroxy-4,6-naphthalindisulfonsäure einsetzt. Die Farbtöne der Beispiele 161 bis 190 sind auf Baumwolle alle etwas rotstichiger als die analogen Farbstoffe 131 bis 160, wie z.B. Beispiel 161: 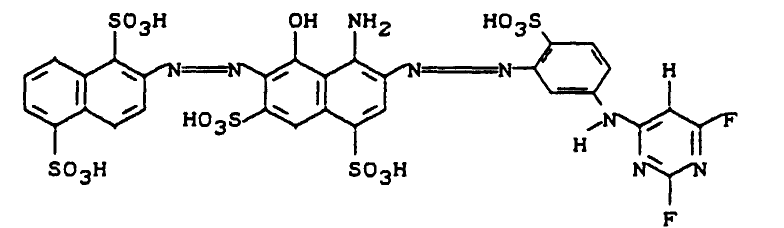 (etwas rotstichiger als Beispiel 131).

### Beispiel 191

In eine neutralisierte Lösung von 41,9 g 1-Amino-4-(3'-amino-2'-methyl-5'-sulfophenylamino)-anthrachinon in 500 ml Wasser trägt man 15,4 g 2,4,6-Trifluorpyrimidin ein. Unter Halten des pH-Wertes mit Sodalösung bei 6-7 rührt man bei 40-50°C bis die Kondensation beendet ist. Der Farbstoff wird mit Natriumchlorid ausgesalzen, abgesaugt und mit 10 Xiger Natriumchloridlösung gewaschen. Das nach Trocknung im Vakuum bei 40°C erhaltene blaue Pulver entspricht der Formel: 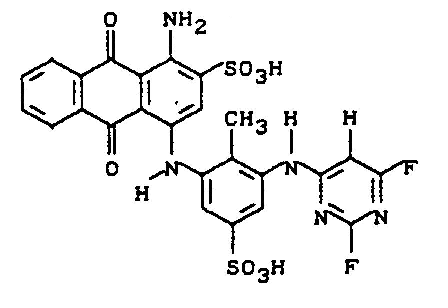 und färbt Baumwolle in neutralen Blautönen (^{λ}max 592 nm (H₂O)).

### Beispiel 192

Setzt man 21 g 1-Amino-4-(3'-amino-4'-sulfophenylamino)anthrachinon-2-sulfonsäure nach der Vorschrift in Beispiel 191 um, so erhält man einen Farbstoff der Formel 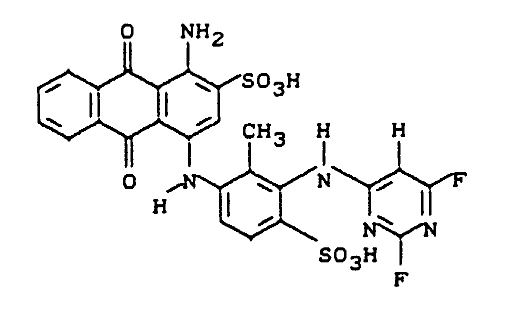 der Baumwolle in blauen Tönen anfärbt (^{λ}max = 596 nm (H₂O)).

### Beispiele 193 bis 211

Setzt man die in der folgenden Tabelle 6 aufgeführten Aminoazo-Verbindungen bei pH-Werten von 5-8 und Temperaturen von 40-60°C mit 2,4,6-Trifluorpyrimidin um, so erhält man Farbstoffe, die Baumwolle in den angegebenen Farbtönen anfärben.

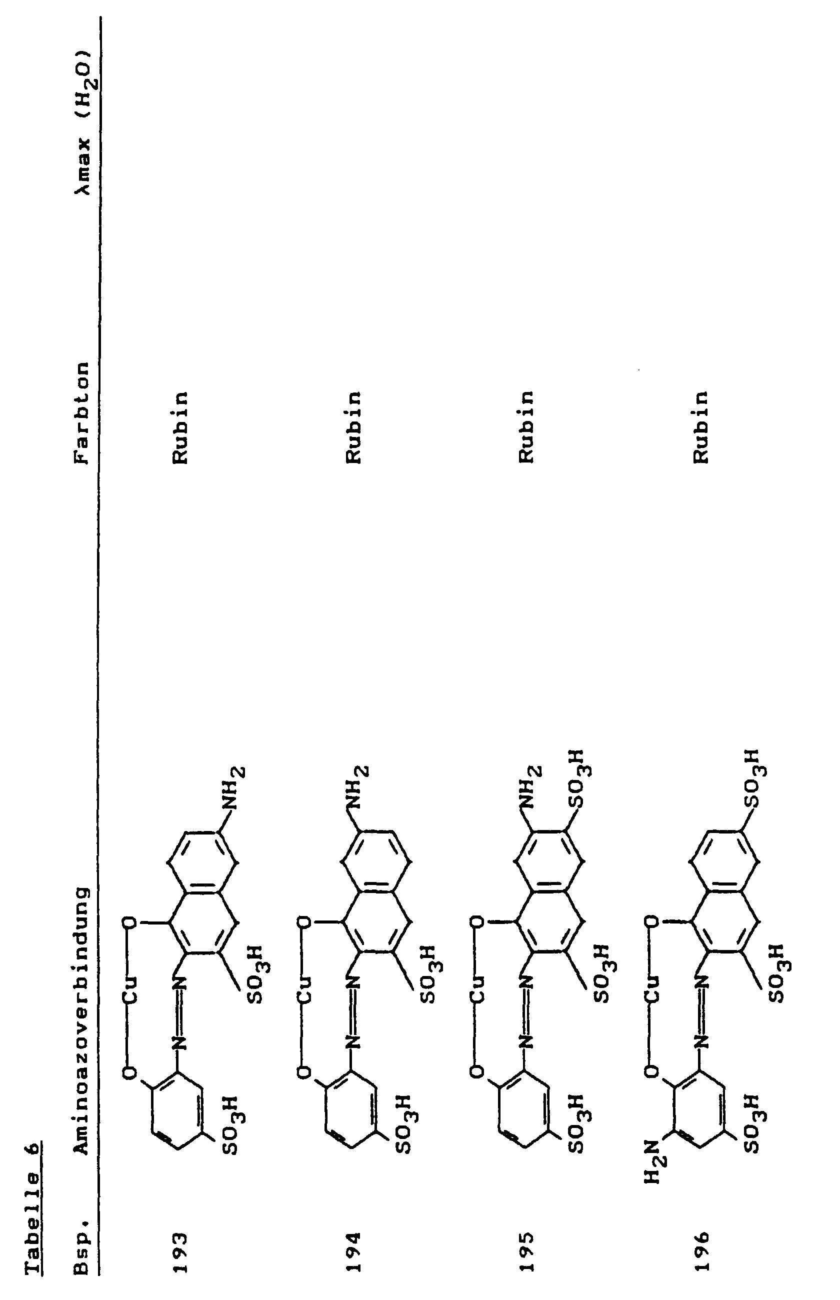

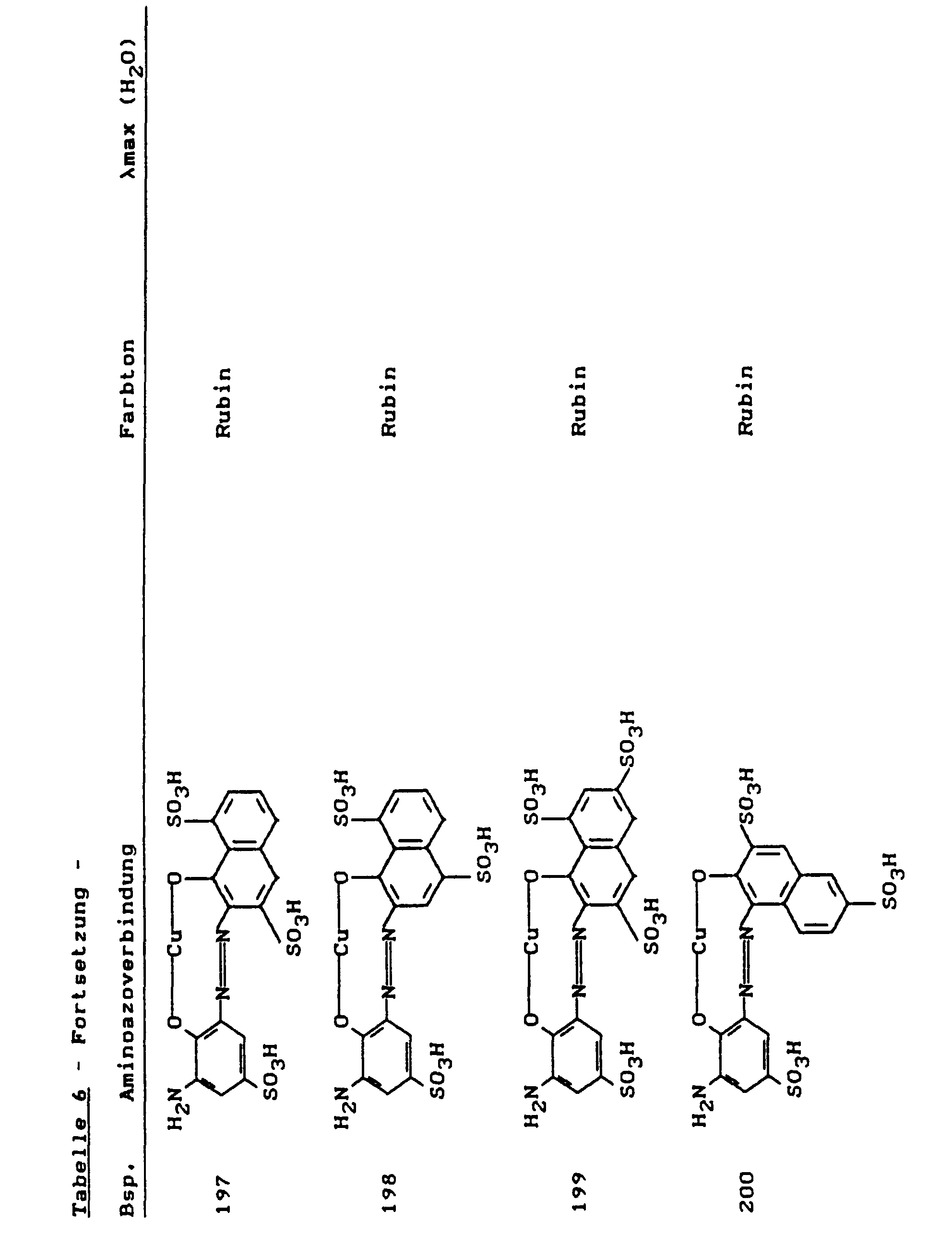

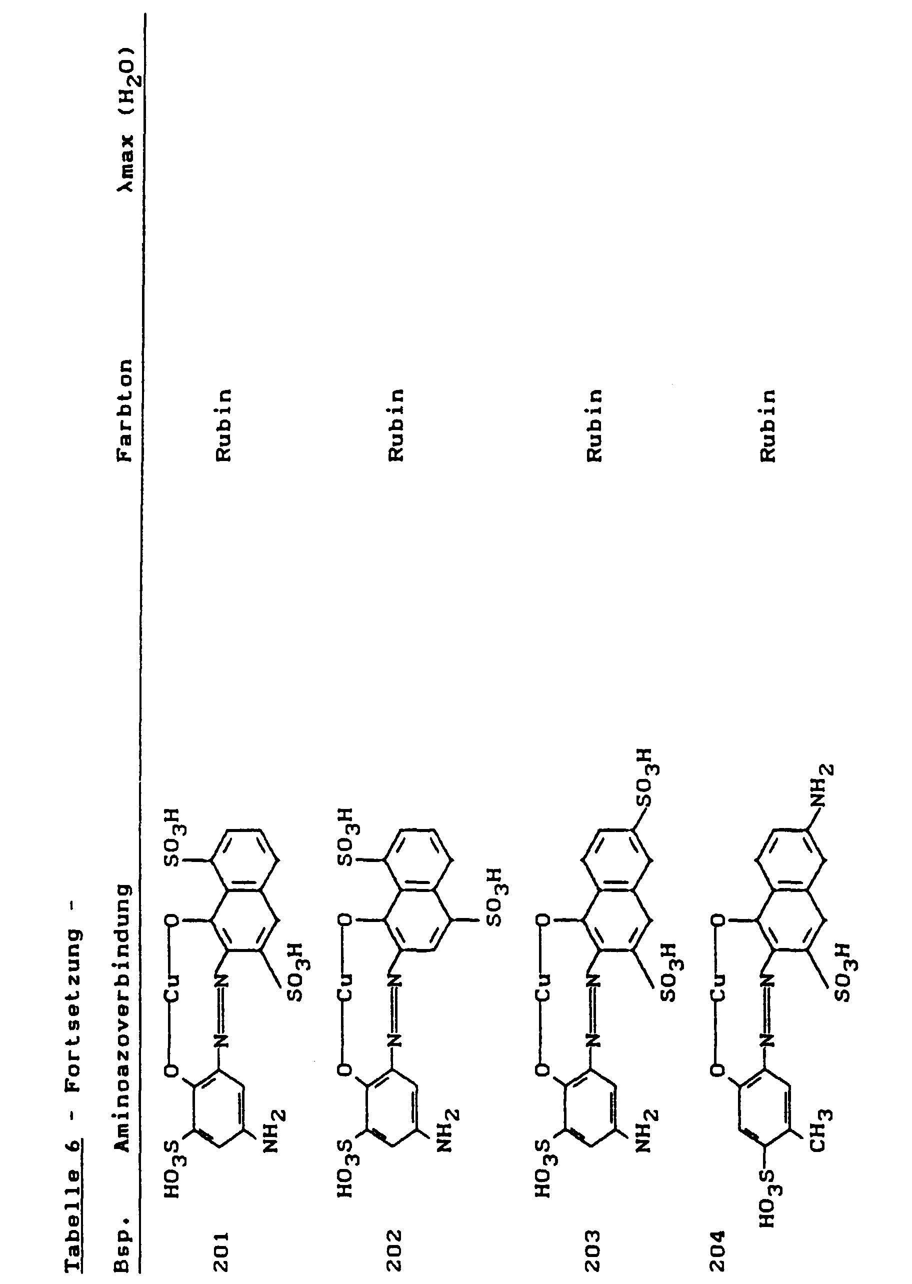

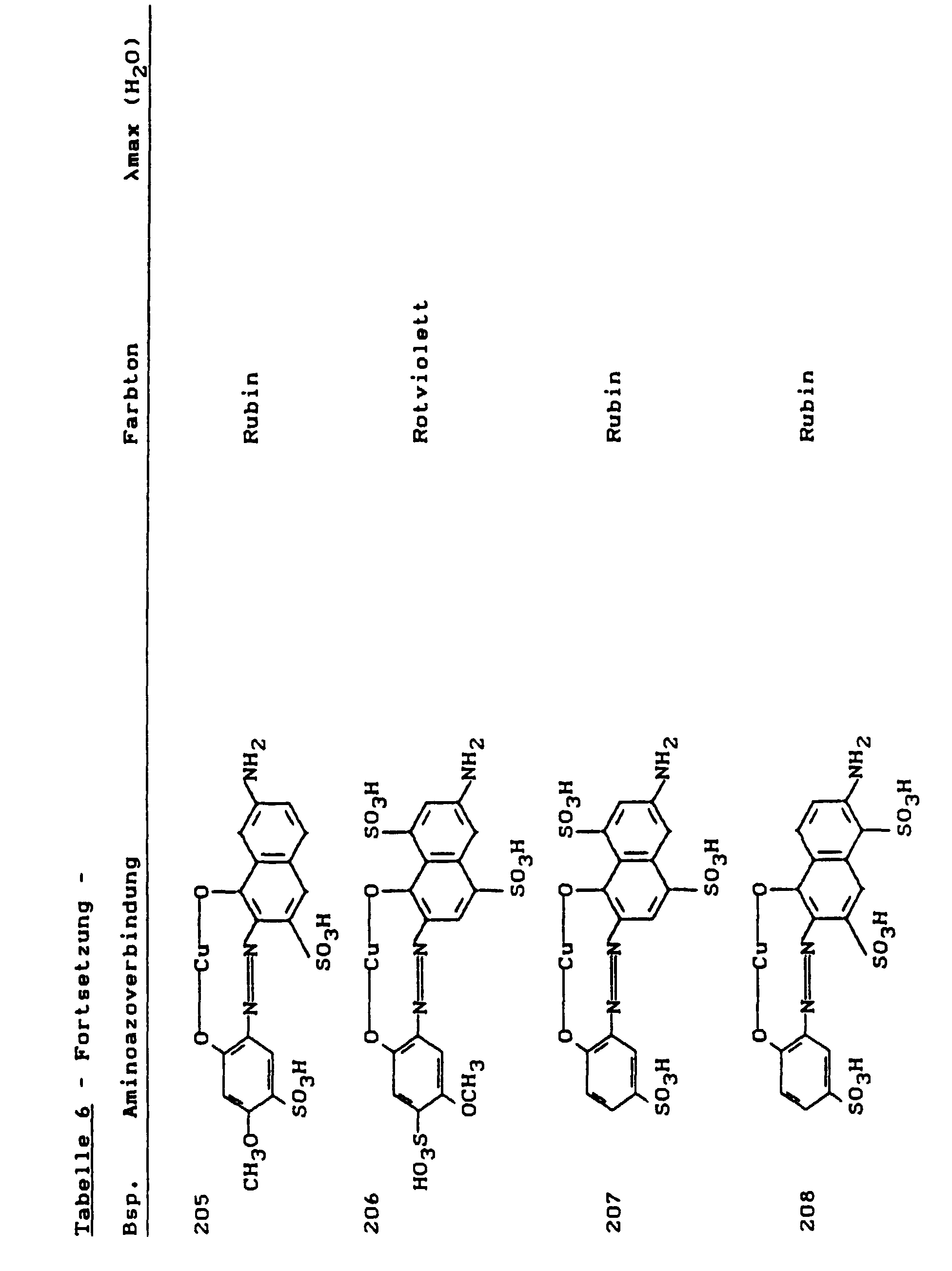

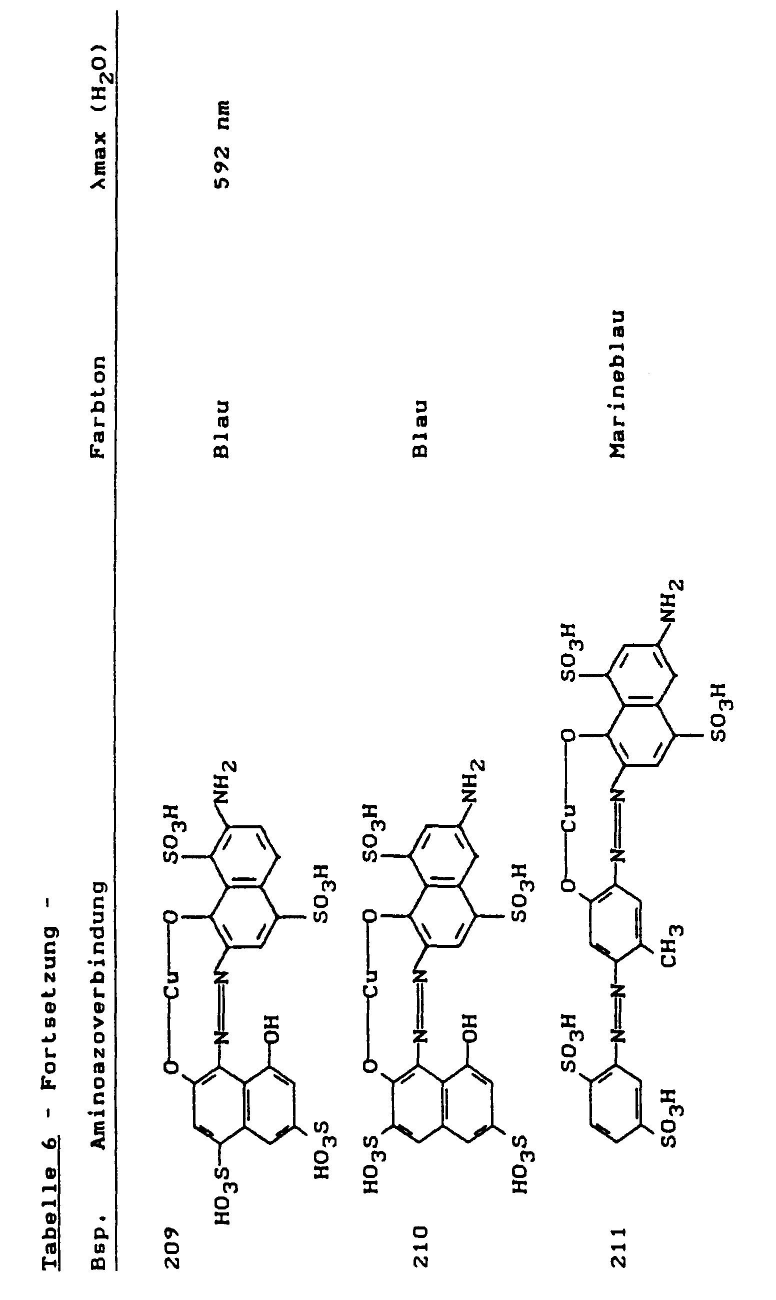

### Beispiele 212 bis 217

Setzt man die in der folgenden Tabelle 7 aufgeführten Aminoazoverbindungen in bekannter Weise mit äquimolaren Mengen Wasserstoffperoxid und Kupfersulfat um und kondensiert die entstandenen Farbbasen bei pH 5 bis 8 und 40 bis 60°C mit 2,4,6-Trifluorpyrimidin, so erhält man Kupferkomplex-Farbstoffe, die Baumwolle in den angegebenen Tönen anfärben, z.B. aus der Aminoazoverbindung von Beispiel 212 den Farbstoff der Formel

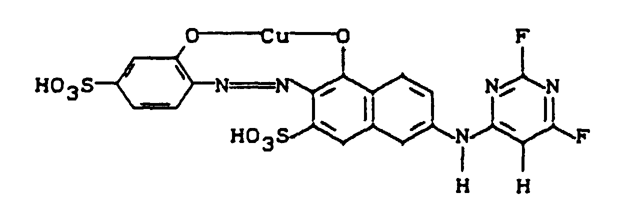

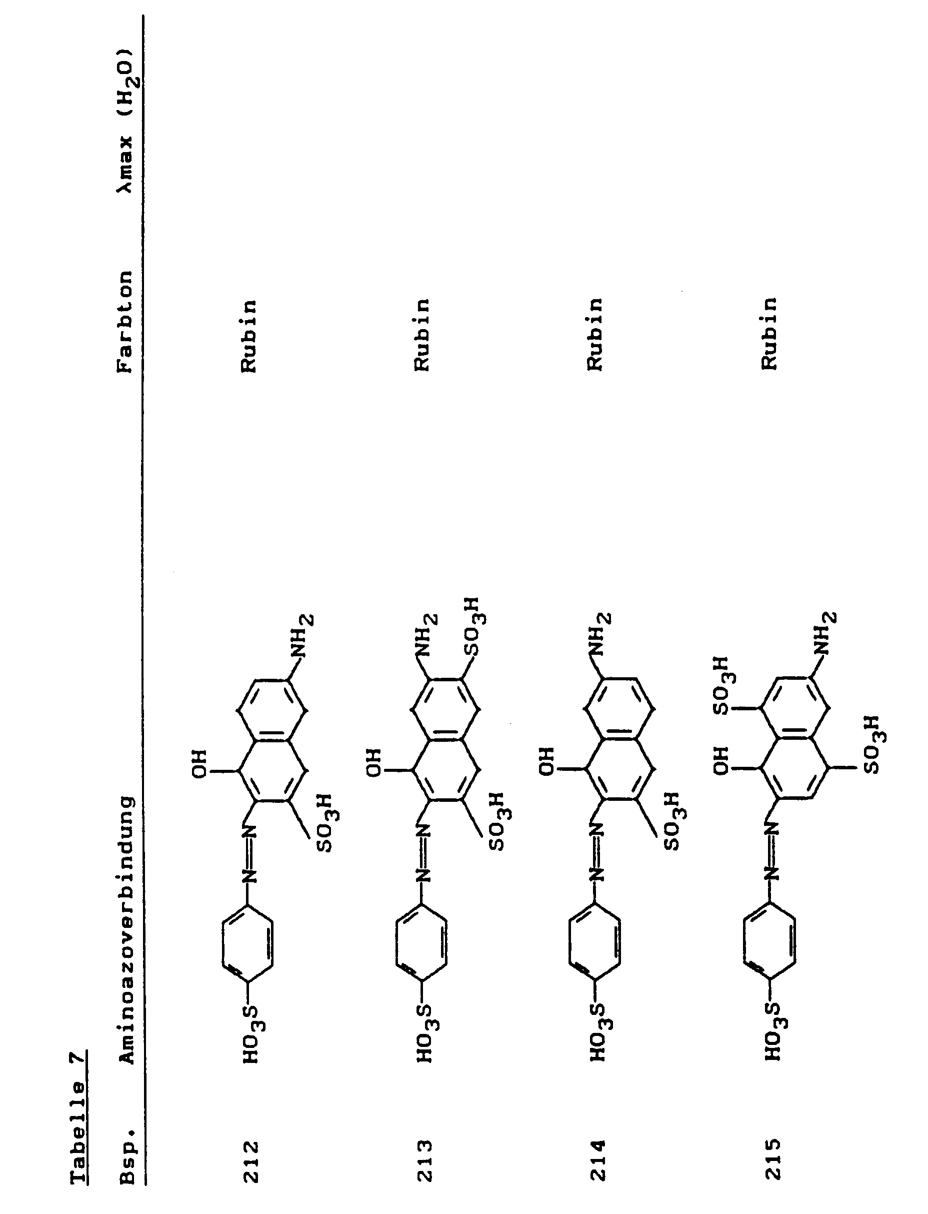

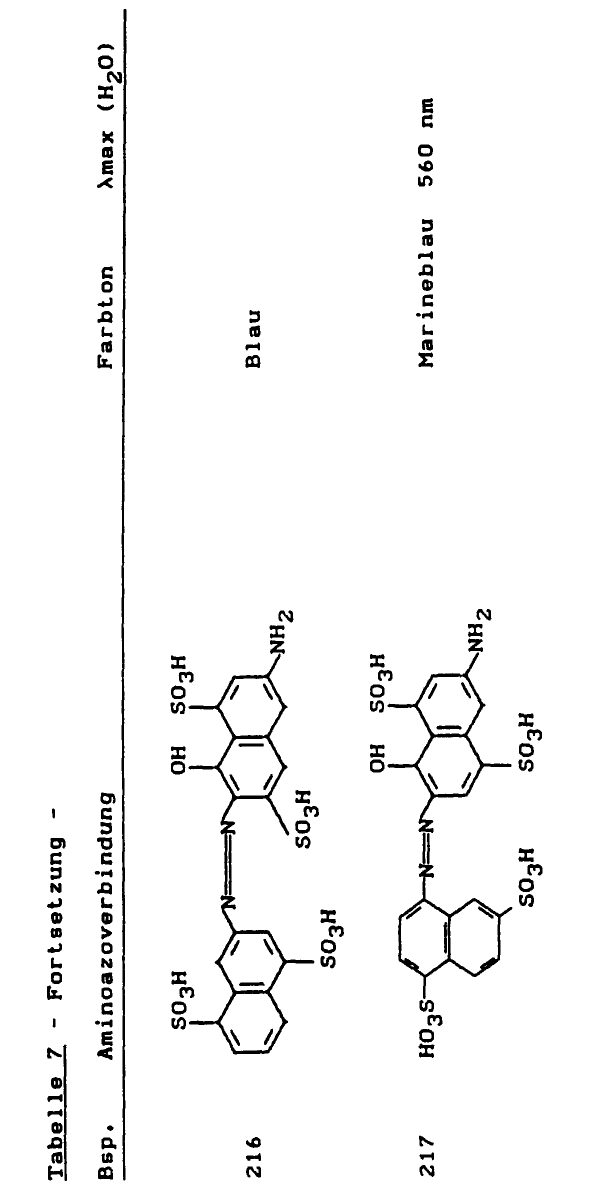

### Beispiele 218 bis 222

Setzt man die entsprechenden Farbbasen bei pH 5-8 und 40-60°C mit 2,4,6-Trifluorpyrimidin um, so erhält man folgende Farbstoffe, die Baumwolle in den angegebenen Farbtönen färben:

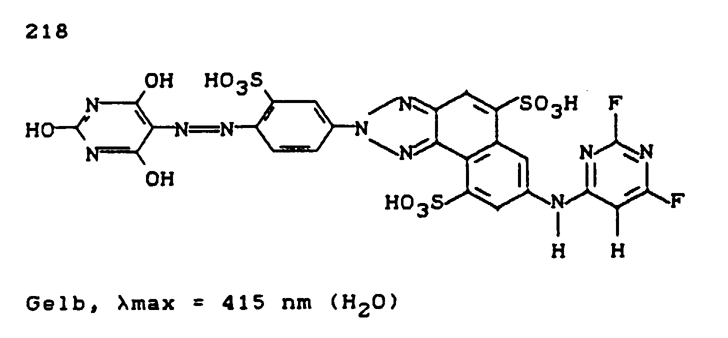

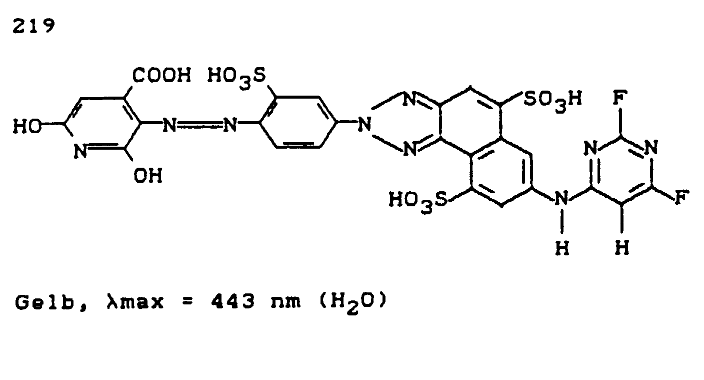

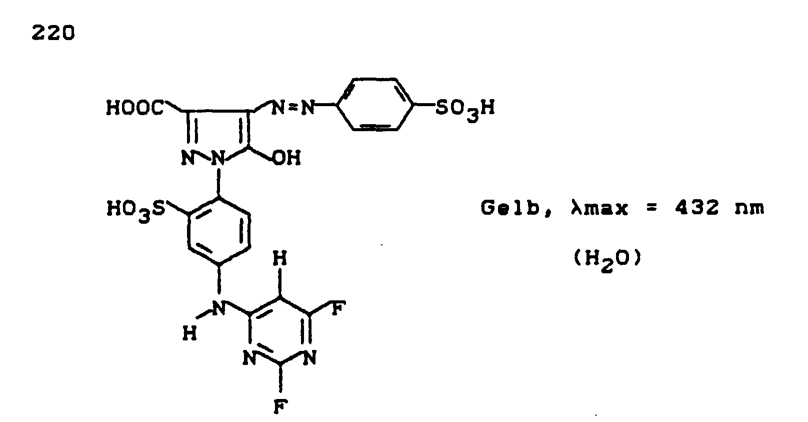

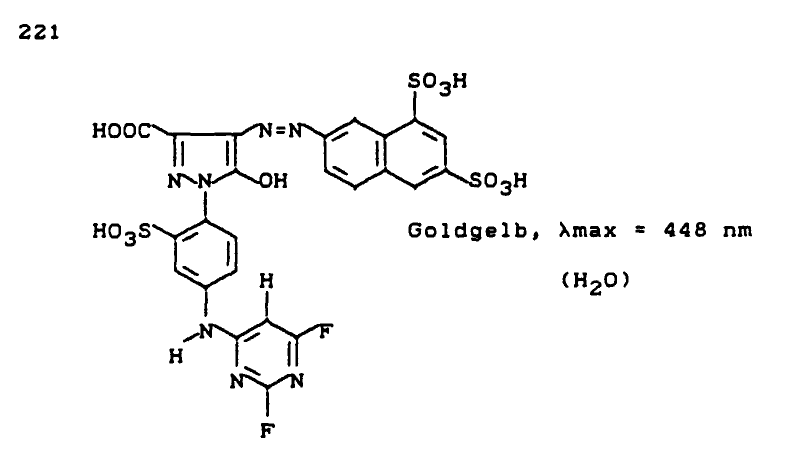

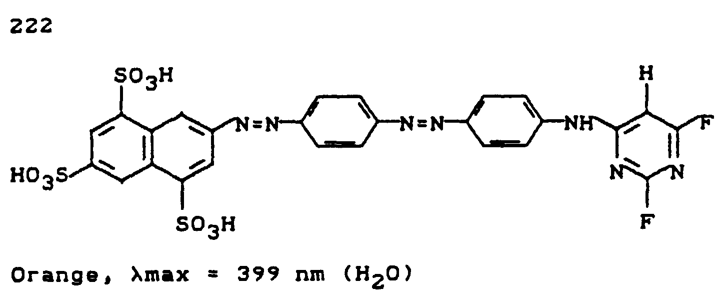

## Patentansprüche

1. Reaktivfarbstoffe die als freie Säure der Formel (1) entsprechen 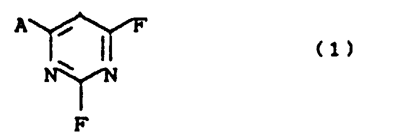 wobei
A ein chromophorer Rest folgender Struktur ist 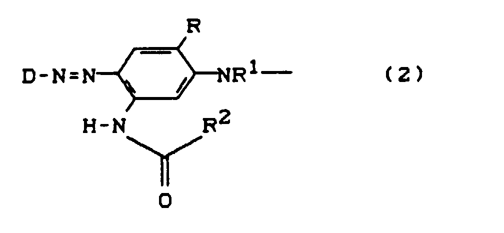 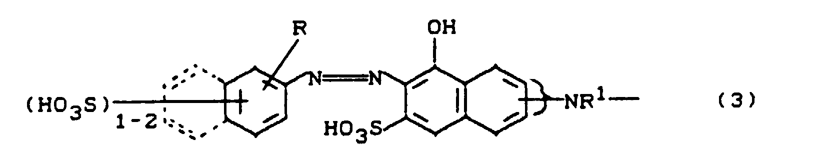 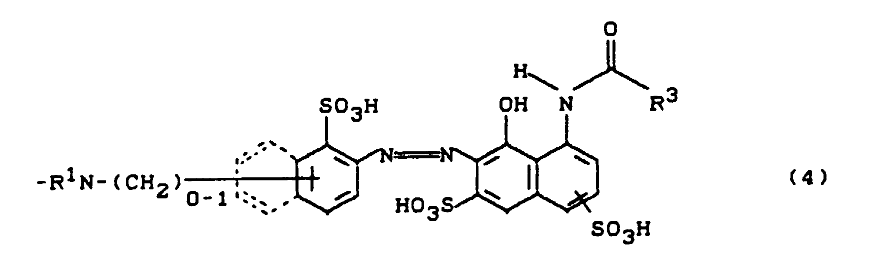 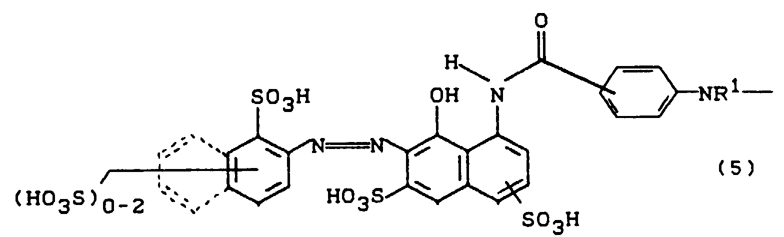 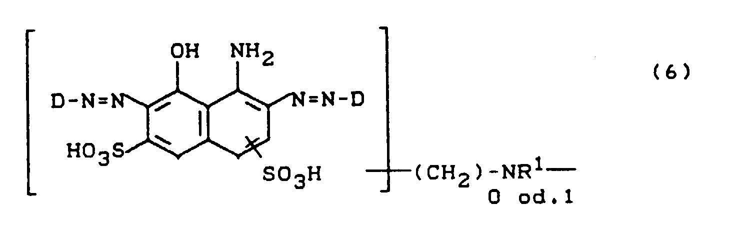 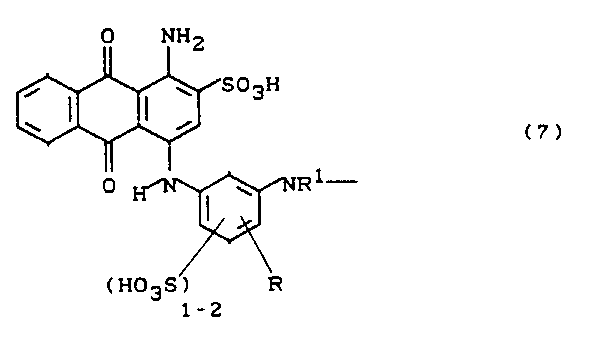
oder ein Metallkomplex von Farbstoffen der Formeln (8)-(11) 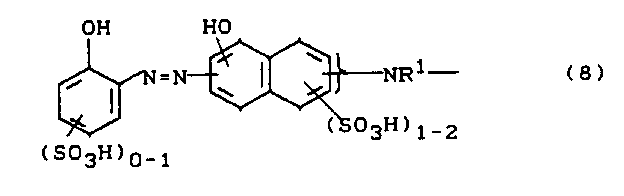 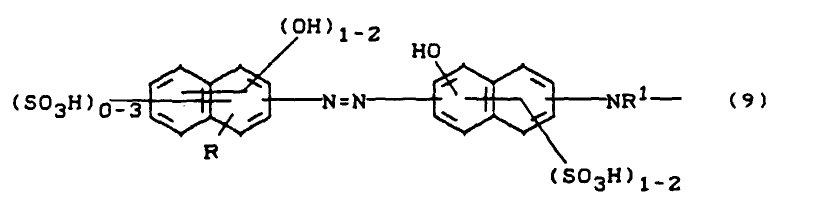 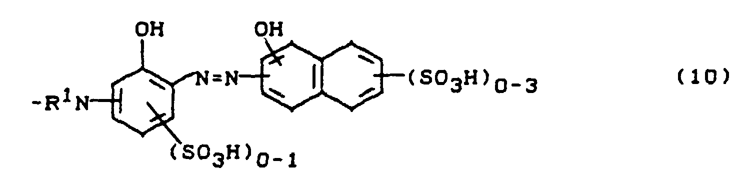 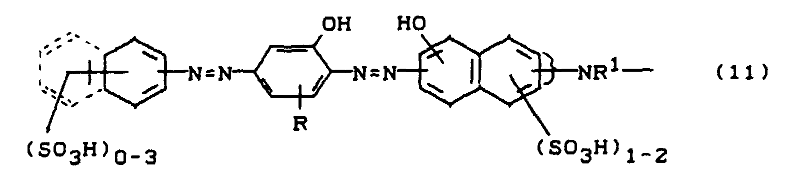 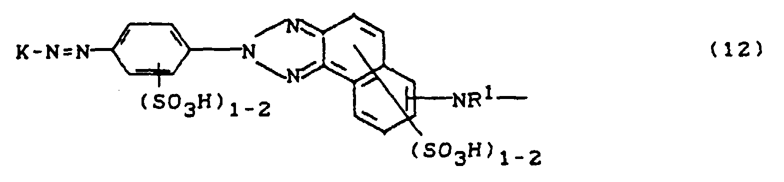 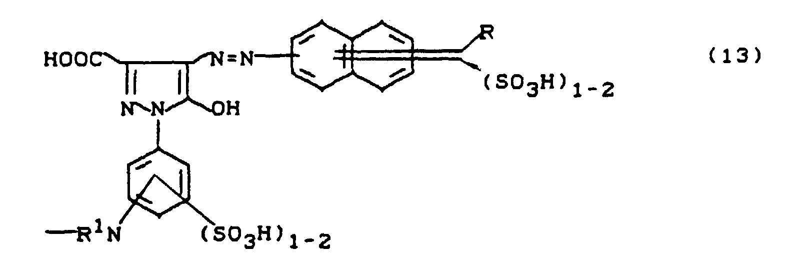 oder 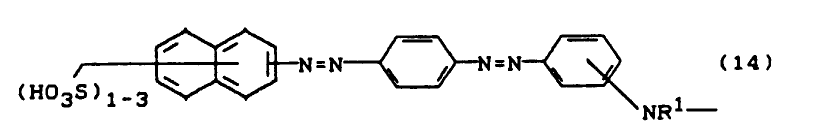 worin
die Bindung zwischen dem chromophoren Rest A und dem 4-Pyrimidinyl-Rest über eine Amino- oder Aminomethylfunktion an ein Ring-C-Atom und A erfolgt,
worin bedeuten
R = H, C₁-C₆-Alkylrest, C₁-C₆-Alkoxyrest,
R¹ = H, CH₃, C₂H₅,
R² = NH₂, gegebenenfalls durch OH, SO₃H, OSO₃H oder CO₂H substituierter C₁-C₄-Alkylrest, gegebenenfalls durch OH, SO₃H, OSO₃H oder CO₂H substituierter C₁-C₄-Alkoxyrest,
R³ = gegebenenfalls durch OH, SO₃H, OSO₃H oder CO₂H substituierter C₁-C₄-Alkylrest, gegebenenfalls durch C₁-C₄-Alkyl, Halogen oder SO₃H substituierter Phenylrest,
D für einen sulfogruppen- oder carboxygruppenhaltigen Rest einer Diazokomponente aus der Benzol-, Naphthalin- oder Hetarylreihe steht, der zusätzlich mit Alkyl-, Alkoxy-, Carboxy- oder Halogenresten substituiert sein kann; in Formel (6) weist einer von beiden Resten D einen möglicherweise substituierten 2,6-Difluor-4-pyrimidinylamino-, -methylamino- oder -ethylamino-Substituenten auf; D kann in diesem Fall sulfogruppenfrei oder sulfogruppenhaltig sein,
K für eine Kupplungskomponente steht,
mit Ausnahme der Verbindungen (15) und (16) 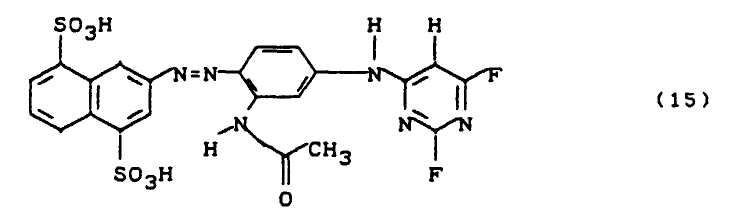 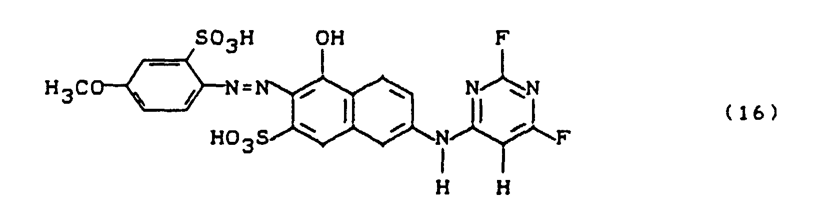 die von F. Lehr in Dyes + Pigments 14 (1990)
239 - 63 beschrieben werden.

2. Reaktivfarbstoffe nach Anspruch 1, dadurch gekennzeichnet, daß K ein Pyridon-, Pyrazolon-, Barbitursäure- oder Citracinsäurederivat ist.

3. Reaktivfarbstoffe nach wenigstens einem der vorhergehenden Ansprüche, dadurch gekennzeichnet, daß A ein Rest der Formel 2 bis 12 ist, worin
R = H, CH₃, OCH₃, OC₂H₅,
R¹ = H, CH₃,
R² = NH₂, gegebenenfalls durch OH, SO₃H, OSO₃H oder CO₂H substituierter C₁-C₄-Alkylrest,
R³ = CH₃, gegebenenfalls durch C₁-C₄-Alkyl, Halogen oder SO₃H substituierter Phenylrest.

4. Reaktivfarbstoffe nach wenigstens einem der vorhergehenden Ansprüche, dadurch gekennzeichnet, daß sie folgender Struktur entsprechen
a) Farbstoffe der Formel 1 mit A = Rest der Formel 2, worin
R = H,
R¹ = H, CH₃,
R² = NH₂, gegebenenfalls durch OH, SO₃H, OSO₃H oder CO₂H substituierter C₁-C₄-Alkylrest und 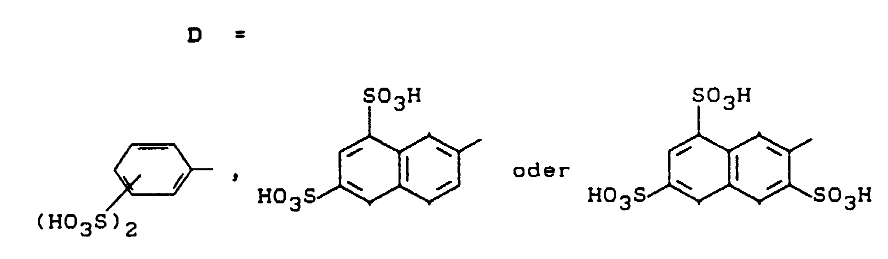
Formel 3, worin
b) Farbstoffe der Formel 1 mit A = Rest der
R = H, CH₃, OC₂H₅,
R¹ = H, CH₃,
c) Farbstoffe der Formel 1 mit A = Rest der Formeln 4 - 5, worin
R¹ = H, CH₃,
R³ = CH₃, gegebenenfalls durch C₁-C₄-Alkyl, Halogen oder SO₃H substituierter Phenylrest,
d) Farbstoffe der Formel 1 mit A = Rest der Formel 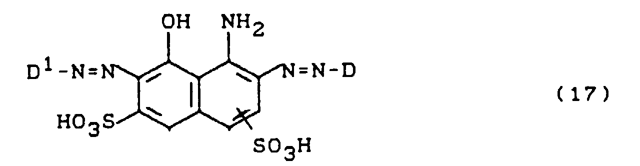 worin 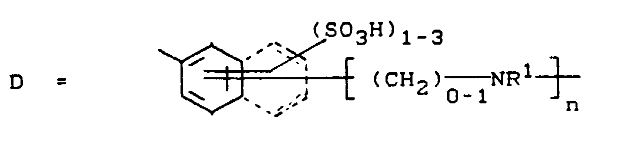 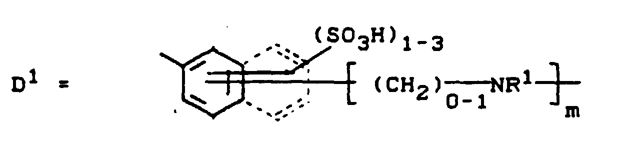
R¹ = H, CH₃,
n = m = 0 oder 1, aber n + m = 1 ist,
e) Farbstoffe der Formel 1 mit A = Rest der Formel 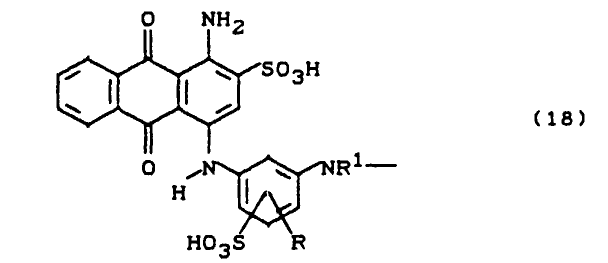 worin
R = H, CH₃, OCH₃,
R¹ = H,
f) Farbstoffe der Formel 1 mit A = Rest der Formel (8) bis (11), worin
R = H,
oder
g) Farbstoffe der Formel (1) mit A = Rest der Formel (12), worin
R H und
K die oben genannte Bedeutung hat.

5. Reaktivfarbstoffe nach wenigstens einem der vorhergehenden Ansprüche, dadurch gekennzeichnet, daß sie folgender spezieller Formel entsprechen

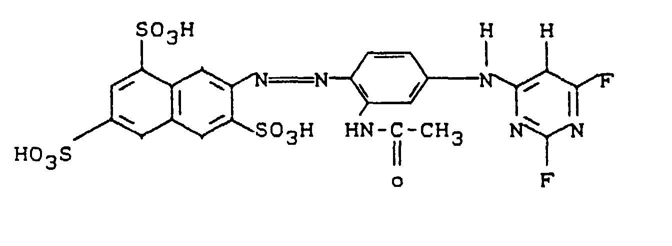

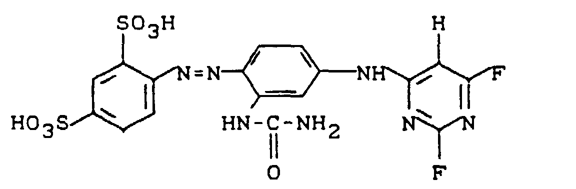

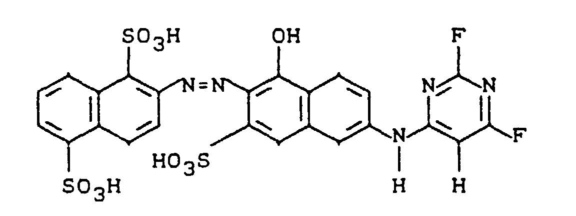

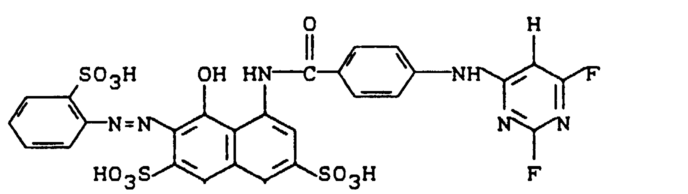

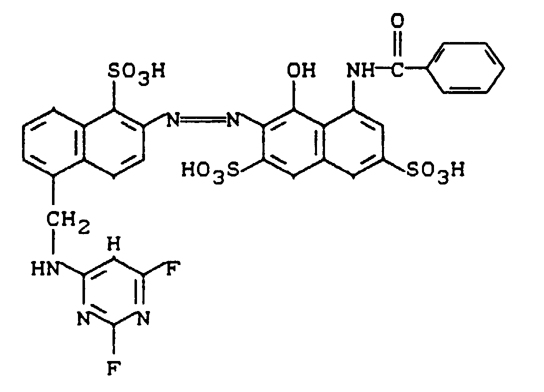

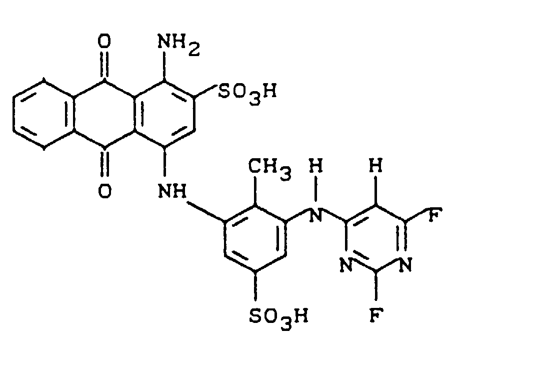

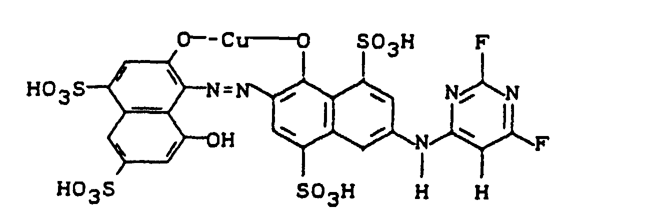

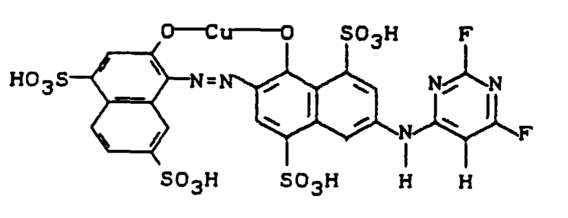

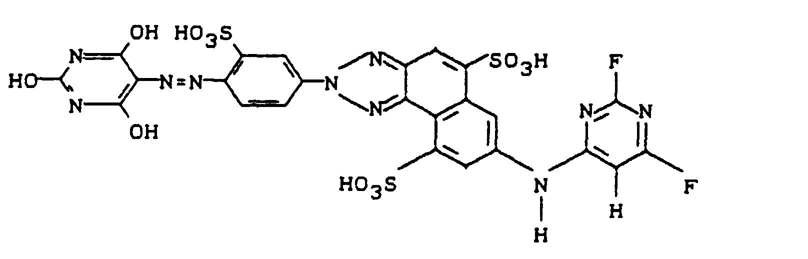

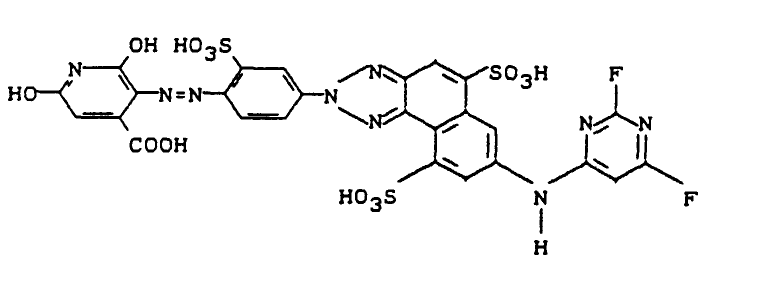

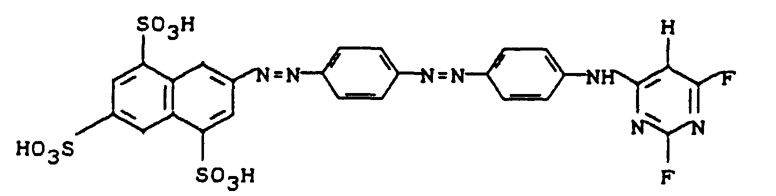

6. Verfahren zur Herstellung von Reaktivfarbstoffen gemäß Anspruch 1 nach wenigstens einem der folgenden Verfahren
1. durch Kondensation einer Reaktivkomponente de Formel 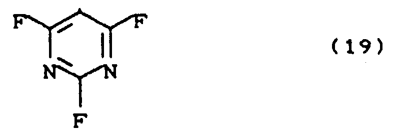 mit den entsprechenden Farbbasen,
2. durch Azokopplung eines Kondensationsprodukte der Formeln 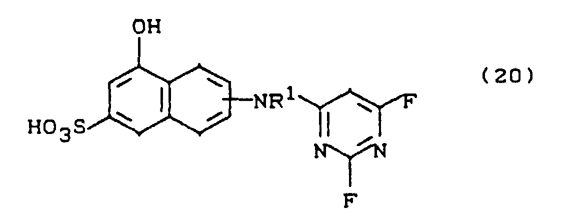 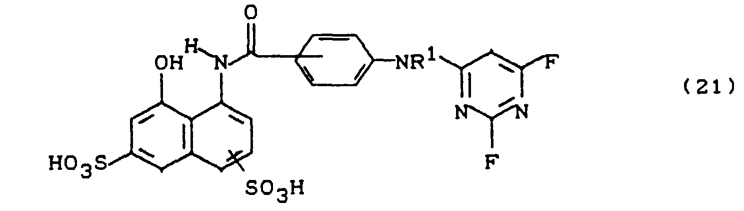 mit Diazoniumverbindungen, oder
3. durch Diazotieren und Kuppeln eines mit 2,4,6-Trifluorpyrimidin kondensierten Amins der allgemeinen Formel 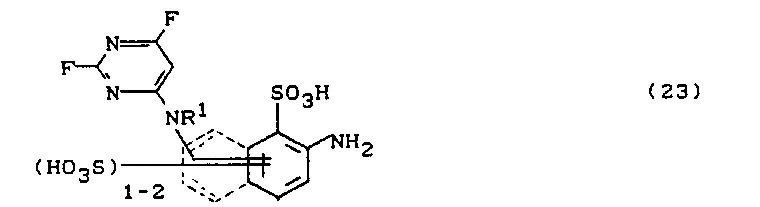 auf eine Kupplungskomponente der Formeln 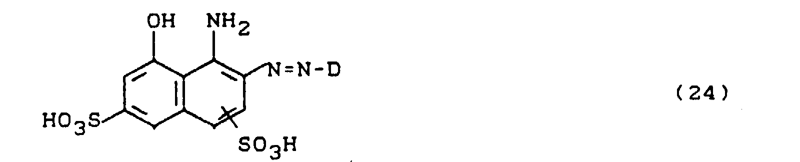
worin D die obengenannte Bedeutung hat.

7. Verfahren zum Färben oder Bedrucken von natürlichen und synthetischen OH- oder amidgruppenhaltigen Materialien mit wenigstens einem Reaktivfarbstoff, dadurch gekennzeichnet, daß ein Reaktivfarbstoff gemäß wenigstens einem der vorhergehenden Ansprüche verwendet wird.

## Claims

1. Reactive dyestuffs which, in the form of the free acid, conform to the formula (I) 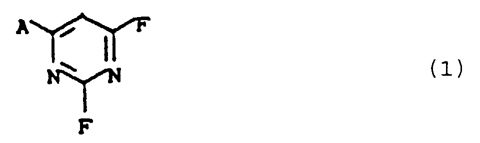 in which
A is a chromophoric radical of the following structure 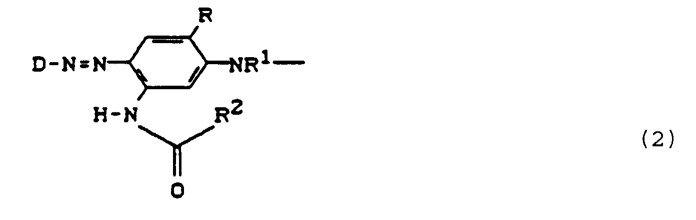 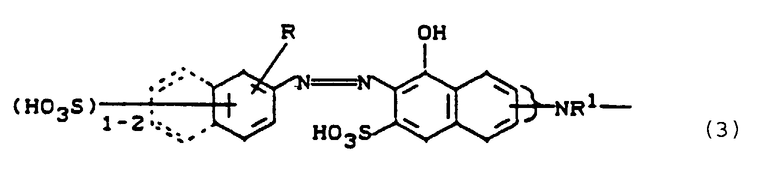 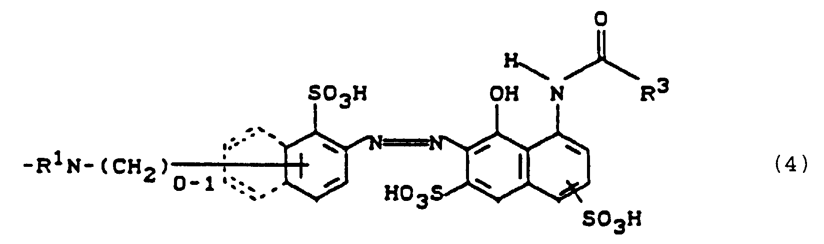 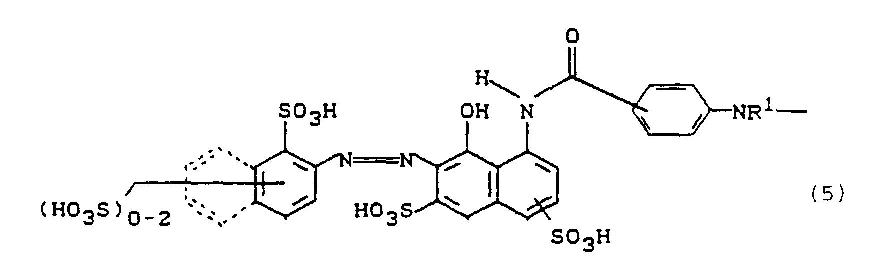 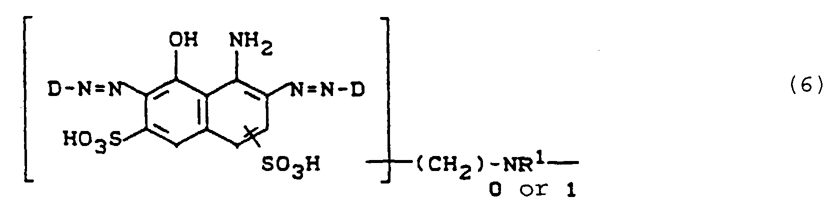 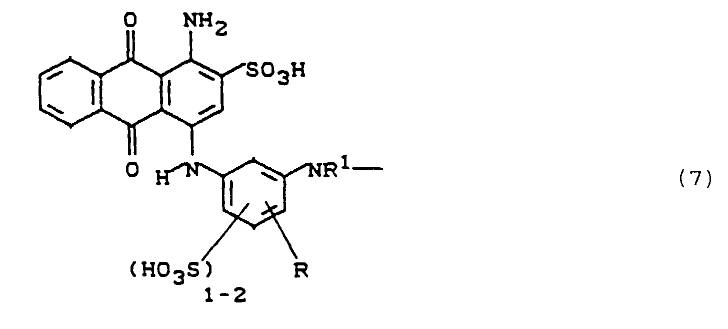
or a metal complex of dyestuffs of the formulae (8)-(11) 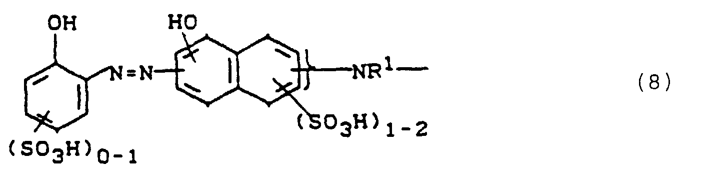 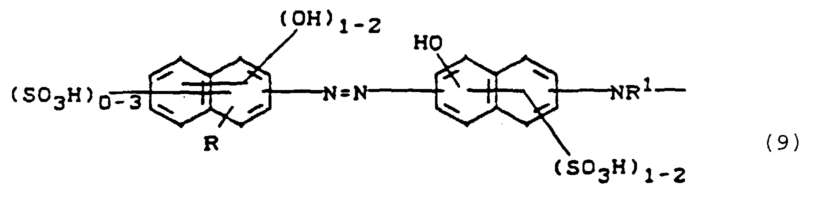 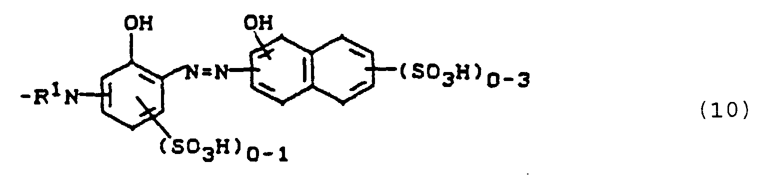 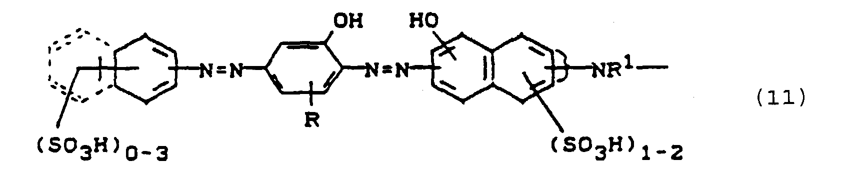 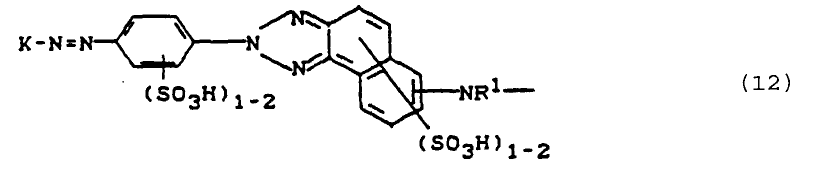 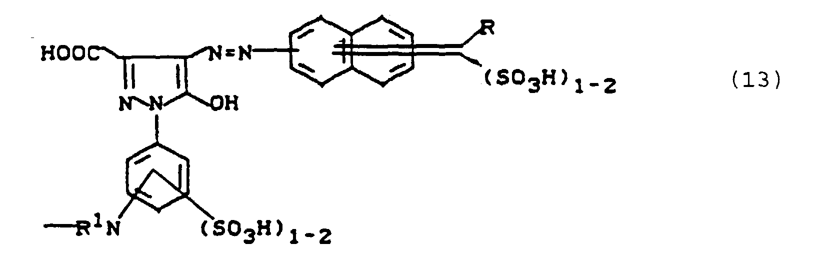 or 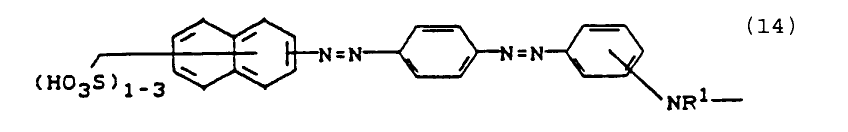 in which
the bonding between the chromophoric radical A and the 4-pyrimidinyl radical is effected via an amino or aminomethyl function onto a ring C atom and A,
in which
R denotes H, a C₁-C₆-alkyl radical, a C₁-C₆-alkoxy radical,
R¹ denotes H, CH₃, C₂H₅,
R² denotes NH₂, a C₁-C₄-alkyl radical which is unsubstituted or substituted by OH, SO₃H, OSO₃H or CO₂H, a C₁-C₄-alkoxy radical which is unsubstituted or substituted by OH, SO₃H, OSO₃H or CO₂H,
R³ denotes a C₁-C₄-alkyl radical which is unsubstituted or substituted by OH, SO₃H, OSO₃H or CO₂H, a phenyl radical which is unsubstituted or substituted by C₁-C₄-alkyl, halogen or SO₃H,
D represents a sulpho- or carboxy-containing radical of a diazo component of the benzene, naphthalene or hetaryl series, which additionally may be substituted by alkyl, alkoxy, carboxyl or halogen radicals, in formula (6) one of the two radicals D contains a possibly substituted 2,6-difluoro-4-pyrimidinylamino, -methylamino or -ethylamino substituent, it being possible in this case for D to be free of sulpho groups or to contain sulpho groups.
K represents a coupling component,
with the exception of compounds (15) and (16) 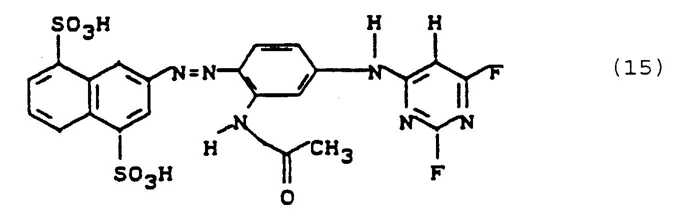 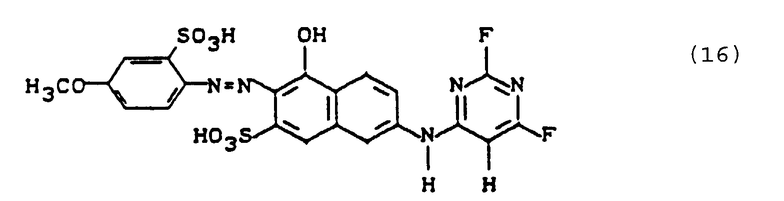 which are described by F. Lehr in Dyes + Pigments 14 (1990), 239 - 63.

2. Reactive dyestuffs according to Claim 1, characterised in that K is a pyridone, pyrazolone, barbituric acid or citrazinic acid derivative.

3. Reactive dyestuffs according to at least one of the preceding claims, characterised in that A is a radical of the formula 2 to 12 in which
R is H, CH₃, OCH₃, OC₂H₅,
R¹ is H, CH₃,
R² is NH₂, a C₁-C₄-alkyl radical which is unsubstituted or substituted by OH, SO₃H, OSO₃H or CO₂H,
R³ is CH₃, a phenyl radical which is unsubstituted or substituted by C₁-C₄-alkyl, halogen or SO₃H.

4. Reactive dyestuffs according to at least one of the preceding claims, characterised in that they conform to the following structure
a) dyestuffs of the formula 1 where A is a radical of the formula 2 in which
R is H,
R¹ is H, CH₃,
R² is NH₂, a C₁-C₄-alkyl radical which is unsubstituted or substituted by OH, SO₃H, OSO₃H or CO₂H, and 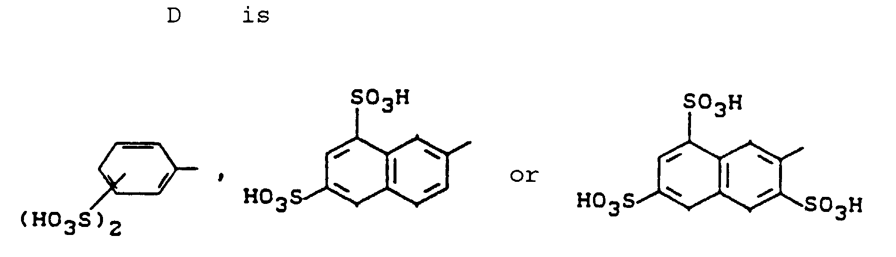
b) dyestuffs of the formula 1 where A is a radical of the formula 3 in which
R is H, CH₃, OC₂H₅,
R¹ is H, CH₃,
c) dyestuffs of the formula 1 where A is a radical of the formulae 4-5 in which
R¹ is H, CH₃,
R³ is CH₃, a phenyl radical which is unsubstituted or substituted by C₁-C₄-alkyl, halogen or SO₃H,
d) dyestuffs of the formula 1 where A is a radical of the formula 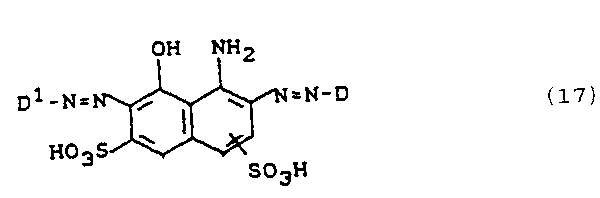 in which 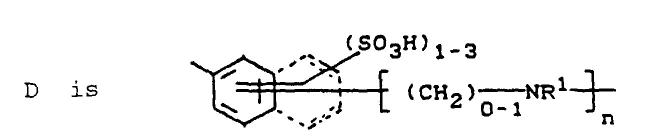 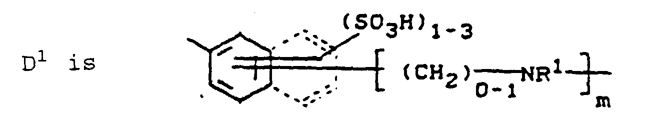
R¹ is H, CH₃,
n = m is 0 or 1 but n + m is 1,
e) dyestuffs of the formula 1 where A is a radical of the formula 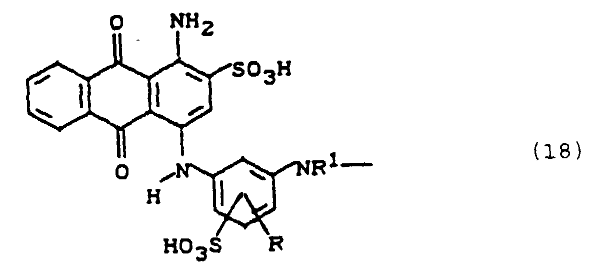 in which
R is H, CH₃, OCH₃,
R¹ is H,
f) dyestuffs of the formula 1 where A is a radical of the formulae (8) to (11) in which
R is H, or
g) dyestuffs of the formula (1) where A is a radical of the formula (12) in which
R is H and
K has the abovementioned meaning.

5. Reactive dyestuffs according to at least one of the preceding claims, characterised in that they conform to the following specific formula

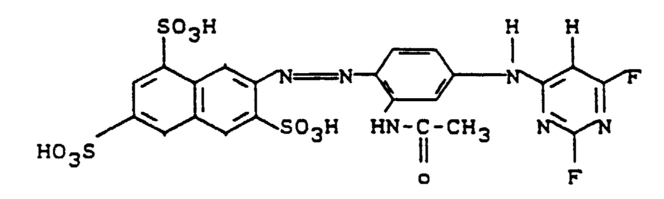

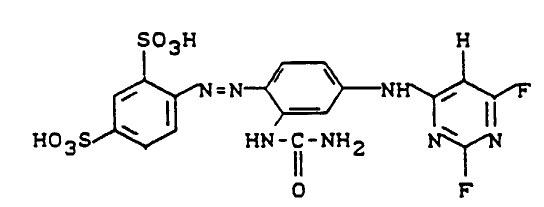

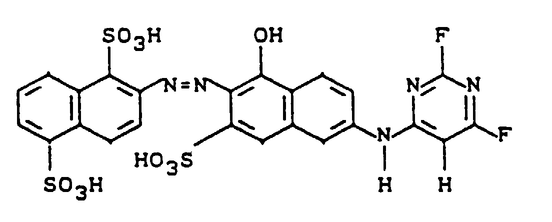

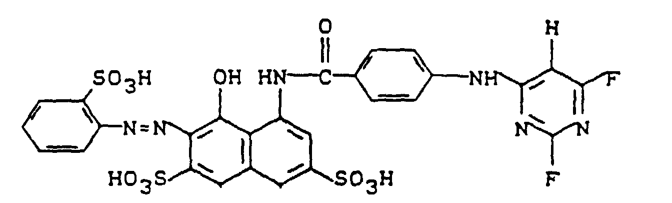

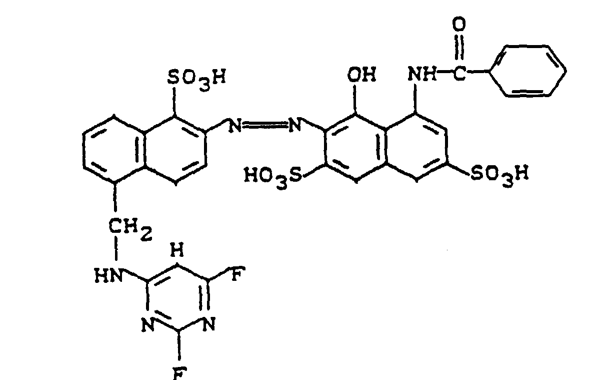

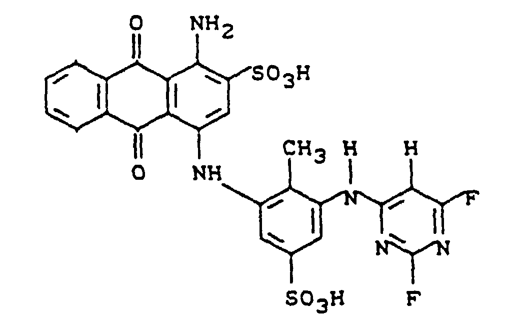

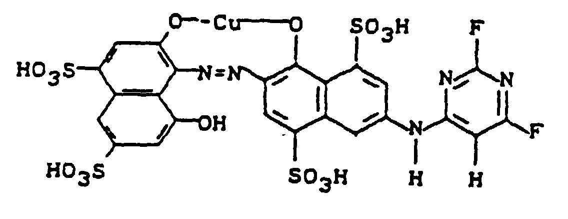

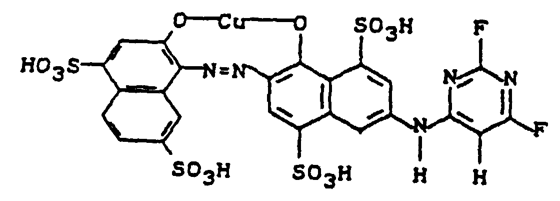

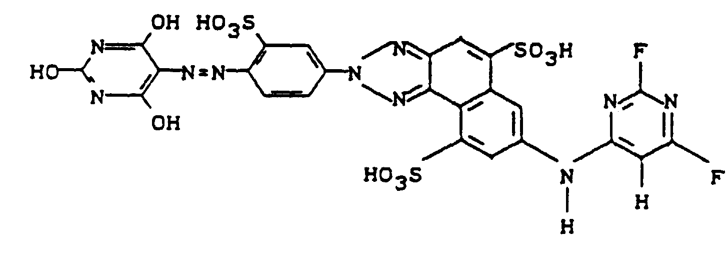

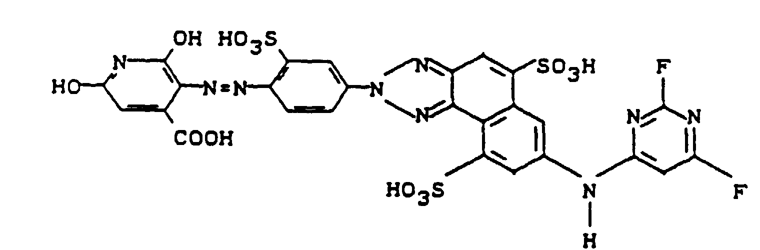

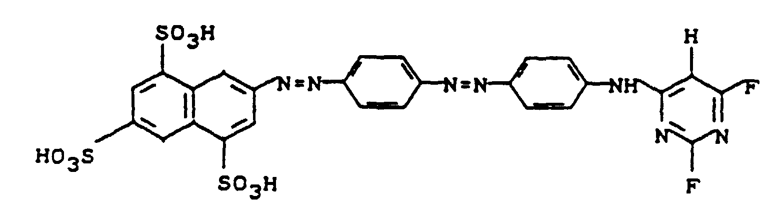

6. Process for the preparation of reactive dyestuffs according to Claim 1 by at least one of the following processes
1. by condensation of a reactive component of the formula 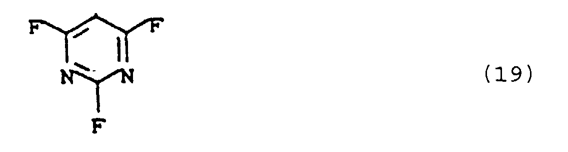 with the corresponding dyestuff bases,
2. by azo coupling of a condensation product of the formulae 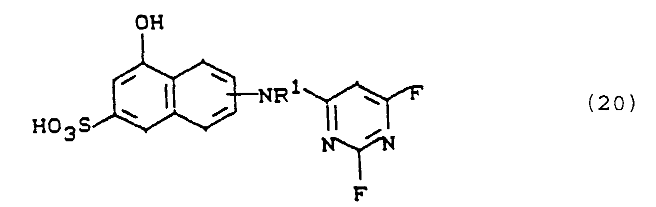 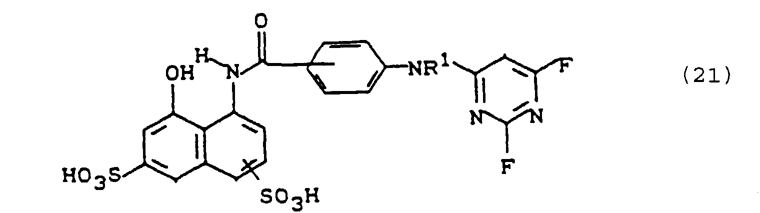 with diazonium compounds, or
3. by diazotisation and coupling of an amine 2,4,6-trifluoropyrimidine condensation product of the general formula 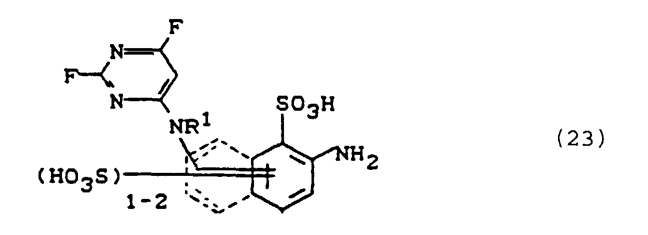 onto a coupling component of the formula 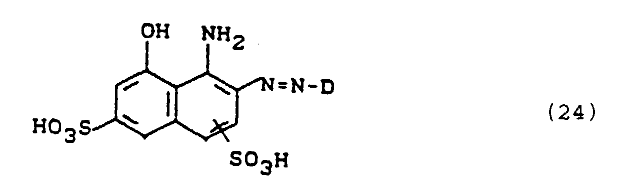 in which D has the abovementioned meaning.

7. Process for the dyeing or printing of natural or synthetic OH- or amido-containing materials with at least one reactive dyestuff, characterised in that a reactive dyestuff according to at least one of the preceding claims is used.

## Revendications

1. Colorants réactifs qui, à l'état d'acides libres, répondent à la formule (1): 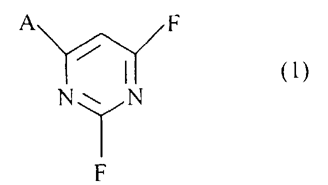 dans laquelle
A représente un radical chromophore de structure : 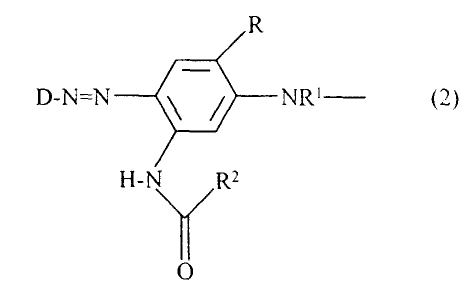 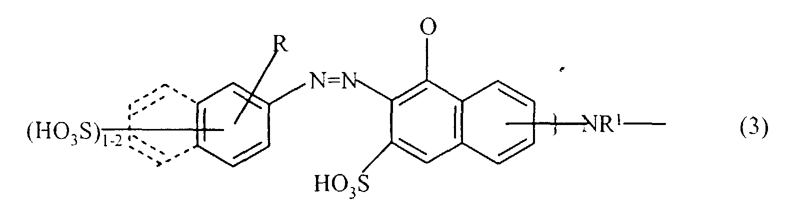 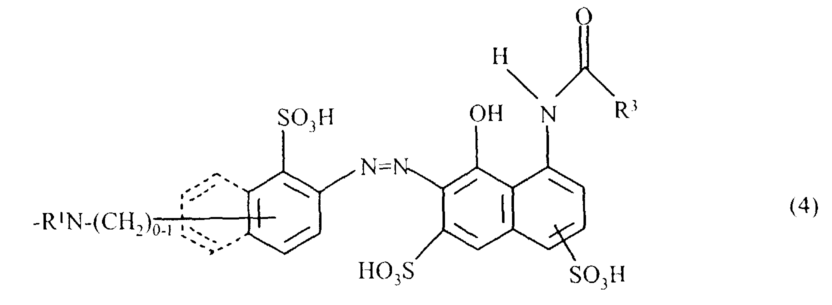 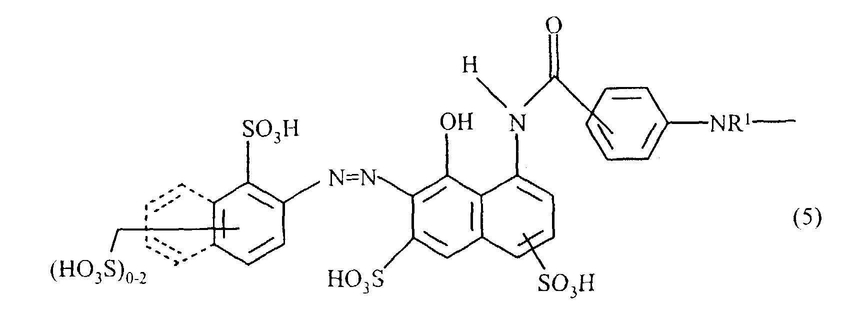 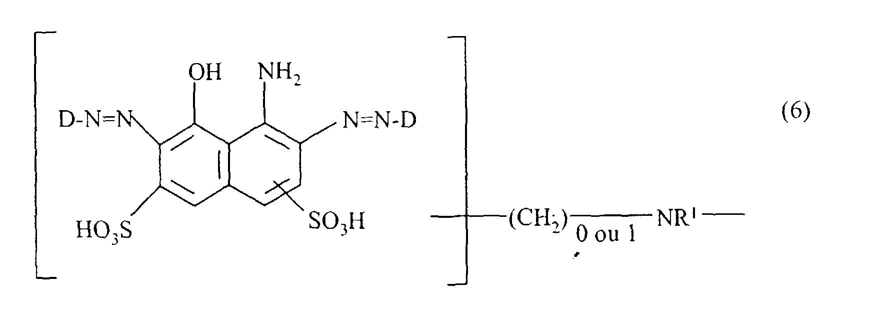 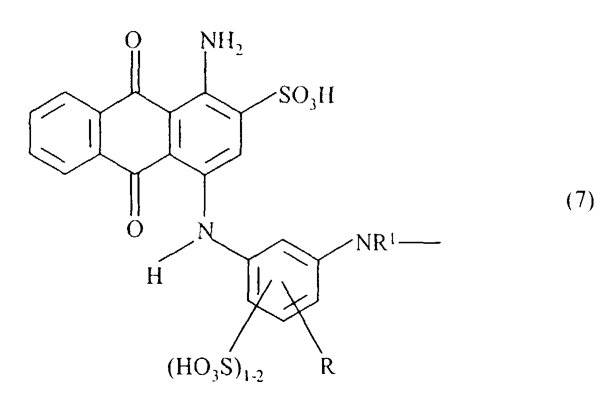
ou un complexe métallique de colorant de formule (8) à (11) : 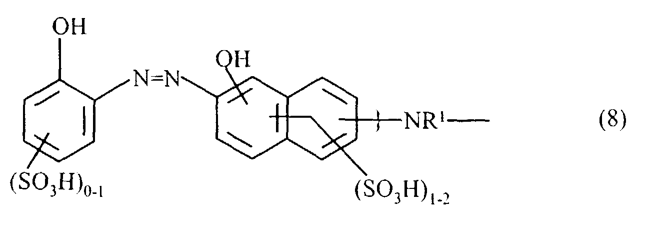 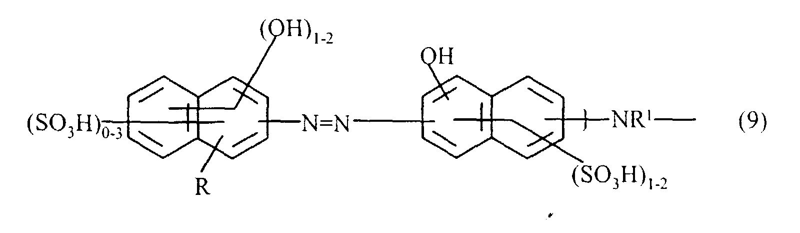 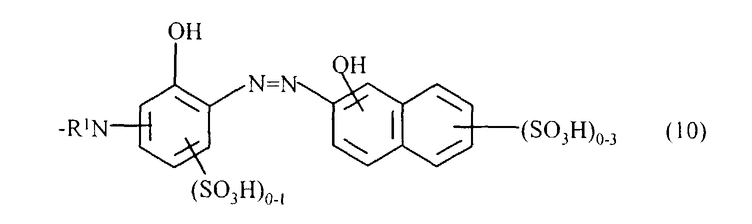 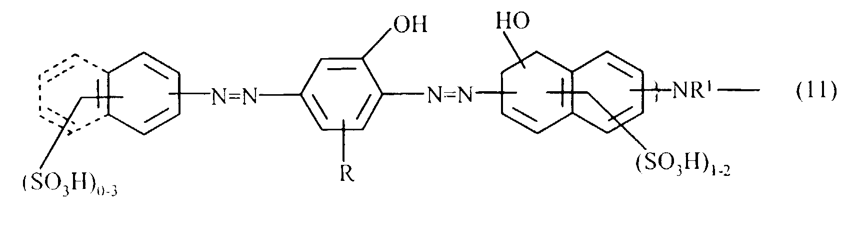 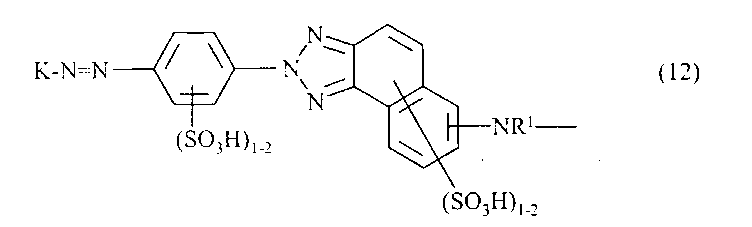 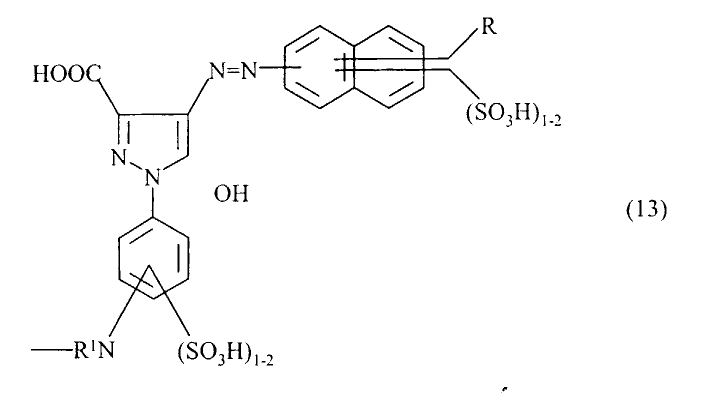 ou 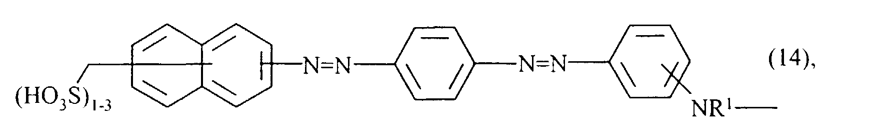 dans lesquelles
la liaison entre le radical chromophore A et le radical 4-pyrimidinyle est assurée par une fonction amino ou aminométhyle sur un atome de carbone cyclique et A, les symboles des formules ci-dessus ayant les significations suivantes :
R = H, groupe alkyle en C₁-C₆, groupe alcoxy en C₁-C₆,
R¹ = H, CH₃, C₂H₅,
R² = NH₂, groupe alkyle en C₁-C₄ éventuellement substitué par OH, SO₃H, OSO₃H ou CO₂H, groupe alcoxy en C₁-C₄ éventuellement substitué par OH, SO₃H, OSO₃H ou CO₂H,
R³ = groupe alkyle en C₁-C₄ éventuellement substitué par OH, SO₃H, OSO₃H ou CO₂H, groupe phényle éventuellement substitué par alkyle en C₁-C₄, halogéno ou SO₃H,
D représente un radical, contenant des groupes sulfo ou carboxy, d'un composant diazotable de la série benzénique, naphtalénique ou hétéroarylique qui peut en outre porter des substituants alkyle, alcoxy, carboxy ou halogéno; toutefois, dans la formule (6), l'un des deux radicaux D porte un substituant 2,6-difluoro-4-pyrimidinylamino, -méthylamino ou -éthylamino lui-même éventuellement substitué, et D, dans ce cas, peut porter ou non des groupes sulfo,
K représente un copulant,
à l'exception des composés (15) et (16) : 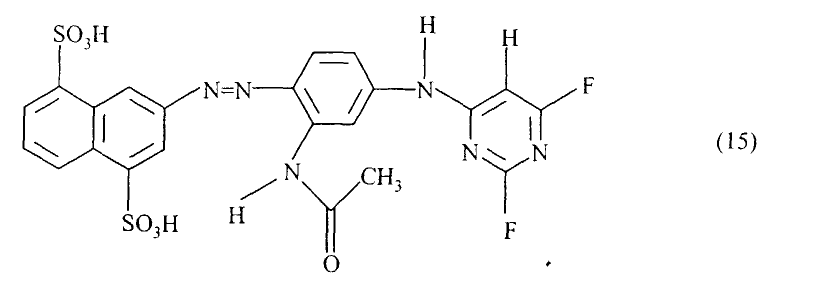 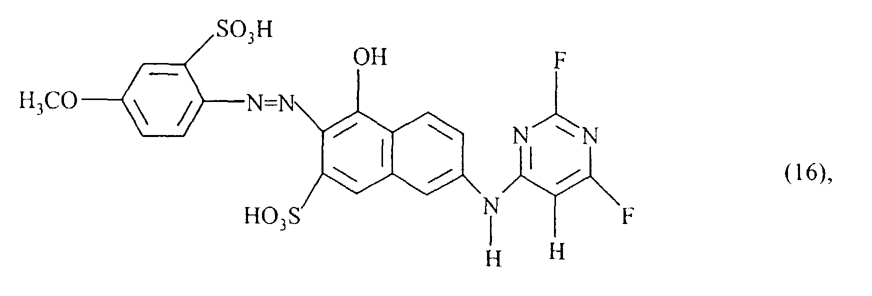 qui ont été décrits par F. Lehr dans Dyes + Pigments 14 (1990) p. 239 à 263.

2. Colorants réactifs selon la revendication 1, caractérisés en ce que K représente un dérivé de pyridone, de pyrazolone, de l'acide barbiturique ou de l'acide citracique.

3. Colorants réactifs selon au moins une des revendications qui précédent, caractérisés en ce que A représente un radical de formule (2) à (12), dans laquelle
R = H, CH₃, OCH₃, OC₂H₅,
R¹ = H, CH₃,
R² = NH₂, groupe alkyle en C₁-C₄ éventuellement substitué par OH, SO₃H, OSO₃H ou CO₂H,
R³ = CH₃, groupe phényle éventuellement substiuté par alkyle en C₁-C₄, halogéno ou SO₃H.

4. Colorants réactifs selon au moins une des revendications qui précèdent, caractérisés en ce qu'ils possèdent la structure suivante :
a) colorants de formule (1), dans laquelle A = groupe de formule (2), dans laquelle
R = H,
R¹ = H, CH₃,
R² = NH₂, groupe alkyle en C₁-C₄ éventuellement substitué par OH, SO₃H, OSO₃H ou CO₂H et 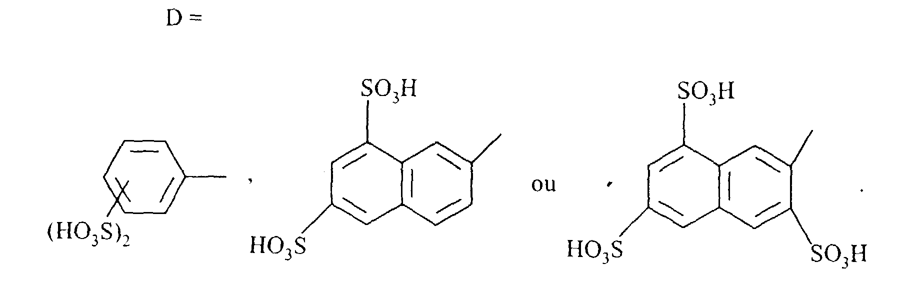
b) colorants de formule (1), dans laquelle A = groupe de formule (3), dans laquelle
R = H, CH₃, OC₂H₅,
R¹ = H, CH₃,
c) colorants de formule (1), dans laquelle A = groupe de formule (4) ou (5), dans laquelle
R¹ = H, CH₃,
R³ = CH₃, groupe phényle éventuellement substitué par alkyle en C₁-C₄, halogéno ou SO₃H,
d) colorants de formule (1), dans laquelle A = groupe de formule : 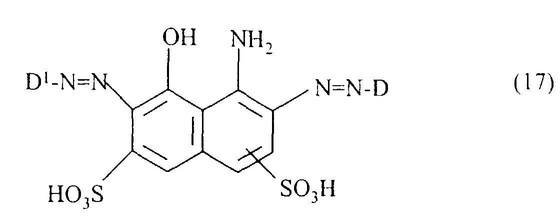 dans laquelle 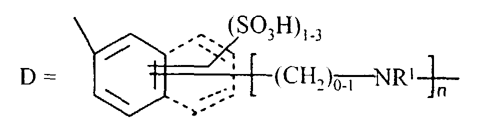 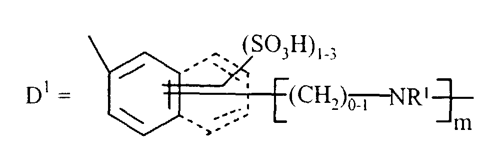
R¹ = H, CH₃,
n = m = 0 ou 1, mais n + m = 1,
e) colorants de formule (1), dans laquelle A = groupe de formule : 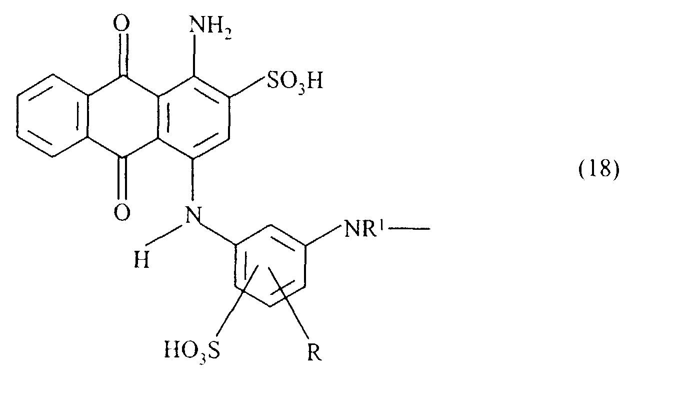 dans laquelle
R = H, CH₃, OCH₃,
R¹ = H,
f) colorants de formule (1), dans laquelle A = groupe de formule (8) à (11), dans laquelle
R = H,
ou bien
g) colorants de formule (1), dans laquelle A = groupe de formule (12), dans laquelle
R = H et
K a les significations indiquées ci-dessus.

5. Colorants réactifs selon au moins une des revendications qui précèdent, caractérisés en ce qu'ils répondent aux formules particulières suivantes :

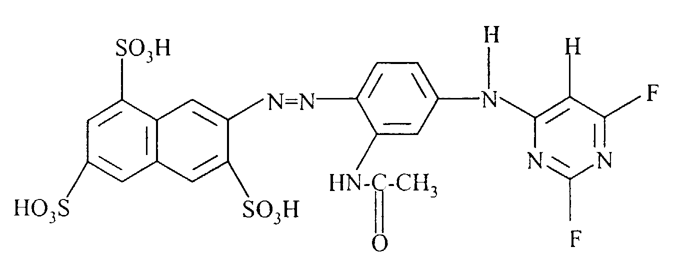

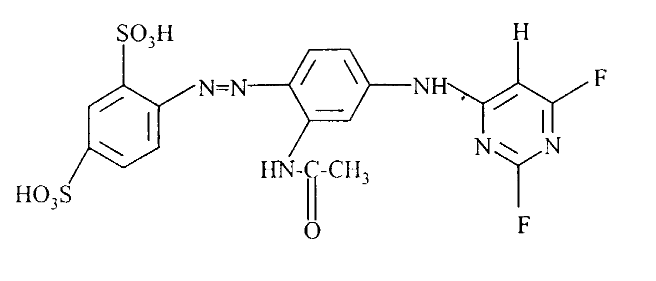

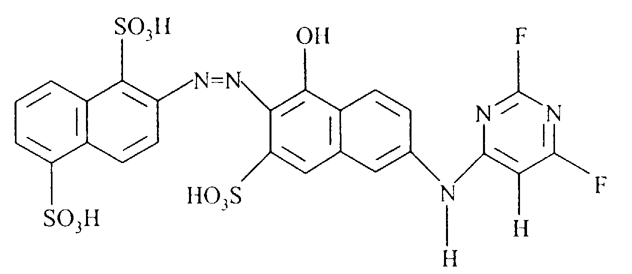

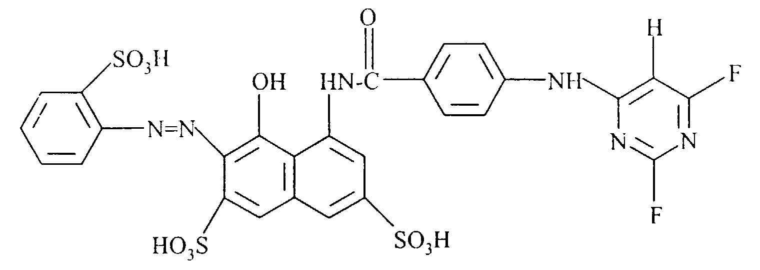

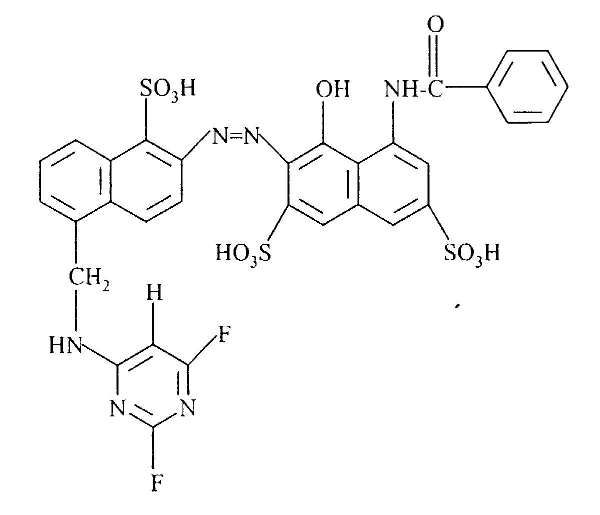

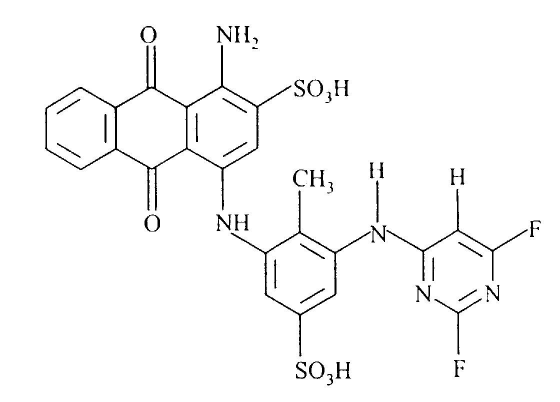

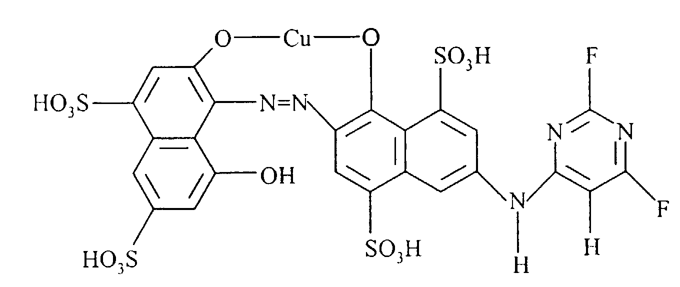

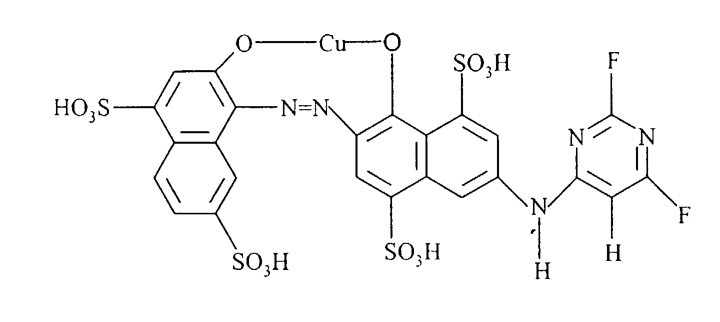

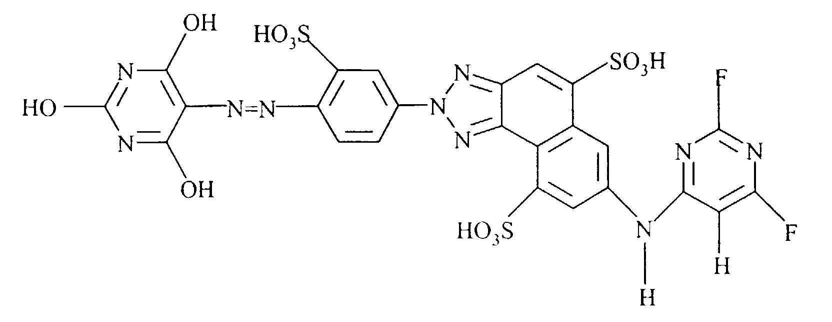

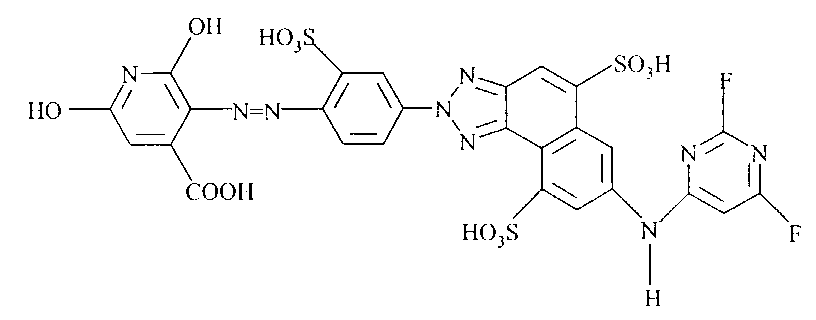

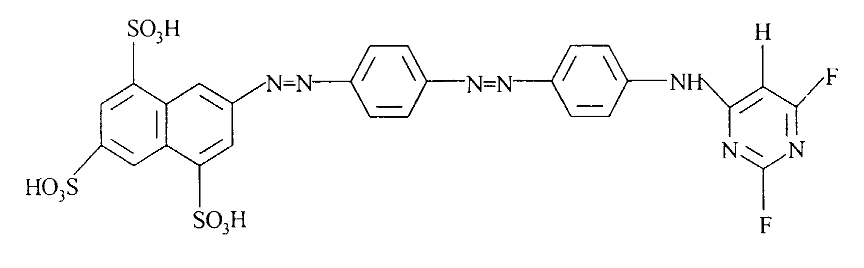

6. Procédé de préparation des colorants réactifs selon la revendication 1 selon au moins un des procédés suivants :
1. par condensation d'un composant réactif de formule : 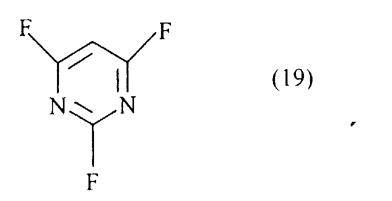 avec les bases colorées correspondantes,
2. par copulation azoïque d'un produit de condensation de formule : 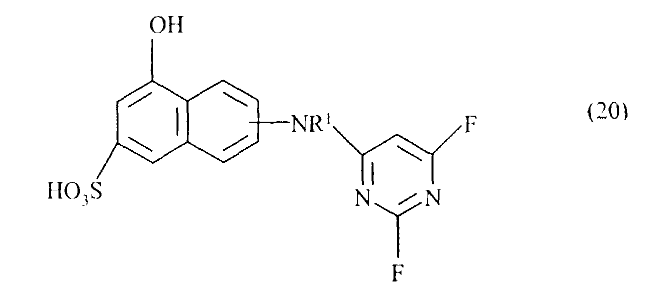 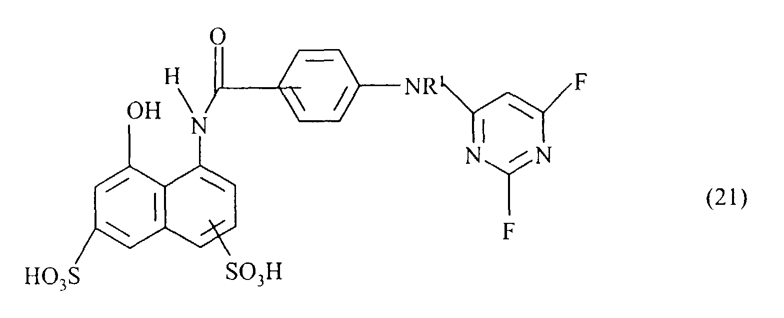 avec des dérivés de diazonium, ou bien
3. par diazotation et copulation d'une amine condensée avec la 2,4,6-trifluoropyrimidine, de formule générale : 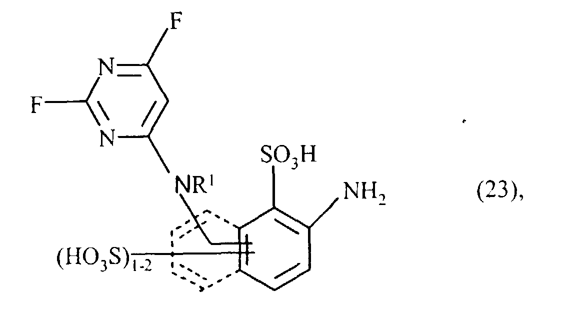 avec un copulant de formule : 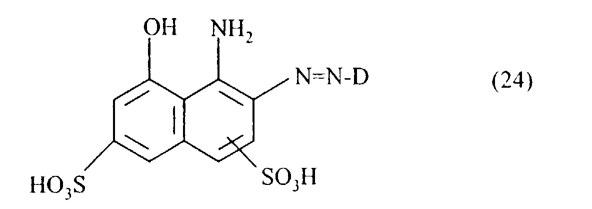 dans laquelle D a les significations indiquées ci-dessus.

7. Procédé pour la teinture ou l'impression de matières naturelles et synthétiques contenant des groupes OH ou amide à l'aide d'au moins un colorant réactif, caractérisé en ce que l'on utilise un colorant réactif selon au moins une des revendications qui précèdent.
